Europäisches Patentamt

European Patent Office

Office européen des brevets

(19)

(11) **EP 0 763 297 B1**

(12) **EUROPEAN PATENT SPECIFICATION**

(45) Date of publication and mention
of the grant of the patent:
**28.07.2004 Bulletin 2004/31**

(51) Int Cl.[7]: **H04L 9/06**

(86) International application number:
**PCT/US1995/005233**

(21) Application number: **95920375.3**

(22) Date of filing: **24.05.1995**

(87) International publication number:
**WO 1995/033323 (07.12.1995 Gazette 1995/52)**

(54) **NONLINEAR DYNAMIC SUBSTITUTION DEVICES AND METHODS FOR BLOCK SUBSTITUTIONS EMPLOYING COSET DECOMPOSITIONS AND DIRECT GEOMETRIC GENERATION**

EINRICHTUNGEN UND VERFAHREN ZUR NICHTLINEAREN DYNAMISCHEN BLOCKSUBSTITUTION UNTER VERWENDUNG VON UNTERMENGENAUFSPALTUNGEN UND DIREKTER GEOMETRISCHER ERZEUGUNG

DISPOSITIFS ET PROCEDES A SUBSTITUTION DYNAMIQUE NON LINEAIRE POUR EFFECTUER DES SUBSTITUTIONS DE BLOCS, UTILISANT DES DECOMPOSITIONS D'ENSEMBLES COMPLEMENTAIRES ET UNE GENERATION GEOMETRIQUE DIRECTE

(84) Designated Contracting States:
**CH DE FR GB IT LI**

(30) Priority: **31.05.1994 US 251751**

(43) Date of publication of application:
**19.03.1997 Bulletin 1997/12**

(73) Proprietor: **LITTON SYSTEMS, INC.**
**Woodland Hills, California 91367-6675 (US)**

(72) Inventor: **MITTENTHAL, Lothrop**
**Thousand Oaks, CA 91361 (US)**

(74) Representative: **Wombwell, Francis**
**Potts, Kerr & Co.**
**15, Hamilton Square**
**Birkenhead Merseyside CH41 6BR (GB)**

(56) References cited:
**WO-A-93/03559**

EP 0 763 297 B1

**Description**

BACKGROUND OF THE INVENTION

1. Field of the Invention.

The present invention relates to the field of encryption devices and methods, and more particularly, to block substitution encryption methods and devices.

2. Prior Art.

In many cases, it is desired to communicate information in digital form from one location to another in a manner which is clear and unambiguous to the receiver, but which is incomprehensible to an interloper there between. Accordingly, in many instances, it is common to encrypt the information to be communicated by some predetermined encryption process, to transmit the encrypted form of the information and to then decrypt the information at the receiving location. Depending upon the degree of security desired, a relatively . simple and easily broken encryption may be used, as any level of encryption will make the transmission meaningless to the casual interloper. In other situations, the degree of security desired may dictate the use of an encryption technique which is more difficult to decipher by cryptanalysis, or of course hopefully in the highest level of security, make the same substantially impossible to decipher. Applications for such encryption techniques include commercial applications such as sensitive communications between manufacturing plants, bank branches, etc., and military applications including but not limited to IFF (identification friend or foe). While in some cases the primary objective of the encryption is to prevent an interloper from deciphering the information being communicated, in other cases a primary object, such as in IFF, is to prevent the interloper from himself originating false information with the same encryption scheme so as to mislead the intended receiver. Both objectives are frequently present in many applications.

Block substitution is a method used to encrypt a clear text message which is in the form of a sequence of binary numbers. In accordance with the method, the sequence is broken into blocks of some predetermined block length n, with the block substitution device substituting a unique new block of binary numbers for each of those in the clear text. Substitute blocks constitute the encrypted message or cipher text, each substitute block representing a non-ambiguous one-to-one transformation of a clear text block. In the prior art, such substitution generally takes place by means of look-up tables, switching arrangements, or feedback shift registers. However, without changing codes or substitution schemes frequently, the encryption may be broken by cryptanalysis, though, changing look-up tables is cumbersome, only a limited number of possible switching arrangements is practical, and repeated cycling of a shift register is time consuming. An additional problem arises in finding substitutions which do not have any pattern or bias in them. At the present time, candidate substitutions are examined by computer simulation for possible systematic patterns and in some cases, additional circuitry is used to compensate therefor.

Various types of encryption equipment and methods are well-known in the prior art. See for instance U.S. Patents No. 3,796,830, 3,798,359, 4,078,152, 4,195,200, 4,255,811, 4,316,055 and 4,520,232. In general, these systems as they relate to block substitution are key dependent ciphering and deciphering systems and are not based upon block substitution by modulo 2 addition of one additive permuted set of numbers to another, as in the present invention. The present invention is drawn to further methods for constructive corruption, as set forth in the appended claims.

Methods and apparatus for non-linearizing modulo 2 addition based encryption by block substitution techniques which allows use of the substitution scheme with relatively simple hardware and yet makes cryptanalysis more difficult. The basic block substitution, a one to one mapping of n bit binary numbers onto themselves, is based on the fact that certain permutations of the n bit binary numbers define a block substitution by modulo 2 addition of one permuted set of numbers to another, and that a subset of these defined equations having an additive relationship when viewed as vectors. This allows the simple changing of the transformation on a frequent basis. Then the equations are non-linearized, also in an orderly and readily variable manner, so that the remainder of the set equations may no longer be generated from a limited subset of the equations. Various properties of the transformations and methods of using the same are disclosed. In particular, methods for non-linearization, provided in accordance with the invention, include non-linearization by forming nested sequences of subgroups, fitted cosets, and cosets of disjoint corruptible subgroups. Further, methods for constructive corruption include a method of coset decomposition applicaable to arbitrary block sise and a "bar sinister" method of constructive corruption applicable to small block sizes, such as 4 or 5.

BRIEF DESCRIPTION OF THE DRAWINGS

Figure 1 illustrates a many-one transformation of one set of three bit binary numbers to another set of binary numbers by a modulo 2 addition.

Figure 2 illustrates a one-to-one transformation of one set of three bit binary numbers to another set of binary numbers by a modulo 2 addition.

Figure 3 presents the transformation equations of Figure 2 reordered, excluding the first equation, making the three digit number in the first column the same as the three digit number in the second column of the preceding row. Excluding the first equation, each column now is in the same order but with different starting positions.

Figure 4 corresponds to Figure 3, though with the first and third columns shifted vertically with respect to the second column. These shifts are 6 and 2 positions downward respectively. Except for the first equation, each column remains in the same order but with different . starting positions.

Figure 5 corresponds to Figure 4, with the $\oplus$ and = symbols interchanged for encryption purposes.

Figure 6 is a block diagram of an apparatus for encrypting data.

Figure 7 is a block diagram of apparatus for decrypting data encrypted by the apparatus of Figure 6.

Figure 8 is an example of encryption using Figure 6.

Figure 9 is an example of decryption using Figure 7.

Figure 10 presents a set of transformation equations corresponding to those of Figure 4 with the fixed word 001 added to columns 1 and 2 thereof. Except for the first equation, columns 1 and 2 are in the same order but with different starting positions.

Figure 11 is a block diagram for an apparatus for encrypting data in accordance with a set of transformation equations such as those of Figure 10.

Figure 12 is a block diagram for an apparatus for decrypting data encrypted with the apparatus of Figure 11.

Figure 13 is an example of encryption using Figure 11.

Figure 14 is an example of encryption using Figure 12.

Figure 15 illustrates a rearrangement equations in Figure 2 into the general form $x_{n-1} \oplus x_n = z_n$.

Figure 16 is a block diagram of a system for encryption and decryption in accordance with the present invention.

Figure 17 illustrates a set of equations useful for encryption

Figure 18 graphically illustrates a method for non-linearization of a group of equations using nested sequences of sub-groups;

Figure 19 is a block diagram illustrating a method for encryption employing nested sequences of sub-groups;

Figure 20 illustrates multiple-coset decomposition for a maximal length linear orthomorphism on binary numbers of block size n=8;

Figure 21 is a block diagram illustrating a method of encryption employing fitted cosets from different sub-groups as graphically illustrated in Figure 20;

Figure 22 is a block diagram illustrating the method of Figure 21 for a block size of n=8;

Figure 23 is a block diagram illustrating a method for encryption employing cosets of disjoint, corruptible sub-groups.

Figure 24 is a block diagram illustrating a method of encryption employing a complete coset decomposition.

Figure 25 is block diagram illustrating a method of encryption applicable to encrpting text having small block sizes such as 4 or 5.

Figure 26 is block diagram of an example of the table of indices for block size 4 developed using the method of Figure 25.

## DETAILED DESCRIPTION OF THE INVENTION

The present invention comprises methods and apparatus for non-linearizing modulo 2 addition based encryption by block substitution described in detail in earlier US patent applications. Specifically, aspects of US Patent US-A-5038376 are set forth below section in I. BLOCK SUBSTITUTION. Descriptions of the invention of US Patent US-A-5214704 are set forth in section II. NON-LINEARIZATION OVERVIEW. Disclosure relevant to the present invention are set forth in the remaining sections. In particular, section III. MODIFICATIONS OF LINEAR ORTHOMORPHISMS provides a description of preliminary modifications and variations to the linear orthomorphisms described in these earlier US applications. Section IV. CONSTRUCTION OF COMPLETE NON-LINEAR ORTHOMORPHISMS provides a generalization of non-linear orthomorphisms. Section IV. CONSTRUCTION OF COMPLETE NON-LINEAR ORTHOMORPHISMS provides a detailed example describing the construction of an orthomorphism for a block size of n=8. A first method for constructive corruption by non-linearizing a set of block substitution equations is provided in section V. NESTED SEQUENCES OF SUB-GROUPS. A second method for constructive corruption is provided in section VI. FITTED COSETS FROM DEFERENT SUBGROUPS. A third method for constructive corruption is provided in section VII. COSETS OF DISJOINT CORRUPTIBLE SUB-GROUPS. Section VII. COSETS OF DISJOINT CORRUPTIBLE SUBGROUPS further includes a detailed example for block substitution system having block size n=8. Two improved methods for constructive corruption in accordance with the invention is provided in section VIII entitled COSET DECOMPOSITIONS OF CORRUPTIBLE SUB-GROUPS. The first improved method involves a complete coset decomposition applicable to encryption systems of arbitrary block size. The second improved method, referred to herein as the "bar sinister" method, is primarily applicable to encryption systems of small block size, such as 4 or 5. Finally, section IX. DEFINITIONS OF TERM AND SYMBOLS provides a glossary of terms used within this patent application and the appendices attached hereto. Section IX. DEFINITIONS OF TERM AND SYMBOLS further defines certain mathematical symbols used herein.

I. BLOCK SUBSTITUTION

In the description to follow, the methods and apparatus will first be described with respect to blocks of n binary numbers where the value of n is 3. Then the methods and apparatus will be expanded to n bit blocks generally, and certain characteristics of blocks up to n = 8 will be presented. By presenting the following example for n = 3, it is believed that the concepts of the original invention may be better understood than would be the case if a larger block having many more combinations were used.

Block substitution is the term usually applied to a one-to-one, mapping of the n-bit binary numbers onto themselves. This mapping can be written as a pairing of the $2^n$ n-bit numbers:

$$
\begin{array}{cc}
X_1 & Z_1 \\
X_2 & Z_2 \\
\cdot & \cdot \\
\cdot & \cdot \\
X_k & Z_k \\
\cdot & \cdot \\
\cdot & \cdot \\
\cdot & \cdot
\end{array}
\tag{1}
$$

where each column is the set of the same $2^n$ distinct n-bit numbers but written in different orders. Thus, this mapping can be thought of as a permutation of the n-bit numbers written as:

$$
X_1 \, X_2 \, ..X_k
$$

$$
Z_1 \, Z_2 \, ..Z_k
\tag{2}
$$

or $(X_1 \, X_i \, X_j)$ for some set of indices. This usual notation for permutations simply means that $X_1 \rightarrow X_i$, $X_i \rightarrow X_j$, etc.

Going back to the column notations, one could define a set of simple equations from the original set and its image:

$$Y_1 \oplus X_1 = Z_1$$
$$Y_2 \oplus X_2 = Z_2$$
$$\cdot \qquad \cdot$$
$$\cdot \qquad \cdot$$
$$\cdot \qquad \cdot$$
$$Y_k \oplus X_k = Z_k$$
$$\cdot \qquad \cdot$$
$$\cdot \qquad \cdot$$
$$\cdot \qquad \cdot$$

$$(3)$$

where $\oplus$ means modulo 2 addition (i.e., addition of corresponding digits without any carry). In general, the set $\{Y_1, Y_2,...\}$ will not all be distinct, but in certain circumstances they will be. In accordance with the original invention, when they are distinct, block substitutions can be generated by modulo 2 addition rather than by conventional means. The main tasks are to determine the circumstances, if any, in which this scheme works, how the substitutions can be quickly changed, and the lack of bias.

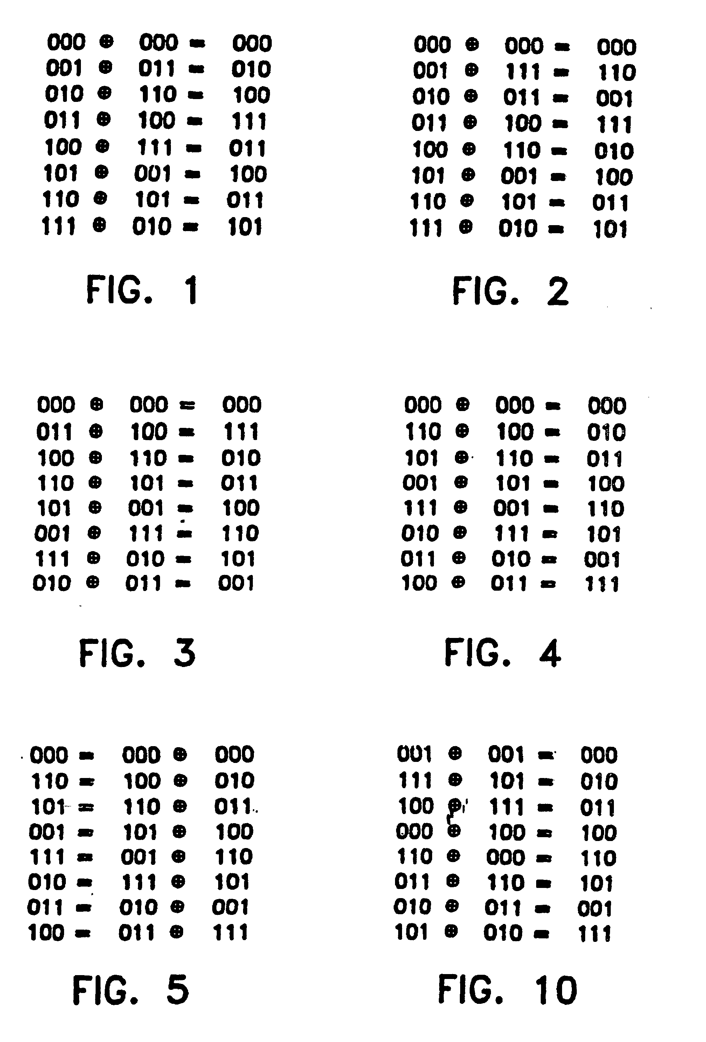

It is not obvious that block substitutions can ever be generated by modulo 2 addition. For example, consider the attempt to substitute one arrangement of 3-bit binary numbers for another by modulo 2 addition shown in Figure 1. In column 3 on the right, 011 and 100 each appear twice, while 001 and 110 never appear. The numbers in column 1 on the left, acting on the numbers in column 2 in the center, constitute a transformation of the set of 3-bit binary words of column 1 into themselves. This is a many-one transformation and is useless for block substitutions because of the ambiguity that results when trying to recover the original block for the transformed blocks 011 and 100.

Trying another arrangement as shown in Figure 2 gives a different result. Any pair of columns now constitutes a one-to-one transformation. In particular, the transformation is one-to-one from the 3-bit binary numbers of column 3 (the clear text) onto themselves, the encrypted text of column 1. Each column consists of all the 3-bit numbers exactly once.

Obviously, one could use the transformations of Figure 2 to transform any three digit binary block into an encrypted binary block, and of course use the same equations to de-encrypt the encrypted message by finding the encrypted word in column 1 and then selecting the corresponding clear text word in the same row, column 3 of Figure 2. This is most convenient if $\oplus$ and = are interchanged as shown in Figure 5. An equivalent transformation to transform the encrypted word back to the clear text word results if the words of column one are added to those of column two to obtain those in column three.

Referring again to Figure 2, an interesting property of the transformation shown therein, and for that matter, for all transformations of the type of interest herein, may be seen. In particular, of the eight blocks of three binary numbers, the lower four blocks 000, 001, 010 and 011 map into two blocks of the lower four, namely 000 and 001, and two blocks of the upper four, namely 110 and 111. Similarly of course, the four larger blocks of the eight map two into blocks in the lower four, and two into blocks of the upper four. Similarly, the even blocks 000, 010, 100 and 110 map into two even blocks, 000 and 010, and into two odd blocks, 001 and 011. The odd four blocks map half into odd blocks and half into even blocks. Obviously for decryption, the same is true. Thus, knowledge of some characteristic of the encrypted block such as its being large, small, even, odd, etc., does not convey any similar knowledge of a characteristic of the unencrypted block. As a result of this, the encryption is said to be unbiased. For that matter it should be noted that, even considering the middle digit of each block, the four blocks of Figure 2 having a zero as the middle digit map two blocks into blocks also having a zero as a middle digit, and two blocks having one as the middle digit. Similarly of course, the four blocks having a one as the middle digit map two into blocks having a one as a middle digit, and two into blocks having a zero as the middle digit. This property applies to all block sizes and extends to dividing equally all set of blocks which may be characterized algebraically as maximal subgroups. This unbiased character of the encryption is a highly beneficial characteristic of the encryption scheme disclosed herein, particularly in conjunction with the frequent changing of the encryption from time to time.

In particular, in any practical encryption device of course, one would like to be able to frequently change the encryption scheme so that patterns will not persist for a sufficient length of time to allow cryptanalysis of the pattern. For this purpose, certain properties of the equations of Figure 2 may be recognized by rearranging the rows of Figure 2 as shown in Figure 3. Rearrangement of the rows in any manner of course does not effect the transformation in any way, as each of the equations maintains its own integrity separate and apart from its position in the table. In essence, the second row of Figure 3 is the 4th row in Figure 2 and the third row of Figure 3 is the fifth row in Figure 2, with each successive row being arranged so that the left column in each successive row contains the same 3 bit number as the second column of the preceding row. When so arranged, neglecting the first or identity row, it will be noted that each of the three columns contains the same sequence of the 3 bit binary numbers, with wrap-around. In particular, the first column has the same sequence as the second column, but displaced downward therefrom one position (or upward six positions), and the third column has the same sequence as the second column, though displaced downward three positions (or upward four positions) from the sequence of column two.

Neglecting the first row or identity row of Figure 3 again, if the 3 bit binary numbers in column 1 are shifted downward a total of six positions with wrap-around with respect to the second column, it will be noted that a one to one transformation still results, as shown in Figure 4. Except for the identity row, the transformation is entirely different from that of Figure 3. By way of example, 111 column 3 maps into 011 column 1 in Figure 3, and maps into 100 column 1 in Figure 4. In addition however, it is important to note that the sequence of the 3 digit numbers in columns 1 and 3 of Figure 4 (separating out the identify row) is still the same as that in column 2 of Figures 3 and 4, though each is shifted with wrap-around in comparison to column 2. Thus, the transformation of Figure 3 has been changed to the new transformation of Figure 4 by merely shifting the numbers in the first column of Figure 3 with respect to those in the second column, and with the numbers in the third column also being shifted with respect to those in the second column, but by a different amount to preserve the integrity of the modulo 2 addition equations. Again, for decryption, symbols $\oplus$ and $=$ of Figure 4 can be interchanged as in Figure 5.

More generally for any block size, the sets of equations can be written as:

$$\underline{\text{ENCRYPTION}}$$

$$\underline{1} \qquad \underline{2} \qquad\qquad \underline{3}$$

$$\theta \qquad = \qquad \theta \qquad \oplus \qquad \theta$$

$$X_{1-s} \qquad = \qquad X_1 \qquad \oplus \qquad X_{1-P_s}$$

$$X_{2-s} \qquad = \qquad X_2 \qquad \oplus \qquad X_{2-P_s}$$
$$\vdots \qquad\qquad \vdots \qquad\qquad \vdots$$
$$X_{k-s} \qquad = \qquad X_k \qquad \oplus \qquad X_{k-P_s}$$
$$\vdots \qquad\qquad \vdots \qquad\qquad \vdots$$
$$X_{m-s} \qquad = \qquad X_m \qquad \oplus \qquad X_{m-P_s}$$

$$\theta = 00 \ldots 00$$

$$(4)$$

## DECRYPTION

<u>**1**</u>        <u>**2**</u>              <u>**3**</u>

$$\theta \quad \oplus \quad \theta \quad = \quad \theta$$

$$X_{1-s} \quad \oplus \quad X_1 \quad = \quad X_{1-P_s}$$

$$X_{2-s} \quad \oplus \quad X_2 \quad = \quad X_{2-P_s}$$
$$\vdots \qquad\qquad \vdots \qquad\qquad \vdots$$

$$X_{k-s} \quad \oplus \quad X_k \quad = \quad X_{k-P_s}$$
$$\vdots \qquad\qquad \vdots \qquad\qquad \vdots$$
$$X_{m-s} \quad \oplus \quad X_m \quad = \quad X_{m-P_s}$$

$$(5)$$

For block size n, m = $2^n$-1. $\theta$ = 00...00, the n bit word consisting of all zeroes.

If column 1 is shifted by S positions with respect to column 2, then column 3 is shifted by a different amount $P_s$ to preserve the integrity of the modulo 2 addition equations. For a given shift S, $P_s$ is determined by the shift programmer.

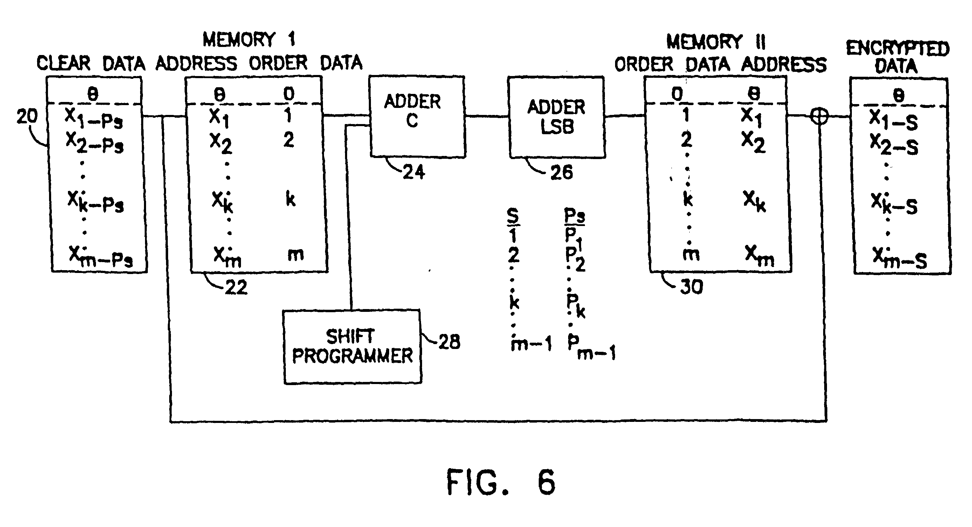

Now referring to Figure 6, a block diagram of a system for carrying out encryption in accordance with the encryption and decryption techniques discussed so far may be seen.

The clear test word is sent to its address in Memory I. This corresponds to selecting a word $X_{k-P_s}$ from column 3 other than $\theta$. The concept is to add it to its counterpart in column 2. If $X_{k-P_s}$ is other than $\theta$ and is to be added to $X_k$, this is equivalent to adding the word with order data K - $P_s$ in column 3 to the word with order K - $P_s$ + $P_s$ = K, also in column 3. Thus the order data of the clear test word K - $P_s$ is sent to the adder to be added to $P_s$. The new order number is sent to its address in Memory II. The content of that address is added modulo 2 to the clear test word to obtain the encrypted word $X_{k-s}$ in column 1. If the clear text word is $\theta$, its cipher test image is the same.

Adding of the order data is accomplished by two adders, carry (C) and least significant bit (LSB). The carry adder adds the numbers conventionally with carry, e.g. 001 + 011 = 100. However, if the addition requires more than n digits, that is, a 1 is carried to the n+1 position, that extra 1 is instead added to the first position, e.g., 100 + 110 = 1010 => 011. This is accomplished by the LSB adder. This is simply addition modulo m where m = $2^n$ - 1. In this example, n = 3, m = 7 and the addition expressed in decimal terms is 4 + 6 = 10 $\equiv$ 3 mod 7 where 100 => 4, 110 => 6 and 011 => 3.

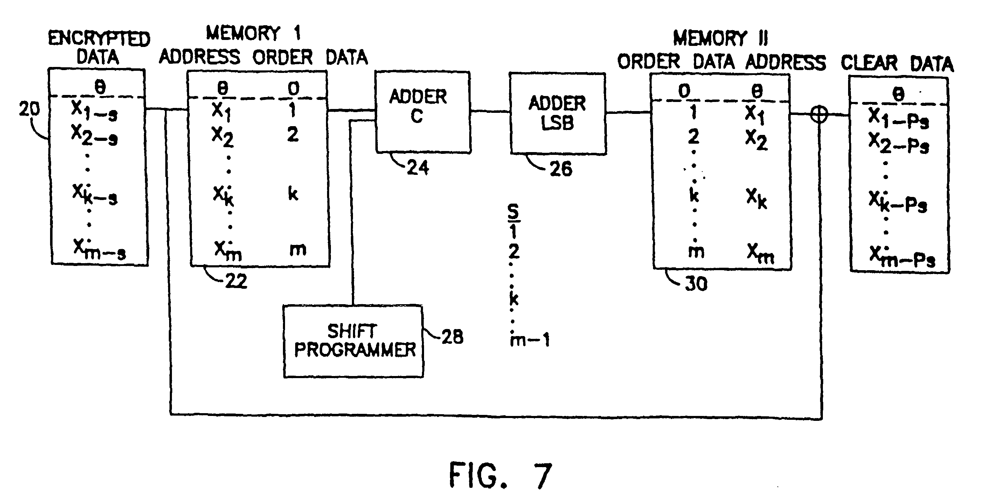

The block diagram for decryption is shown at Figure 7. The cipher text word is sent to its address in Memory I. This corresponds to selecting a word $X_{k-s}$ from column 1 other than $\theta$. The concept is to add it to its counterpart, $X_k$ in column 2. This is equivalent to adding $X_{k-s}$ in column 1 to the word with order data K - s + s = K, also in column 1. Thus the order data of the cipher text word, K-s is sent to the adder to be added to s. The new order number is sent to its address in Memory II. The contents of that address is added modulo 2 to the cipher text word to obtain the de-encrypted word $X_{k-P_s}$ in column 3. If the cipher text word is $\theta$, it is de-encrypted as $\theta$.

The addition of order data, K - S + S and K - $P_s$ + $P_s$ is understood to be modulo m or with wraparound. That is, if the order data is greater than m, the last position, m is subtracted from the order data. If the cipher text word is $\theta$, it is de-encrypted as the same word.

The shift program determines the order in which the shifts, S, in column 1 are used, with the corresponding $P_S$ shift S in column 3. Any desired order can be used. The shift S corresponds to a power of the basic permutation described on Page 8, which determines the substitution by addition.

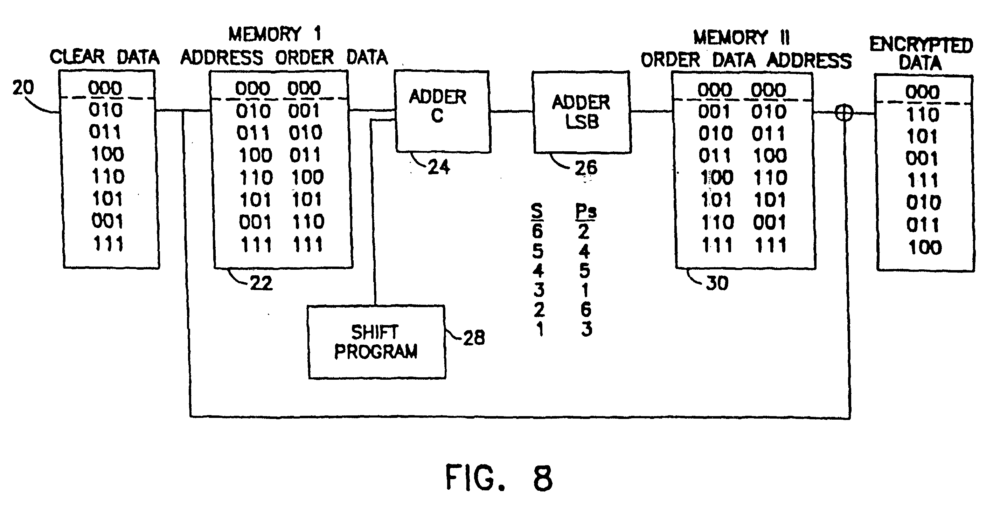

Thus, by way of example, in Figure 8, if the clear data value is 010, then that address in Memory I provides order data 001, which is binary notation that 010 is in position 1 in the sequence in Memory I (column 3 of the set of equations). The first shift position in the program is S = 6, for which $P_6$ = 2. To the position of 010, K - $P_6$ = 1 is added

$P_6 = 2$. In binary notation, $001 + 010 = 011$. Corresponding to the address 011 in Memory II is the number 100. (This is equivalent to saying that 100 is in position 3 in column 3). $110 = 100 \oplus 010$ is the cipher text word. This represents the first of the additive equations in Figure 5.

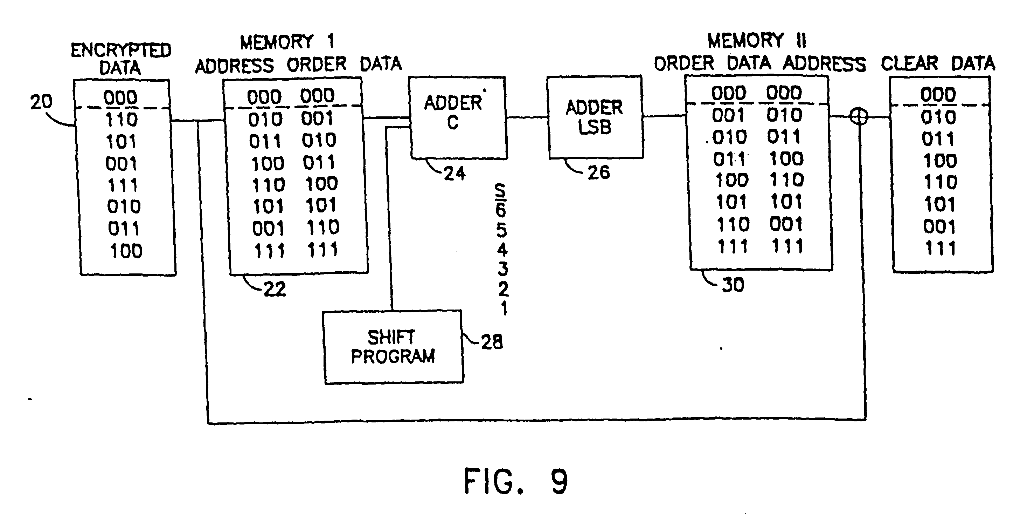

For decryption, the cipher text word is 110. In Figure 9, that address in Memory I provides order data 100, or position 4 in the sequence in Memory I. The first shift position in the program is $S = 6$. To the position of 110, $K - 6 = 4$, is added 6, or 110 in binary notation. $4 + 6 = 10$. Subtracting by $m = 7, 10 - 7 = 3$, or position 3 with wrap around. In binary notation, $100 + 110 = 011$ modulo 7. Corresponding to the address 011 in Memory II is the number 100. $110 \oplus 100 = 010$. . This represents the first of the additive equations in Figure 4.

If one adds Modulo 2 a fixed number to the first and second columns of Figure 4. A still further one-to-one transformation results.

## ENCRYPTION

$$
\begin{array}{ccccc}
\underline{1} & & \underline{2} & & \underline{3} \\
(I \oplus Y) & \approx & (I \oplus Y) & \oplus & I \\
(X_{1-s} \oplus Y) & \approx & (X_1 \oplus Y) & \oplus & X_{1-Ps} \\
(X_{2-s} \oplus Y) & \approx & (X_2 \oplus Y) & \oplus & X_{2-Ps} \\
\vdots & & \vdots & & \vdots \\
(X_{k-s} \oplus Y) & \approx & (X_k \oplus Y) & \oplus & X_{k-Ps} \\
\vdots & & \vdots & & \vdots \\
(X_{m-s} \oplus Y) & \approx & (X_m \oplus Y) & \oplus & X_{m-Ps}
\end{array}
\tag{6}
$$

## DECRYPTION

$$
\begin{array}{ccccc}
\underline{1} & & \underline{2} & & \underline{3} \\
(I \oplus Y) & \oplus & (I \oplus Y) & \approx & I \\
(X_{1-s} \oplus Y) & \oplus & (X_1 \oplus Y) & \approx & X_{1-Ps} \\
(X_{2-s} \oplus Y) & \oplus & (X_2 \oplus Y) & \approx & X_{2-Ps} \\
\vdots & & \vdots & & \vdots \\
(X_{k-s} \oplus Y) & \oplus & (X_k \oplus Y) & \approx & X_{k-Ps} \\
\vdots & & \vdots & & \vdots \\
(X_{m-s} \oplus Y) & \oplus & (X_m \oplus Y) & \approx & X_{m-Ps}
\end{array}
\tag{7}
$$

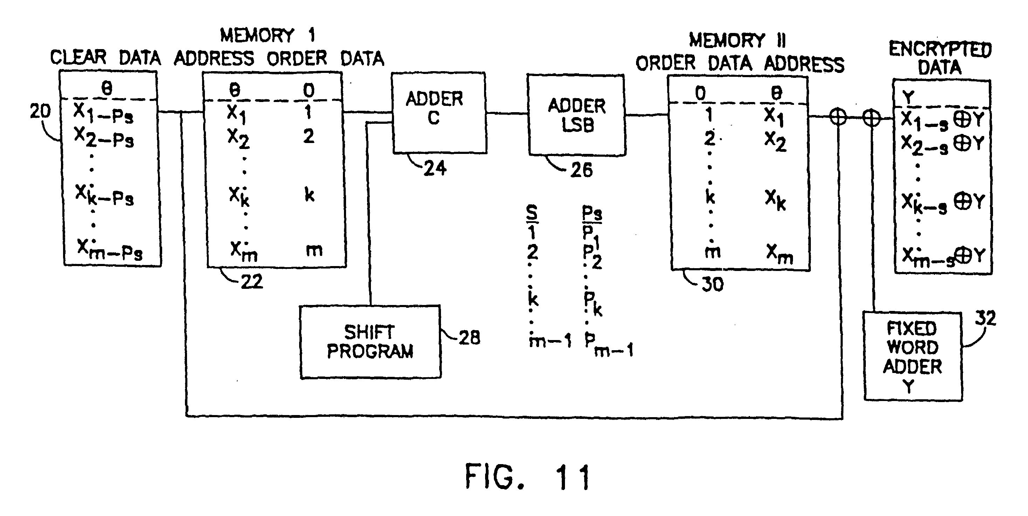

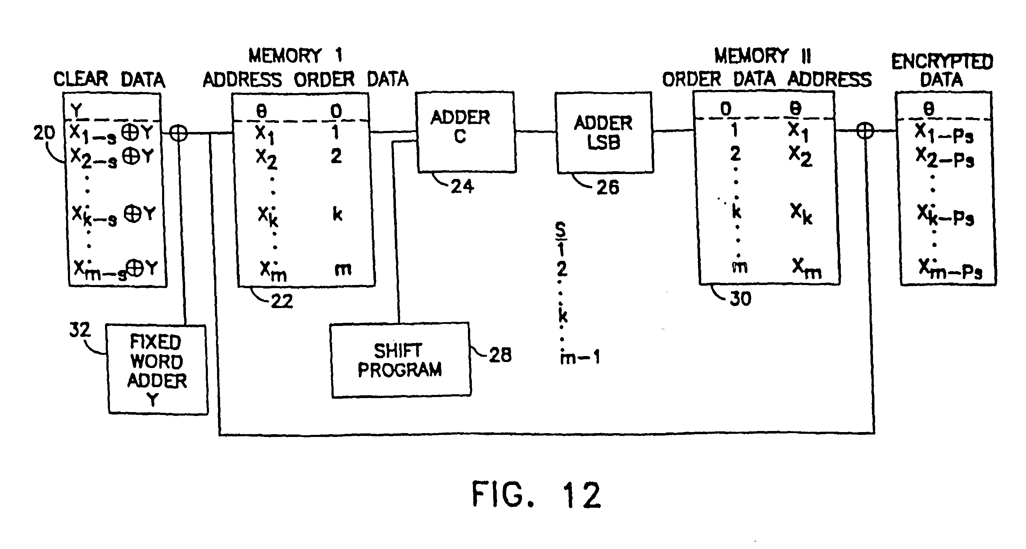

Now referring to Figures 11 and 12, for any block size a block diagram for carrying out encryption and decryption using a fixed word other than $\theta$, the zero word, may be seen. The procedure is essentially the same as before with the additional step of adding the fixed word Modulo 2 as the last step in the encryption process and the first step in the decryption process.

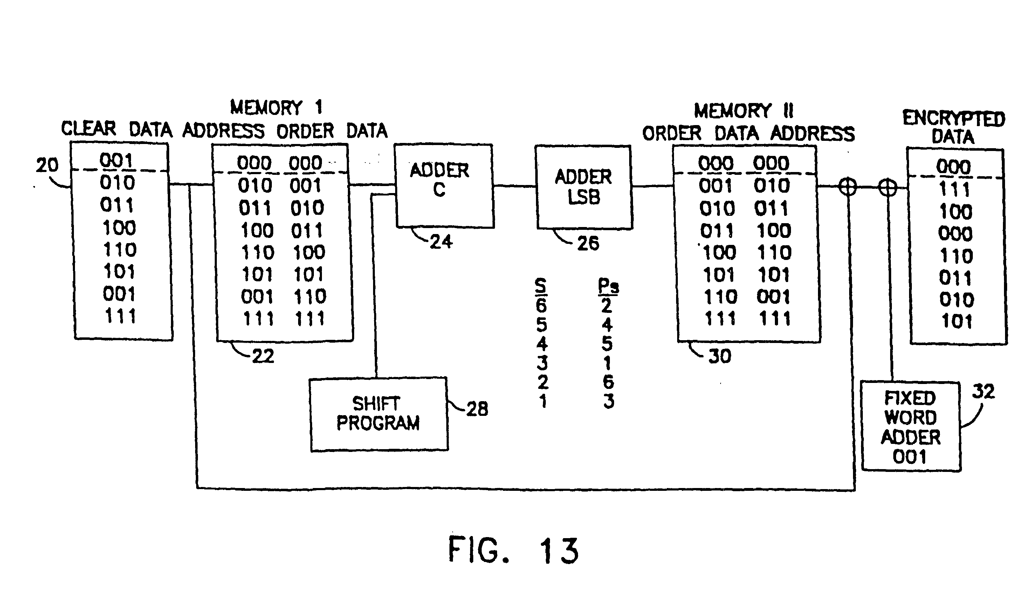

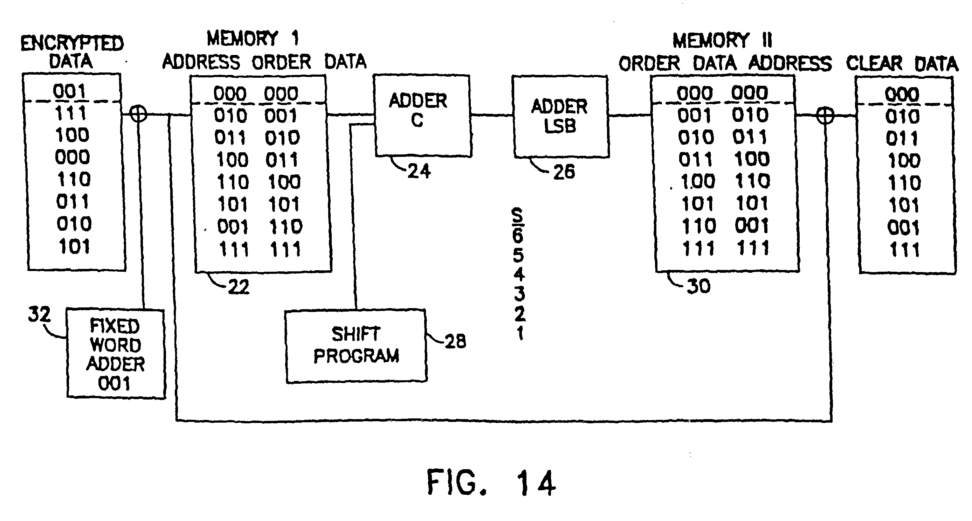

An example is shown in Figure 13 and 14. In this case, 000 no longer remains fixed, but is transformed into 001. Now 110 is transformed to itself and thus becomes fixed in this case.

The fixed word adder can add in succession any or all of the n bit words in whatever order is selected by the user.

Now referring to Figure 8, as an example, a block diagram of a system for carrying out encryption in accordance with the encryption and decryption techniques discussed so far may be seen. As shown in the figure, any value of the dear data 20, except 000, is provided as an address to memory 22. Stored at the various memory addresses is the order data for the clear data value, that is, the position, expressed as a binary number, of that clear data value in the ordered sequence of the right column of Figure 4 (and Figures 5 and 10). This position is provided as an output of the memory 22 to an adder shown as the combination of adders 24 and 26. The adders are coupled to add the output of the memory to a value of shift $P_s$ as controlled by shift programmer 28. This addition is not a modulo 2 addition but rather is the normal binary add, with the one exception that the carry from the most significant bit is coupled to the carry in of the least significant bit. Thus, the adder will provide the result 001 as the sum 1 larger than 111, not 1000 or simply 000. Thus, it may be seen that the output of the adders is a new three bit binary number shifted in the order data sequence by an amount $P_s$. This new position is then used as the address for memory 30, which provides as its output the three bit binary number corresponding to the value in column 2 of Figure 4, or the corresponding clear data value in Figure 3. Thus, by way of example, if the clear data value is 010, that value as an address to memory I provides the location of that value of 001 in the sequence. If the shift program selects S = 6, then $P_6 = 2$ and column 3 is shifted downward two positions from column 2 or by an amount 010. The three bit binary number which would then be adjacent to the clear data value of 010 is 100 as in Figure 5. This added modulo 2 to the clear data 010 provides an encrypted value of 110, corresponding to the value shown in Figure 5. However, if the clear text data value is 000, that value as an address to Memory I provides the location of the value of 000 in the sequence. It is not shifted but provided unchanged as the order data in memory 30. Thus 000 added to itself, remains fixed.

The downward shift $P_s$ of the sequence of column 3 of Figure 5 in comparison to the basic order data of column 2 of Figure 5 of course corresponds to a complimentary upward shift. Thus, for an n bit block, a downward shift of $P_s$ is equivalent to an upward shift of m-$P_s$. Note also that for a three bit block, all values of possible shift provide the desired one-to-one mapping except for a shift of the first column with respect to the second column of zero, and of 7 and multiples thereof, as such shifts would provide a second column in the matrix having each row the same as the corresponding row of the first column, and any number added to itself modulo 2 will be zero. Thus, for a shift of seven or multiples thereof, all clear data values map to 000, useless for encryption purposes. In general however, it will be shown later that for n bit blocks larger than three bits, all shifts other than zero and integer multiples of m give the desired result and thus are usable in accordance with the original invention.

The block diagram for decryption in accordance with Figure 7 is shown in Figure 9. From a hardware standpoint, this diagram is exactly the same as that of Figure 8 for encryption, the decryption differing only in the shift S applicable for a given shift $P_s$ for encryption. As in the example on page 14, for a shift $P_s$ of 2 for encryption, a shift 6 provides the proper decryption, etc., as shown in the tables of Figures 8 and 9. Obviously, the encryption hardware and the decryption hardware must be using the associated shifts for the clear data to be properly recovered on decryption, though the applicable shift may be varied frequently at both ends to make cryptanalysis very difficult, if not virtually impossible.

If one adds modulo 2 a fixed number to any pair of columns of Figure 5, a still further one-to-one transformation results. By way of example, in Figure 10 the fixed number 001 has been added modulo 2 to the first and second columns of Figure 5. Now 010 as a clear text word maps into an encrypted word 111, whereas in the example of Figure 8, 010 mapped into 110.

An example of a block diagram for the encryption using a fixed word adder may be seen in Figure 13. This figure is identical to Figure 8 with the exception that the fixed word adder 32 has been included to add the fixed word (001 in the example) to the output of memory 30 corresponding to the value in the same row of the second column as 010 of the first column. Thus, the fixed word adder merely adds the fixed word (001 in the example) to the column 2 value, after which the clear text word is added modulo 2 thereto to obtain the encrypted data. Again for the example, using clear data of 010 as the address to memory 22, the output of the memory will be 001. Using the same shift as in the example of Figure 8, 010, $P_s = 2$ is added to the 001, to provide an address to memory 30 of 011. This results in an output from memory 30 of 100, to which fixed word adder adds modulo 2, the fixed word 001, yielding 101. This added modulo 2 to the clear text word 010 gives the encrypted word 111 as shown in Figure 10.

A block diagram for decryption, corresponding to the block diagram for encryption of Figure 13, is shown in Figure 14. As may be seen, Figure 14 is identical to Figure 13 (though the shifts for decryption are again different from the shifts for encryption), with the exception of the fixed word adder also adding modulo 2 the fixed word to the encrypted data before the same is applied to memory 22. This modulo 2 addition is in essence the second modulo 2 addition of the fixed word, as a first modulo 2 addition of the fixed word was done in Figure 11 to get the encrypted word. Thus, since a second modulo 2 addition of the same word in effect cancels the first modulo 2 addition so that after the encrypted data in Figure 12 has the fixed word added modulo 2 thereto, the result of that modulo 2 addition may be used with the equations of Figure 10 for decryption purposes. Thus, by way of example, using the encrypted word 111 of the example of Figure 13, 111 $\oplus$ 001 =110 as the address to memory 22 of Figure 14. This gives a memory output of 100, to which the value of S = 6 or 110 is added. 100 + 110 = 1010 => 011 with wrap-around. This in turn gives an address of 011 to memory 30 or an output thereof of 100, to which is added modulo 2 110, the address to memory 22, to recover the clear text data 010. Further of course, while the fixed word adder of Figures 13 and 14 used a fixed word 001, any other 3-bit fixed word may be used, or for that matter, the fixed word may be varied from time to time with or separate and apart from variations in the shift, a. fixed word of 000 essentially reducing the operation of the system to that of Figures 8 and 9.

Obviously, the methods described in relation to Figures 6, 7, 11 and 12 may readily be carried out with a microprocessor based system under program control. Alternatively, the memory could readily be preprogrammed in read only memory used essentially as look-up tables, and the adders and modulo 2 adders could readily be conventional adder circuitry so that at least the major elements of an encryption and decryption system could be realized in either high speed discrete components or through a custom integrated chip. The shift program also could take various forms depending upon how often a shift is desired, the extent to which the shift order is itself varied, etc., microprocessor based, integrated circuits or other realizations being readily applicable, including shift register implementations as desired.

## II. NON-LINEARIZATION OVERVIEW

Non-linearity in this sense means that the mappings of clear text to encrypted text (and from encrypted text to clear text) are nonlinear under the operation of bit-wise addition modulo 2. In that regard, it was pointed out that Figure 1 illustrates a many-one transformation of one set of three bit binary numbers to another set of binary numbers by a modulo 2 addition. This specific example maps the eight possible values of the three bit numbers in the first column by modulo 2 addition to six three bit numbers in column 3 representing six of the eight possible combinations, with two (100 and 011), each being repeated twice. Because two three bit numbers (010 and 101) map to the . same three bit number (100), and two other three bit numbers (100 and 110) map to the same three bit number (010), the reverse mapping will have ambiguities, making the mapping illustrated in Figure 1 unsuitable for encryption and decryption purposes.

On the other hand, Figures 2 through 5 provide sets of equations for encryption of any of the eight possible three bit clear text words (column 1) to a corresponding non-ambiguous encrypted text word (column 3). These equations remain valid by the interchanging of columns 1 and 3, and thus with this interchange, form the equations for the corresponding decryption in the same way that the equations before the interchange form the equations for encryption. However, the set of equations shown in each of Figures 2 through 5 are linear in the sense that the addition of any two equations within a given set of equations (eight equations for three bit numbers such as in Figures 2 through 5) is also one of the equations of the set. For instance, in Figure 2, while the addition of the first or null equation to any other equation yields that other equation and is thus trivial, the addition of the second and third equations provides the fourth equation, the addition of the third and fourth equation provides the second equation, the addition of the fourth and fifth equation provides the eighth equation, etc. Even when one adds modulo 2 one equation to itself, one obtains one of the eight equations, namely the null equation, as may occur when one adds more than two equations modulo 2 such as, by way of example, equations two, three and four, as the addition of equations two and three yields equation four, and equation four added to itself yields the null equation. In that regard, adding two equations modulo 2 may be considered equivalent to adding any greater number of equations, as either or both of the equations added may be considered to be the sum of two or more other equations. Further, there is no combination of equations the sum of which is not another equation in the given set. What is most significant from a cryptanalysis standpoint is that given the right three of the seven equations other than the null equation, the remaining four equations may be determined by the appropriate sums of the combinations of the three known equations. For instance, while the combinations of sums of equations two, three and four of Figure 2 cannot be used to generate . the rest of the equations, equations two, three or four, and five, six, seven or eight can be so used. Taking for example, equations two, four and eight, the sum of equations two and four provides equation three, the sum of equations two and eight provides equation seven, the sum of equations two, four and eight provides equation six, and the sum of equations four and eight provides equation five. Also the foregoing rule, of course, applies to encryption of words of other bit lengths, the generating equations for the sixteen equations for encryption of a four bit word being determined by adding modulo 2 various combinations of four independent equations.

With respect to the set of equations in Figure 10, adding any two equations does not provide a third equation of the set, though adding 001 to each of the left hand columns of the Figure 10 again provides the null equation and the rest of the set of equations of Figure 5, which set is generally able by any three independent equations of the set. It is this ability to generate the remainder of the equations from a basic set of independent equations which the present invention is intended to avoid, the present invention does so in an orderly and logical manner so that not only may the base set of linear equations be varied from time to time or dynamicaiiy in the various ways disclosed in the original application, but the resulting base set may also be non-linearized from time to time or dynamically to a varying extent and in varying combinations, making cryptanalysis much more difficult than before.

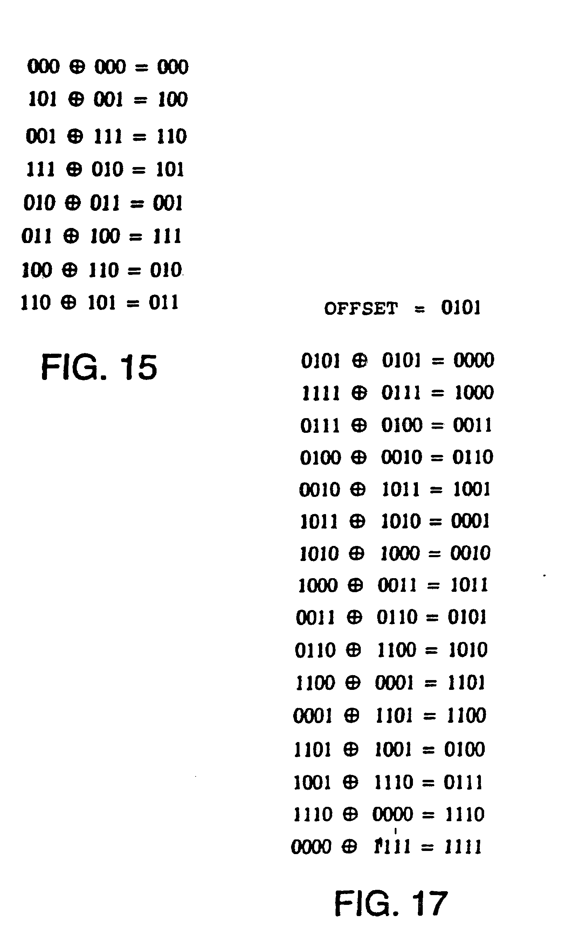

Referring again to Figure 2, if one rearranges the order of the equations, there is, of course, no change in the mapping of the numbers in column 1 to the numbers in column 3. Accordingly, the equations in Figure 2 may be rearranged as shown in Figure 15. In particular, it will be noted that, neglecting the null equation, the first number appearing in column 2 (001) occurs in the next line of column 1, the second number in column 2 (111) occurs in the third line of column 1, etc., the wraparound resulting in the last number in column 2 (101) falling on the first line of column 1 (again neglecting the null equation). The resulting organization of the equations is shown in Figure 15, where $x_1$ is 001 and $x_m$ is 101. Any set of equations for words (numbers) of any bit length having a null equation and $2^n - 1$ non-zero equations may be so arranged without any changing of the mapping defined thereby, as such an arrangement is a mere changing of the order of appearance of the equations and not a changing of any of the equations themselves.

Certain groups of such equations may be altered by rearrangement of the words appearing in columns 1 and 2 to provide correspondingly new modulo 2 addition equations, which when substituted for the original group of equations within the original set of equations still maintain a one to one mapping and thus is suitable for use in encryption and decryption. In that regard, the one to one mapping is preserved because the order of the multi-bit words appearing in columns 1 and 2 of the selected group of equations is changed, but not the words themselves, so that the group of words mapped and the group of words to which they are mapped by the selected equations has not been changed, though within those two groups, which word in column 1 maps to which word in column 3 has been changed. The net effect of these changed equations is that the same no longer are linear extensions of the unchanged equations, that is, the same can no longer be generated by the addition of two or more of the unchanged equations. This, therefore, breaks up the linearity of the original set, the possible extent of which will be subsequently discussed, making the cryptanalysis more difficult as desired.

It is shown that under certain conditions, groups of equations within a given set may be altered and used to replace the corresponding original group of equations within the original set so as to maintain a one to one mapping for the complete set, and at the same time break up the linear characteristic of the set of equations as herein before described. The basic concept is to take sums of consecutive triples of rows in the original set of equations. Non-linearization by taking such consecutive triples of rows works if, and only if, a set of only three or four consecutive rows of the original set are used. If three consecutive rows are used, four rows are actually modified, namely the three consecutive rows of the original set, together with a fourth row corresponding to the vector sum modulo 2 of the three consecutive rows. The modification can be obtained by adding vectorially to each of the four rows, the following equation:

$$(x_1 \oplus x_2) \oplus (x_1 \oplus x_2) = \Theta \tag{8}$$

If four consecutive rows of the original set of linear equations are used, six rows of the original set of equations are modified, namely the four consecutive rows, together with the row representing the vector sum of the first three of the four consecutive rows, and the row corresponding to the vector sum of the last three of the four consecutive rows of the original set. The modification in this case may be obtained by adding vectorially to the corresponding six rows of the following:

$$\text{to rows 1 and q} \quad (x_1 \oplus x_2) \oplus (x_1 \oplus x_2) = \Theta$$

$$\text{to rows 2 and 3} \quad (x_1 \oplus x_3) \oplus (x_1 \oplus x_3) = \Theta$$

$$\text{to rows 4 and q + 1} \quad (x_2 \oplus x_3) \oplus (x_2 \oplus x_3) = \Theta \tag{9}$$

The form of the equations above suggests that non-linearization works if one takes the first, second, third and one other row of the original set of linear equations, or alternatively, if one takes the first, second, third, fourth and two other rows of the original set of linear equations. Since the method works because the equations in the original set as selected for modification are linear within themselves, equations once non-linearized by the methods of the present invention may not be again used as part of the non-linearization process. This would tend to suggest that only four or six equations could be non-linearized by this process, which of course would be an insignificant number of the total equations for larger word sizes (for instance, a four bit word requires 16 equations, an eight bit word 256 equations, etc). However, again referring to Figure 15, it is to be noted that which word or number in column 2 is to be selected from the non-null rows as $x_1$ is arbitrary. By way of example, if one selected 001 as $x_1$ rather than 001, the third non-zero line would become the first, the fourth non-zero line the second, the fifth non-zero line the third, the sixth non-zero line the fourth, the seventh non-zero line the fifth, the first non-zero line the sixth, etc., essentially shifting the lower five equations up and wrapping the upper two non-zero equations around, with the result that the equations themselves are not changed, nor is the ordering of the equations, but rather only the starting point in that sequence is changed. Such an arrangement of equations was shown in Figure 3, wherein $x_1 = 100$ and $x_m (= x_7) = 011$. If three consecutive rows and the row corresponding to the sum of the three consecutive rows are to be modified (non-linearized) any three consecutive rows may be so selected, limited only by the fact that none of the three selected nor the row corresponding to the sum of the three can have previously been non-linearized as a result of an earlier selection. Similarly, if four consecutive rows plus the two sum rows herein before described are selected, any four consecutive rows may be so used, again provided that none of the four selected nor of the two sum rows may have previously been non-linearized by this process. To generalize the equations for non-linearization, one need only consider $x_1$ as being the value in the second column of the first of the three or four successive rows selected, and renumbering values in each column accordingly.

It will be noted that the non-linearization process is carried out on the equations other than the null equations. Since there are $2^n - 1$ such equations, wherein the n is the bit length of the word used, there is necessarily an odd number of equations available for non-linearization regardless of the value of n, whereas the non-linearization process non-linearizes an even number (4 or 6) equations at a time (obviously in a high speed system, apparatus may be provided to simultaneously non-linearize different non-overlapping groups of a given set of linear equations, as the non-linearization processes for non-ovenapping groups are totally mutually independent, regardless of which process is used). Thus, it is clear than not all equations in any given linear set may be non-linearized. Consequently, there is a question as to how many of the equations may be non-linearized, and whether there is a logical manner of selecting equations for non-linearization. In general, while not all equations may be non-linearized, normally a vast majority of the equations may be non-linearized for word size of four or more bits, leaving the remaining non-linearized equations of little significance, and perhaps if anything, possibly misleading from a cryptanalysis viewpoint Further of course, it should be noted that varying from time to time or dynamically varying the number and identification of the rows to be non-linearized and which non-linearization technique is used further compounds the cryptanalysis problem, through such time varying or dynamically varying non-linearization is not that difficult from a hardware standpoint (or software standpoint, if done under software control) as the starting set of linear equations (which themselves may be varied from time to time or dynamically, as herein before described) may be generated from a simple and readily variable generating function, which set of equations may be non-linearized in both manner and extent utilizing logical processes, which manner and extent may each themselves be varied from time to time or dynamically.

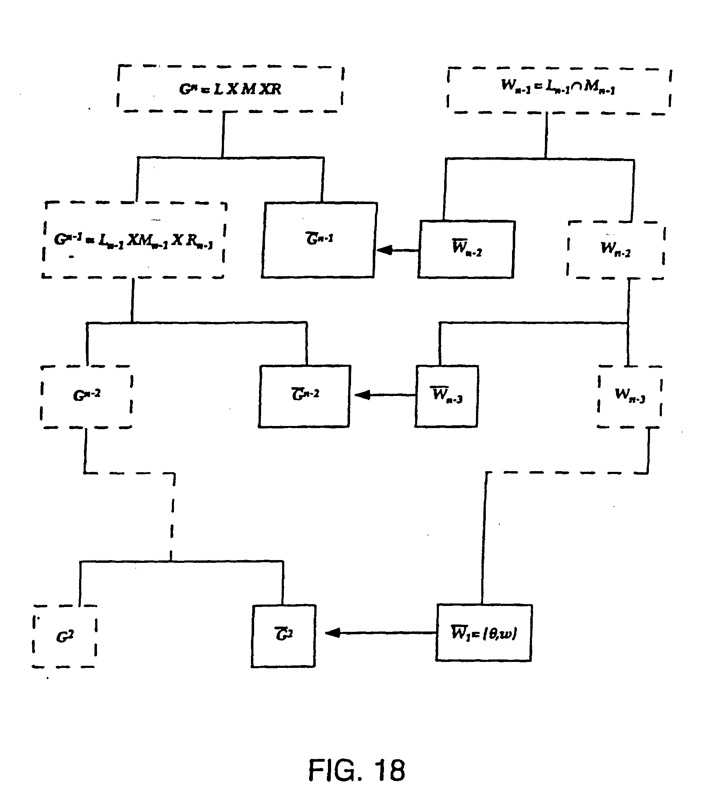

Finally, the non-linearized equations may be further modified by adding modulo 2 an offset to each of the first two columns. This, of course, is equivalent to adding the offset modulo 2 to itself which of course is 0 and therefore does not affect the numbers in the third column. By way of specific example, Figure 17 presents the set of equations as modified by the addition of the offset 0101 to the first and second columns.

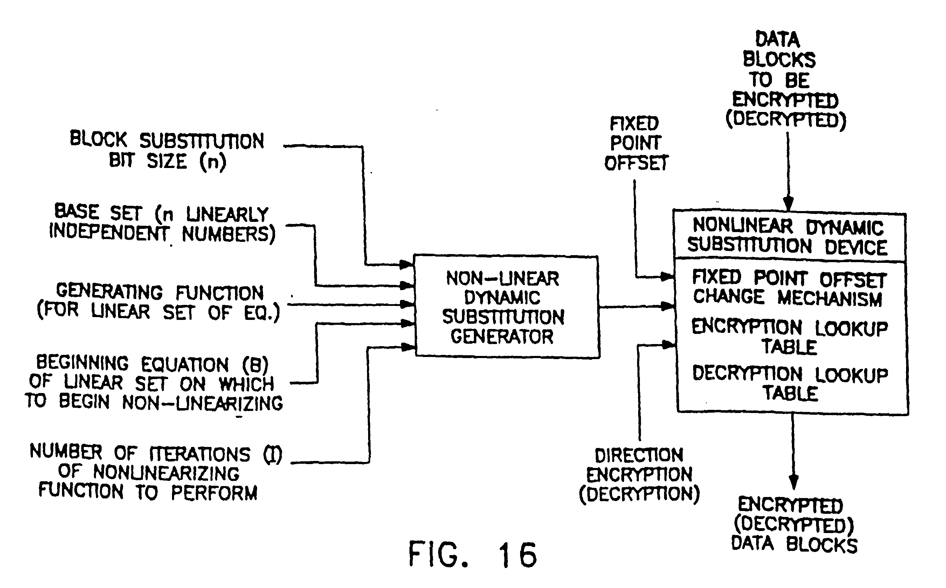

Figure 16 shows a block diagram of typical apparatus for encryption and decryption in accordance with the present invention of the great-parent application. As may be seen in Figure 16, it is convenient to ultimately use a look-up table in the form of a read/write memory wherein the clear text data block or the encrypted text data block (both n bits long) is presented in parallel as the address to the memory with the data stored at the corresponding address corresponding to the encryption or decryption of the respective data block, respectively. For that purpose, it may be convenient to use a memory of twice the address space of that required for either encryption or decryption (e.g. n + 1 address bits) so that the memory address range is one bit wider than the data block to be operated on. In this manner, one bit of the memory address may be used to designate whether the operation is to be an encryption or a decryption operation. By way a specific example, the most significant bit of the memory address might be 0 to indicate a decryption process or a 1 to indicate an encryption process, with the decryption data stored in the lower half of the address range of the memory and the encryption data stored in the upper address range of the memory. Thus both encryption and decryption may be done as desired by the look-up table by control of the single bit, and encryption or decryption of a block of n bits may be achieved in a single memory cycle.

Assuming that the mappings for encryption and decryption are to be changed periodically and/or dynamically, some method of altering the contents of the look-up table must be provided. While this could be done by specialized hardware, it is convenient to do the same by an appropriate processor under program control, as the alteration of the encryption and decryption schemes normally will occur far less . frequently than the encryption and decryption process itself must be carried out. Accordingly, the same normally need not be accomplished with the same speed as encryption and decryption itself. Accordingly, the nonlinear dynamic substitution generator shown in Figure 16 may operate under program control based on various inputs thereto. In particular, the equation for encryption may readily be generated under program control given certain basic information defining the same, such as by way of example the block substitution bit size (n), the base set of n linearly independent numbers, the generating function, the beginning equation of the linear set on which to begin non-linearizing, and the number of iterations of the non-linearizing function to perform.

Once the offset has been applied to the non-linearized equations, each number or block in column 3 is stored in the portion of the look-up table assigned to encryption at an address equal to the block in column 1 for the respective row. Thus, when a number or block in column 1 is applied as the address, the number read out of the memory is the number in column 3 for that row representing the respective encrypted block. For the decryption portion of the table, the process is reversed, in that the blocks in column 3 are used as memory addresses (more appropriately address portions, the full address including the address bit designating decryption) with the data stored at those addresses being the respective blocks in column 1. Thus, during decryption the memory is entered at the address defined by the encrypted block, with the data stored at the respective address being provided as the output corresponding to the associated clear text block.

Obviously the encryption and decryption processes could be carried out entirely under program control, as both processes simply involve logical manipulations given certain (variable) starting information. However, the speed with which encryption and decryption could be carried out would be very grossly reduced, as the processor would wind up regenerating the same encryption and decryption equations over and over again. In comparison, the use of the look-up table allows a one time determination of the full set of encryption and decryption equations, which information for any data block to be encrypted or de-encrypted is continuously available in a single memory cycle until such time as the equations are to be changed.

## III. MODIFICATIONS OF LINEAR ORTHOMORPHISMS

In this section, certain modifications to the linear orthomorphisms described above in sections I and II are provided.

Without loss of generality, and using $\theta$, the additive identity, as the fixed point, any maximal length orthomorphism can be written as a set of equations:

$$\theta \oplus \theta = \theta$$

$$x_m \oplus x_1 = z_1$$

$$x_1 \oplus x_2 = z_2$$

$$.$$
$$.$$
$$.$$

$$x_{k-1} \oplus x_k = z_k$$

$$.$$
$$.$$
$$.$$

$$x_{m-1} \oplus x_m = z_m \qquad (11a)$$

where $m = 2^n - 1$. $R(x_{k-1}) = x_k$ and $S(x_{k-1}) = z_k$ are two of three possible mappings. By convention, $S(x)$ has been used as our cryptographic mapping or block substitution.

In the case of a linear orthomorphism, $\theta$, must be the fixed point, and if maximal, the representing equations take a very simple form:

$$\theta \oplus \theta = \theta$$

$$x_m \oplus x_1 = x_{1-p}$$

$$x_1 \oplus x_2 = x_{2\text{-}p}$$

$$.$$
$$.$$
$$.$$

$$x_{k\text{-}1} \oplus x_k = x_{k\text{-}p}$$

$$.$$
$$.$$
$$.$$

$$x_{m\text{-}1} \oplus x_m = x_{m\text{-}p} \tag{11b}$$

One can construct nonlinear orthomorphisms by suitably modifying the linear versions. Choose any *n*-bit number $w \neq \theta$ and consider the equation $w \oplus w = \theta$ as a vector. Add $w \oplus w = \theta$ vectorially to each of the equations representing the linear orthomorphism in Equation (11) to obtain:

$$
\begin{aligned}
w \quad \oplus \quad w \quad &= \theta \\
(x_m \oplus w) \oplus (x_1 \oplus w) &= x_{1-p} \\
(x_1 \oplus w) \oplus (x_2 \oplus w) &= x_{2-p} \\
\vdots \qquad\qquad \vdots \qquad & \\
(x_{k-1} \oplus w) \oplus (x_k \oplus w) &= x_{k-p} \\
\vdots \qquad\qquad \vdots \qquad & \\
(x_{m-1} \oplus w) \oplus (x_m \oplus w) &= x_{m-p}
\end{aligned}
\tag{12}
$$

Each column consists of all possible n-bit numbers and the mapping $S(x_{k\text{-}1} \oplus w) = x_{k\text{-}p}$ is affine. To be more generally nonlinear, the linear array of equations would have to be broken into subsets and modified in different ways. An individual equation from the *a*th row in the linear orthomorphism:

$$x_{a\text{-}1} \oplus x_a = x_{a\text{-}p} \tag{13}$$

must be modified to become:

$$x_{c\text{-}1} \oplus x_b = x_{a\text{-}p} \tag{14}$$

where $x_{c\text{-}1}$ occurs in the left column, row *c*, and $x_b$ occurs in the middle column, row *b* in the original linear orthomorphism. In this case:

$$w \equiv \left(x_{a-1} \oplus x_{c-1}\right) = \left(x_a \oplus x_b\right)$$

$$(15)$$

which is applied to transform the equation in row $a$ in the same way as those in Equation 12.

The entire set of $2^n$ equations in the linear orthomorphism is corruptible, and from Equation (10), the smallest candidate for a corruptible set consists of three rows or equations. However, a linear orthomorphism containing a corruptible set of three equations may not be useful for cryptography because it would not be maximal.

Proposition 1: It can be shown that a linear orthomorphism on $Z_2^n$ which has a corruptible set of three equations has a 3-cycle in the permutation which it represents.

The following analysis establishes the foregoing Proposition 1. A corruptible set of three equations in a linear orthomorphism:

$$x_{a-1} \oplus x_a = x_{a-p}$$

$$x_{b-1} \oplus x_b = x_{b-p}$$

$$x_{c-1} \oplus x_c = x_{c-p} \qquad (16)$$

can be shown by a matrix of indices:

$$\begin{pmatrix} a & a & a \\ b & b & b \\ c & c & c \end{pmatrix}$$

$$(17)$$

After non-linearization (corruption), only two matrices of indices are possible since the order of the rows is immaterial:

$$\begin{pmatrix} c & b & a \\ a & c & b \\ b & a & c \end{pmatrix} \quad \text{or} \quad \begin{pmatrix} b & c & a \\ c & a & b \\ a & b & c \end{pmatrix}$$

$$(18)$$

Taking the matrix on the left, the corresponding corrupted equations are:

$$x_{c-1} \oplus x_b = x_{a-p}$$

$$x_{a-1} \oplus x_c = x_{b-p}$$

$$x_{b-1} \oplus x_a = x_{c-p} \tag{19}$$

Any two equations with indices $a$ and $b$ can be selected but there are three conditions on equation $c$ which may be conflicting. In what follows, it is assumed that such an equation exists in the linear array. Since the linear array of equations is a group, there exists a fourth equation in the group of index $d$ which is the sum of the original three:

$$x_d = x_a \oplus x_b \oplus x_c \tag{20}$$

and

$$x_{d-1} \oplus x_d = x_{d-p}. \tag{21}$$

These four equations in the linear array form a coset derived from a subgroup of order 4 in the linear array. The subgroup can be found by adding one of the four equations in the coset to the other three, $e.g.$, equation $a$ to obtain:

$$
\begin{array}{cccc}
\theta & \oplus & \theta = & \theta \\
(x_{a-1} \oplus x_{b-1}) \oplus (x_a \oplus x_b) = (x_{a-p} \oplus x_{b-p}) \\
(x_{a-1} \oplus x_{c-1}) \oplus (x_a \oplus x_c) = (x_{a-p} \oplus x_{c-p}) \\
(x_{b-1} \oplus x_{c-1}) \oplus (x_b \oplus x_c) = (x_{b-p} \oplus x_{c-p})
\end{array}
\tag{22}
$$

Using Equation 19, the subgroup becomes:

$$
\begin{array}{cccc}
\theta & \oplus & \theta = & \theta \\
\left(x_{a-1} \oplus x_{b-1}\right) \oplus \left(x_a \oplus x_b\right) = \left(x_{a-p} \oplus x_{b-p}\right) \\
\left(x_a \oplus x_b\right) \oplus \left(x_{a-p} \oplus x_{b-p}\right) = \left(x_{a-1} \oplus x_{b-1}\right) \\
\left(x_{a-p} \oplus x_{b-p}\right) \oplus \left(x_{a-1} \oplus x_{b-1}\right) = \left(x_a \oplus x_b\right)
\end{array}
\tag{23}
$$

The last three equations appear consecutively in the normalized form of the linear array (Equation 19) and form a 3-cycle. If the other matrix of indices is used, the left and middle columns can be interchanged, still maintaining equality and the same result is obtained.

The foregoing proposition also follows recognition that in a maximal linear array of block size $n$, any $n$ consecutive rows are linearly independent. Since a subgroup of order 4 cannot have three linearly independent rows, the array cannot be maximal.

Now, considering a coset of four rows $a$, $b$, c, and $d$ and modifying the first three as above, the result is:

$$x_{c-1} \oplus x_b = x_{a-p}$$

$$x_{a-1} \oplus x_c = x_{b-p}$$

$$x_{b-1} \oplus x_a = x_{c-p}$$

$$x_{d-1} \oplus x_d = x_{d-p} \tag{24}$$

Comparing Equation 24 with the linear version (Equation 11), the following mixing transformations can be derived:

$$w_a = x_{a-1} \oplus x_{c-1} = x_a \oplus x_b$$

$$w_b = x_{a-1} \oplus x_{b-1} = x_b \oplus x_c$$

$$w_c = x_{b-1} \oplus x_{c-1} = x_a \oplus x_c$$

$$w_d = \Theta \tag{25}$$

Since $w_c = w_a \oplus w_b$, the set of mixing transformations $\{\theta, w_a, w_b, w_c\}$ is a group.

Any three consecutive rows plus their sum constituted a corruptible set. This is generalized to taking any two non-zero rows.

$$x_{a-1} \oplus x_a = x_{a-p}$$

$$x_{b-1} \oplus x_b = x_{b-p} \tag{26}$$

Finding the third row $c$, specified by:

$$x_{c-1} \oplus x_{a-p} = x_b \tag{27}$$

and, the fourth row $d$, specified by: .

$$x_d = x_a \oplus x_b \oplus x_c \tag{28}$$

Thus, any two arbitrarily selected non-zero rows in the linear orthomorphic array of equations specify two corruptible sets of four equations. The second of these sets is specified by selecting the third row $c$ by:

$$x_{c-1} \oplus x_a = x_{b-p} \tag{29}$$

In either, the mixing transformation $w \equiv x_a \oplus x_b$ transforms this set of four equations into a 4-equation segment of a nonlinear orthomorphism. The original four equations are clearly the relative complement of a subgroup of order 4, or equivalently, a coset derived from such a subgroup. As in Proposition 1 above, the subgroup can be derived by adding one of the four equations to each of them, *e.g.,* row $a$:

$$\boldsymbol{\theta} \qquad \oplus \qquad \boldsymbol{\theta} \qquad = \qquad \boldsymbol{\theta}$$

$$(x_{a-1} \oplus x_{b-1}) \oplus (x_a \oplus x_b) = x_{a-p} \oplus x_{b-p}$$

$$(x_{a-1} \oplus x_{c-1}) \oplus (x_a \oplus x_c) = x_{a-p} \oplus x_{c-p}$$

$$(x_{a-1} \oplus x_{d-1}) \oplus (x_a \oplus x_d) = x_{a-p} \oplus x_{d-p}$$

$$(30)$$

In the first case, since $x_{a-1} \oplus x_{c-1} = x_a \oplus x_b$, the second and third equations are consecutive in the linear array. A similar result holds in the second case. Thus, the process of finding four corruptible equations reduces to finding any coset in the coset decomposition of $Z_2^n \times Z_2^n \times Z_2^n$ defined by a sub-group of order 4 with two consecutive rows. More generally, let $G^n = Z_2^n \times Z_2^n \times Z_2^n$ be a maximal linear orthomorphism and let $G_0^k = L_k \times M_k \times R_k$ be a subgroup of order $2^k$. The subgroup has the form:

$$L_k \qquad M_k \qquad R_k$$

$$\boldsymbol{\theta} \quad \oplus \quad \boldsymbol{\theta} \quad = \quad \boldsymbol{\theta}$$

$$x_{i_1-1} \oplus \quad x_{i_1} = x_{i_1-p}$$

$$\vdots$$

$$x_{i_s-1} \oplus \quad x_{i_s} = x_{i_s-p}$$

$$(31)$$

where s = $2^k$ -1. A coset can be formed by taking any row in $G^n \setminus G_0^k$, e.g., $x_{a-1} \oplus x_a = x_{a-p}$ and adding it to each row of $G_0^k$ to obtain:

$$G_a^k = \left( x_{a-1} L_k \right) \times \left( x_a M_k \right) \times \left( x_{a-p} R_k \right)$$

$$(32)$$

where $x_a M_k = \{x_a \oplus x_l | x_l \, \varepsilon \, M_k\}$. If $w$ is a mixing transformation and row $i$ is in $G_a^k$, then:

$$\left( x_{i-1} \oplus w \right) \oplus \left( x_i \oplus w \right) = x_{i-p}$$

$$(33)$$

$x_{i-1} \, \varepsilon \, x_{a-1} \, L_k$ and $x_i \, \varepsilon \, x_a \, M_k$. It must also be true that $x_{i-1} \oplus w \, \varepsilon \, x_{a-1} \, L_k$ and $x_i \oplus w \, \varepsilon \, x_a \, M_k$ This occurs if and only if $w \, \varepsilon \, L_k \cap M_k$. Similarly, if row $i$ is in $G_0^k$, since in that case $x_{i-1} \, \varepsilon \, L_k$ and $x_i \, \varepsilon \, M_k$. The group of mixing transformations determined by $G_a^k$ is $W_k = L_k \cap M_k$. In some circumstances $W_k = \{\theta\}$ and no constructive corruption is possible. The foregoing will be described further in Section IV, below.

There are corruptible sets which are not cosets or relative complements of subgroups. For example, a corruptive set is generated by taking four consecutive equations plus the sum of the first three and last three:

$$x_m \oplus x_1 = x_{1-p}$$

$$x_1 \oplus x_2 = x_{2-p}$$

$$x_2 \oplus x_3 = x_{3-p}$$

$$x_3 \oplus x_4 = x_{4-p}$$

$$x_{q-1} \oplus x_q = x_{q-p}$$

$$x_q \oplus x_{q+1} = x_{q+1-p} \tag{34}$$

where $x_q = x_1 \oplus x_2 \oplus x_3$ , etc., and the mixers are $w_1 = x_1 \oplus x_2$, $w_2 = x_1 \oplus x_3$, and $w_3 = w_1 \oplus w_2$. Two more rows can be added using:

$$x_e = x_1 \oplus x_3 \oplus x_4$$

$$x_f = x_1 \oplus x_2 \oplus x_4 \tag{35}$$

The resulting eight equations constitute a coset which can easily be shown to be derived from a subgroup of order 8 with one set of three consecutive rows and one set of two consecutive rows.

While constructive corruption provides nonlinear segments which can be assembled to form a nonlinear orthomorphism, an issue arises as to whether or not there are some nonlinear which cannot be obtained this way.

Proposition 2: In general, any maximal length nonlinear orthomorphism can be derived from a linear (automorphic) orthomorphism by the process of constructive corruption.

The foregoing proposition is established by the following analysis. Without loss of generality, it can be assumed that $\theta$ is the fixed point. The normalized form for any maximal length nonlinear orthomorphism is shown in Equation 11a. The $n$-bit numbers in the right column can be permuted so that the new order of permutation is a linear orthomorphism:

$$(\theta)(z_{1z}, z_2, \cdots, z_m) \rightarrow (\theta)(u_1, u_2, \cdots, u_m) \tag{36}$$

This can be done many ways by applying a linear generating function, *i.e.*, primitive polynomial, to a complete linearly independent set of the $z_i$. Thus, $u_i = z_j$ where $i = f(j)$ represents the permutation above. This same permutation can be applied to the array of equations in Equation 11a without changing the nonlinear orthomorphic mapping $S(x_{k-1}) = z_k$. However, the $\{u_i\}$ permutation now defines a linear orthomorphism. The net result is a dual set of $m = 2^n - 1$ equations of the form:

$$x_{j-1} \oplus x_j = z_j = u_i = u_{i+p-1} \oplus u_{i+p} \tag{37}$$

The corresponding mixing transformations are:

$$w_i = u_{i+p-1} \oplus x_{j-1} = \oplus x_j \tag{38}$$

The principal results of the foregoing analysis are that coset decomposition using special subgroups is an effective and methodical means of finding candidates for piece wise non-linearization and that no class of nonlinear orthomorphisms is overlooked using such a technique. The next section provides analysis for determining what size pieces to corrupt and how to assemble the pieces into a nonlinear orthomorphism with desirable properties for cryptography.

## IV. CONSTRUCTION OF COMPLETE NONLINEAR ORTHOMORPHISMS

Section III described how to find pieces of a linear orthomorphism (corruptible sets of equations) which can be non-linearized among themselves. The present section describes how to assemble the pieces into a complete nonlinear orthomorphism of $2^n$-1 equations. This section further describes what constitutes a good nonlinear orthomorphism and a good non-linear substitution. At one extreme, one could modify a coset of order 4, leaving the remaining $2^n$ - 4 equations unmodified. At the other extreme, one could modify all $2^n$ equations with a single mixing transformation. Neither a piece wise linear nor an affine mapping would be satisfactory. For any mapping $S$ an evaluation can be made of the following:

$$N(x,y) \equiv S(x) \oplus S(y) \oplus S(x \oplus y) = ? \qquad (39)$$

If $S$ is an affine mapping, the sum of Equation 39 will be some fixed number c for all pairs $x$, $y$, and $c = \theta$ if $S$ is linear. Thus, a natural measure of non-linearity would be the range and distribution of $N(x,y)$.

Proposition 3: It can be established that, for a subgroup of order $2^k$ in a maximal length linear orthomorphism, the order of the corresponding group of mixing transformations, $W_k$, will be: $2^{2k-n} \leq |W_k| \leq 2^{k-1}$

The foregoing proposition is established by the following analysis. The subgroup of the orthomorphism is $G_0^k$ = $L_k \times M_k \times R_k$ where $L_k$, $M_k$ and $R_k$ are subgroups of $Z_2^n$, each of order $2^k$. $W_k = L_k \cap M_k$. If $|W_k| = 2^k$, then $L_k = M_k$ implying that $G_0^k$ is a cycle in the orthomorphism. Since it is maximal, $|W_k| \leq 2^{k-1}$. $L_k$ and $M_k$ each have a set of k linearly independent numbers, respectively denoted $\{x_1,x_2,\cdots,x_k\}\varepsilon L_k$ and $\{x_{k+1}, x_{k+2},\cdots,x_{2k}\}\varepsilon M_k$. (These indices here do not refer to rows as in Equation 11.) There are at most $n$ linearly independent numbers in any subset of $Z_2^n$. So, if 2k > $n$, there is a subset of 2k - $n$ numbers in $\{x_1,\cdots,x_k,x_{k+1},\cdots x_{2k}\}$ dependent on the others. Without loss of generality, one can assume that $\{x_{k+1},x_{k+2},\cdots,x_n\}$ are independent of $\{x_1,\cdots,x_k\}$. The remaining numbers $\{x_{n+1},\cdots,x_{2k}\}$ must be dependent on $\{x_1,\cdots,x_k\}\varepsilon L_k$. There are 2k - $n$ such numbers, independent of each other, and so, $\{x_{n+1},\cdots,x_{2k}\}\varepsilon L_k \cap M_k$.

An immediate corollary of the foregoing is that if a subgroup $G_0^k$ of a maximal linear orthomorphism $G^n$ has order

$$\left| G_{0}^{k} \right| \rangle 2^{\frac{n}{2}},$$

then $G_0^k$ and its cosets are corruptible.

A coset of order $2^k$ is termed "completely corruptible" if the corresponding group of mixing transforms is of order $2^{k-1}$.

Let $G^n$ be a set of $2^n$ equations representing a linear orthomorphism on $Z_2^n$. Let $G_0^k$ be the subgroup of $G^n$ consisting of $2^k$ equations as in Equation 31. Assume that $|W_k| = 2^{k-1}$. With the foregoing assumptions and definitions, a coset decomposition takes the form:

$$G^n = G_0^k + G_1^k + \cdots G_c^k \qquad (40)$$

where c = $2^{n-k}$ - 1 and where $G_i^k$ is a coset derived by adding equations (vectors) $x_{i-1} \oplus x_i = x_{i-p}$ to each of the $2^k$ equations in $G_0^k$. Each successive equation must not have appeared in $G_0^k$ or any of the preceding cosets in the decomposition. For practical purposes, decomposition into corruptible sets is desired. Each of these cosets will have the same group of mixing transforms available.

A maximal subgroup of equations representing a linear orthomorphism can be broken into disjoint subsets which are transformable into a nonlinear orthomorphism by consecutive steps.

This can be generalized to any completely corruptible coset.

Practical problems in constructive corruption are the choice of the size of the set of equations in the linear orthomorphic array to be non-linearized and the method of assigning mixing transforms without conflict. If $G_0^k = L_k \times M_k \times R_k$ is a sub-group of the array of equations of order $2^k$, and if it is completely corruptible, the order of the set of mixing transforms is $|W_k| = 2^{k-1}$. Any coset $G_i^k$ is obtained by vectorially adding some equation $x_{i-1} \oplus x_i = x_{i-p}$, which is not in $G_0^k$, to all equations in $G_0^k$. This coset can be corrupted by applying some or all of the mixing transforms in $W_k$. If only one $w \varepsilon W_k$ is used, the result is an affine set. If one attempts to use all the $w$'s, there is a problem of assigning the w's without conflict. One can always take a completely corruptible subgroup $G_0^{k-1} \subset G_0^k$, and divide $G_i^k$ into two cosets of $G_0^{k-1}$, $G_i^{k-1} \cup G_j^{k-1} = G_i^k$, and then corrupt these two smaller cosets separately. The problem is that the order of the set of mixing transforms $|W_{k-1}|$ is $2^{k-2}$, so that there are only half as many mixing transforms available as the number of equations to which they are applied. In the limit for $k = 2$ and cosets of order 4, $W_2 = \{\theta, w\}$, and so, there is just one mixing transform that can be applied to all $2^{n-2} - 1$ . cosets. In what follows, a method is provided for finding a subset of a coset $G_i^k = \bar{L}_k \times \bar{M}_k \times \bar{R}_k$ derived from the sub-group $G_0^k = L_k \times M_k \times R_k$, such that the numbers in the left and middle columns of the subset can be combined among themselves but with their sums ranging over all of $\bar{R}_k$, the right column.

The method simplifies the assignment of multiple mixing transformations to an orderly process rather than by "cut and try" methods

The following generalizes this process to subgroups of all orders $|G_0^k|=2^k$ for $k \leq n$-1. The method seeks to find subgroups that act like maximal subgroups.

Proposition 4: It can be established that a completely corruptible subgroup of order $2^k$ has k consecutive rows of equations from the complete array of equations representing the maximal linear orthomorphism.

The foregoing proposition is established by the following analysis. Let $G_0^k$ be a completely corruptible subgroup of order $2^k$. Then $|W_k| = 2^{k-1}$ by definition. $G_0^k$ has a maximal set of $k$ linearly independent equations. $W_k$ has maximal linearly independent sets of $k - 1$ numbers. It is desirable to find the set with the largest collection of consecutive numbers from columns $L$ or $M$ in the complete linear array. If there are $k - 1$ such numbers $x_a, x_{a+1}, \cdots, x_{a+k-2}$, the numbers correspond to the following rows in $G_0^k$ which are $k$ consecutive rows:

$$x_{a-1} \oplus x_a = x_{a-p}$$

$$x_a \oplus x_{a+1} = x_{a+1-p}$$

$$.$$

$$.$$

$$.$$

$$x_{a+k-2} \oplus x_{a+k-1} = x_{a+k-1-p} \tag{41}$$

If there are less than $k - 1$ consecutive numbers in the set of $k - 1$ linearly independent numbers, the numbers can be collected into smaller sets of consecutive numbers. The largest such set is $x_a, x_{a+1}, \cdots, x_{a+k_a-2}$; the second largest set is $x_b, x_{b+1}, \cdots, x_{b+k_b-2}$, etc, until a set of k - 1 independent numbers in $W_k$ is assembled with $(k_a -1) + (k_b - 1)+\cdots = k$-1. Each such set defines a set of equations in $G_0^k$, all consecutive, of the form:

$$
\begin{aligned}
x_{a-1} \oplus x_a &= x_{a-p} \\
x_a \oplus x_{a+1} &= x_{a+1-p} \qquad & k_a \text{ equations} \\
\vdots \qquad \vdots \\
x_{a+k_a-2} \oplus x_{a+k_a-1} &= x_{a+k_a-1-p} \\
\\
x_{b-1} \oplus x_b &= x_{b-p} \qquad & k_b \text{ equations} \\
\vdots \qquad \vdots \\
x_{b+k_b-2} \oplus x_{b+k_b-1} &= x_{b+k_b-1-p} \\
\textit{etc.}
\end{aligned}
$$

$$\textbf{(42)}$$

The $k_a + k_b +\cdots> k$ individual equations of Equation 42 are linearly independent since the x's are linearly independent.

Thus, $|G_0^k| > 2^k$, represents a contradiction.

Completely corruptible subgroups and cosets are not only useful for deriving nonlinear orthomorphisms but as will be shown below also affect the structure of smaller subgroups.

Proposition 5: It can be established that, for any completely corruptible subgroup of order $2^k$, where $k \geq 4$, each subgroup of order $2^{k-1}$ is corruptible.

The foregoing proposition is proved by the following: Let $G_0^k$ be such a completely corruptible subgroup. By Prop. 4, $G_0^k$ has $k$ consecutive equations from the complete orthomorphic array. It also has another set of $k - 1$ consecutive equations which are sums of adjacent pairs of the $k$ consecutive equations, since the latter are a set of generators of $G_0^k$. There is a sequence of successively smaller $k$-tuples of consecutive rows. The indices of the sequence are provided in Table I:

### Consecutive Rows

| $k$ | $k-1$ | $k-2$ | |
|---|---|---|---|
| $a$ | $b$ | $c$ | |
| $a+1$ | $b+1$ | $c+1$ | |
| $a+2$ | $b+2$ | $c+2$ | $etc\rightarrow$ |
| $\vdots$ | $\vdots$ | $\vdots$ | |
| $a+k-1$ | $b+k-2$ | $c+k-3$ | |

where $x_a \oplus x_{a+1} = x_b$ and $x_b \oplus x_{b+1} = x_c$, etc.

Table I

Since $k \geq 4$, there are at least four consecutive $a$ rows, three $b$'s, and two $c$ 's. The three consecutive sets of $k-1$ rows:

$$(a,a+1,\cdots,a+k\text{-}2),$$

$$(a+1,a+2,\cdots,a+k\text{-}1),$$

and

$$(b,b+1,\cdots,b+k\text{-}2) \tag{43}$$

are linearly independent sets and can be used to generate a $G_0^{k-1}$ with $k$-1 consecutive rows. In a like manner, $(b, a+2,a+3,\cdots,a+k\text{-}1)$ would generate $G_0^{k-1}$ with $k - 2$ consecutive rows, noting that $x_b$ is independent of $x_{a+2},\cdots,x_{a+k-1}$. To ensure that $G_0^{k-1}$ is not corruptible, it would be necessary to eliminate all pairs from the above indices. If one eliminates all but one of the $a$'s, e.g., $a$ thru $a + k - 2$, then $x_a,\cdots,x_{a+k-2}$ define rows which will be in the relative complement $\overline{G}^{k-1} = G_0^k \setminus G_0^{k-1}$, but $x_a \oplus x_{a+1} = x_b$, etc. At the least, $\frac{k}{2}$ or $\frac{k-1}{2}$ of the b's must also be eliminated. Thus, some additive triple would be in $\overline{G}^{k-1}$, a contradiction for a complement. Depending on whether $k$ is even or odd, $\frac{k}{2}$ or $\frac{k-1}{2}$ alternate $a$ rows could also be left to the subgroup complement, but $x_a \oplus x_{a+2} = x_c$, etc. Again, to eliminate the consecutive rows with c indices, some of such rows would be in the complement, thus resulting in triple sums.

For $n \geq 5$, this implies that any subgroup of order $2^{n-2}$ is corruptible, and, of course, by Prop. 4, any subgroup of order $2^{n-1}$ is completely corruptible.

Proposition 6: Any maximal orthomorphism on $Z_2^3$ is linear or affine.

The forgoing proposition is established by the following: A nonlinear orthomorphism can be derived by constructive corruption from a linear one. If one applies $w \oplus w = \theta$ vectorially to all eight rows, where $w \neq \theta$, the mapping becomes affine. Since the orthomorphism has no 3 cycle, the smallest corruptible coset has order 4.

Let $G^3 = Z_2^3 \times Z_2^3 \times Z_2^3$ be the orthomorphism and $G^2 \cup \overline{G}^2 = G^3$ be a corruptible subgroup with corresponding single coset (complement). Because $|G^2| = 2^2$, $W = \{\theta, w\}$ where $w$ is the single nontrivial mixer. If $S(x) = z$ is the original linear mapping, then $S'(x \oplus w) \equiv S(x)$ on the coset, and $S'(y) \equiv S(y)$ on the subgroup. $w \, \varepsilon \, G^2$, so $S'(w) = S(w)$. If $x \, \varepsilon \, \overline{G}_2$, so does $x \oplus w \, \varepsilon \, \overline{G}^2$. $S'(x) = S'(x \oplus w \oplus w) = S(x \oplus w) = S(x) \oplus S(w)$. There are three cases:

$$a. \; x, y \varepsilon G^2. \; x \oplus y \varepsilon G^2.$$

$$\text{Also, } S'(x) \oplus S'(y) \oplus S'(x \oplus y)$$

$$= S(x) \oplus S(y) \oplus S(x \oplus y)$$

$$= \theta. \tag{44}$$

$$b. \; x, y \varepsilon \overline{G}^2. \; x \oplus y \varepsilon G^2.$$

$$\text{Also, } S'(x) \oplus S'(y) \oplus S'(x \oplus y)$$

$$= S(x) \oplus S(w) \oplus S(y) \oplus S(w) \oplus S(x \oplus y)$$

$$= \theta \tag{45}$$

$$c. \; x \varepsilon G^2 \text{ and } y \varepsilon \overline{G}^2.$$

$$\text{Then } x \oplus y \varepsilon \overline{G}^2$$

$$S'(x) \oplus S'(y) \oplus S'(x \oplus y)$$

$$= S(x) \oplus S(y) \oplus S(w) \oplus S(x \oplus y) \oplus S(w)$$

$$= \theta \tag{46}$$

The same result holds for any block size if the complement of a maximal subgroup is corrupted with a single mixing transformation. The next step is to further refine the process of constructive corruption by finding completely corruptible subgroups which have the additional property that pairs of cosets or subsets thereof can be modified with minimum interaction, even though using the full group of mixing transforms.

Proposition 7: It can be established that any completely corruptible coset $G_l^k$ of order $2^k$, $k > 2$, in the group of equations representing a maximal linear orthomorphism on $Z_2^n$, can be divided into two cosets of order $2^{k-1}$ such that the numbers in the left and middle columns of each such smaller coset can be rearranged among themselves but the resulting sums will be distributed over the entire column of the parent coset $G_l^k$.

The foregoing proposition is proven by the following: The completely corruptible subgroup $G_0^k$ and coset $G_l^k$ can be represented as follows:

$$
\begin{array}{ccc}
\boldsymbol{L_k} & \boldsymbol{M_k} & \boldsymbol{R_k} \\
\theta & \oplus \quad \theta = \theta & \\
x_{i_1-1} & \oplus x_{i_1} = x_{i_1-p} & \\
\vdots & \vdots & G_0^k \\
x_{i_s-1} & \oplus x_{i_s} = x_{i_s-p} &
\end{array}
$$

$$
\begin{array}{ccc}
\overline{L_k} & \overline{M_k} & \overline{R_k} \\
x_{j_1-1} \oplus x_{j_1} = x_{j_1-p} & & \\
\vdots & \vdots & G_l^k \\
x_{j_t-1} \oplus x_{j_t} = x_{j_t-p} & &
\end{array}
$$

$$(47)$$

where $s = 2^k - 1$ and $t = 2^k$. If $G_0^k$ is not a maximal subgroup, then:

$$
L_k \cup \overline{L}_k \neq M_k \cup \overline{M}_k \neq R_k \cup \overline{R}_k \neq Z_2^n. \tag{48}
$$

By Prop. 4, since the subgroup $G_0^k$ of order $2^k$ is completely corruptible, it contains a set of $k$ consecutive rows or equations from the full orthomorphic set of equations. These k rows are a linearly independent set. The subgroup generated by taking all even sums of these k rows is a subgroup $G_0^{k-1}$ of order $2^{k-1}$, $G_0^{k-1} \subset G_0^k$, with columns $L_{k-1}$ c $L_k$, $M_{k-1} \subset M_k$ and $R_{k-1} \subset R_k$. $L_{k-1} \subset R_k$ and $M_{k-1} \subset R_k$ since the same sums of numbers will occur within $L_{k-1}$ and $M_{k-1}$ and between $L_{k-1}$ and $M_{k-1}$. Since the orthomorphism is maximal, there are no proper cycles and, thus, $L_{k-1} \neq R_{k-1}$ and $M_{k-1} \neq R_{k-1}$. So, $L_{k-1} \cap R_k \setminus R_{k-1}$ and $M_{k-1} \cap R_k \setminus R_{k-1}$ are not empty, where $R_k \setminus R_{k-1}$ is the set of numbers in $R_k$ but not in $R_{k-1}$. Since $L_{k-1}$ and $M_{k-1}$ are subgroups of $R_k$, for any $x \, \varepsilon \, L_{k-1}$ and $y \, \varepsilon \, M_{k-1}$, $x \oplus y \, \varepsilon \, R_k$. Some such sums must be in $R_k \setminus R_{k-1}$ because, e.g., if $x \, \varepsilon \, L_{k-1} \cap R_k \setminus R_{k-1}$, then $x \oplus \theta \, \varepsilon \, R_k$. Thus, any rearrangement of pairs of numbers in $L_{k-1}$ and $M_{k-1}$ will yield corrupted equations in $L_{k-1} \times M_{k-1} \times R_k$.

$G_l^k$ can be divided into two distinct cosets of $G_0^{k-1}$, $G_0^{k-1} \cup G_b^{k-1} = G_l^k$. Consider one of the cosets $G_a^{k-1}$. It is obtained by adding vectorially some equation $x_{a-1} \oplus x_a = x_{a-p}$ to all equations in $G_0^{k-1} = L_{k-1}$ x $M_{k-1}$ x $R_{k-1}$. The coset $G_a^{k-1}$ can be expressed as a direct product of three cosets in $Z_2^n$, i.e.:

$$
G_a^{k-1} = (x_{a-1}L_{k-1}) \times (x_a M_{k-1}) \times (x_{a-p}R_{k-1}) \tag{49}
$$

Thus, if $u \, \varepsilon \, x_{a-1}L_{k-1}$ and $v \, \varepsilon \, x_a M_{k-1}$, where $u = x_{a-1} \oplus x$ and $v = x_a \oplus y$ for some $x \, \varepsilon \, L_{k-1}$ and $y \, \varepsilon \, M_{k-1}$, then by the first part of the proof, $x \oplus y = z \, \varepsilon \, R_{k-1}$. Correspondingly:

$$
u \oplus v = (x_{a-1}, \oplus x) \oplus (x_a \oplus y)
$$

$$
= (x_{a-p} \oplus z) \, \varepsilon \, x_{a-p}R_{k-1} \tag{50}
$$

So, for any pair of numbers, $u$, $v$ where $u \, \varepsilon \, x_{a-1}L_{k-1}$ and $v \, \varepsilon \, x_a M_{k-1}$ there exists a $w \, \varepsilon \, x_{a-p}R_{k-1}$ such that $u \oplus v = w$. The same holds for the other coset $G_b^{k-1}$.

As an example of the foregoing, non-linearization method consider a block size 8 maximal length linear orthomorphism defined by the generating function $x_k = x_{k-8} \oplus x_{k-6} \oplus x_{k-3} \oplus x_{k-2}$. Let $\{A,B,C,D,E,F,G,H\}$ be a complete, linearly independent set of 8-bit binary numbers where each letter represents an 8-bit binary number, and in particular, A=X, B=$X_2$, ....., H = $X_8$. For convenience and compactness, notation $A \, B \, C$ stands for A $\oplus$ B $\oplus$ C. Applying the gen-

erating function to the above complete linearly independent set in that order will define the $2^8 = 256$ equations or rows representing the orthomorphism. For example, $X_9 = X_1 \oplus X_3 \oplus X_6 \oplus X_7 = A \oplus C \oplus F \oplus G = ACFG$. These, in part, are:

$$
\begin{array}{llllll}
0 & \theta & \oplus & \theta & = & \theta \\
1 & BEFH & \oplus & A & = & ABEFH \\
2 & A & \oplus & B & = & AB \\
3 & B & \oplus & C & = & BC \\
4 & C & \oplus & D & = & CD \\
5 & D & \oplus & E & = & DE \\
6 & E & \oplus & F & = & EF \\
7 & F & \oplus & G & = & FG \\
8 & G & \oplus & H & = & GH \\
9 & H & \oplus & ACFG & = & ACFGH \\
\vdots & & & \vdots & & \vdots \\
254 & BCDEH & \oplus & ADEG & = & ABCGH \\
255 & ADEG & \oplus & BEFH & = & ABDFGH
\end{array}
$$

$$(51)$$

The orthomorphic mapping used for encryption is for example, $S(D) = DE$, from row 5. For simplicity, choose a subgroup $G_0^3$ of order 8 defined by eight equations:

$$
\begin{array}{llllll}
 & L_3 & & M_3 & & R_3 \\
0 & \theta & \oplus & \theta & = & \theta \\
2 & A & \oplus & B & = & AB \\
3 & B & \oplus & C & = & BC \\
4 & C & \oplus & D & = & CD \quad G_0^3 \\
176 & ABC & \oplus & BCD & = & AD \\
213 & AC & \oplus & BD & = & ABCD \\
235 & AB & \oplus & BC & = & AC \\
236 & BC & \oplus & CD & = & BD
\end{array}
$$

$$(52)$$

One can read off the mixing transforms $W_3 = \{\Theta, B, C, BC\}$ from $W_3 = L_3 \cap M_3$. $|W_3| = 2^2 = 4$, so $G_0^3$ is completely corruptible. Now, one can construct a coset, *e.g.*, using row 6:

$$
\begin{array}{rclclcll}
 & \overline{L}_3 & & \overline{M}_3 & & \overline{R}_3 & \\
6 & E & \oplus & F & = & EF & \\
169 & AE & \oplus & BF & = & ABEF & \\
155 & BE & \oplus & CF & = & BCEF & \\
215 & CE & \oplus & DF & = & CDEF & G_6^3 \\
91 & ABCE & \oplus & BCDF & = & ADEF & \\
95 & ACE & \oplus & BDF & = & ABCDEF & \\
121 & ABE & \oplus & BCF & = & ACEF & \\
209 & BCE & \oplus & CDF & = & BDEF & \\
\end{array}
$$

(53)

One example of a corruptible subgroup of order 4, $G_0^2$ is:

$$
\begin{array}{rclclcl}
 & L_2 & & M_2 & & R_2 \\
0 & \theta & \oplus & \theta & = & \theta \\
2 & A & \oplus & B & = & AB \\
3 & B & \oplus & C & = & BC \\
235 & AB & \oplus & BC & = & AC \\
\end{array}
$$

(54)

$W_2 = \{\Theta, B\}$. From this, $G_6^3$ can be decomposed into two cosets:

$$
\begin{array}{rclclcl}
6 & E & \oplus & F & = & EF \\
169 & AE & \oplus & BF & = & ABEF \\
155 & BE & \oplus & CF & = & BCEF \\
121 & ABE & \oplus & BCF & = & ACEF \\
\end{array}
$$

and

26

$$
\begin{array}{llllll}
215 & CE & \oplus & DF & = & CDEF \\
91 & ABCE & \oplus & BCDF & = & ADEF \\
95 & ACE & \oplus & BDF & = & ABCDEF \\
209 & BCE & \oplus & CDF & = & BDEF
\end{array}
\tag{55}
$$

Using this coset decomposition, the only nontrivial mixing transform that can be used on the separate cosets is $B$.

Now, applying Prop. 7 to the $k = 3$ consecutive rows in $G_0^3$, one obtains a different subgroup which is also completely corruptible:

$$
\begin{array}{cccccc}
 & L_2 & & M_2 & & R_2 \\
0 & \theta & \oplus & \theta & = & \theta \\
213 & AC & \oplus & BD & = & ABCD \\
235 & AB & \oplus & BC & = & AC \\
236 & BC & \oplus & CD & = & BD
\end{array}
\tag{56}
$$

Unlike the sub-group in Equation 53, here $L_2 \subset R_3$ and $M_2 \subset R_3$ gives a different coset decomposition of $G_6^3$:

$$
\begin{array}{cccccc}
 & \bar{L}_3 & & \overline{M}_3 & & \overline{R}_3 \\
6 & E & \oplus & F & = & EF \\
95 & ACE & \oplus & BDF & = & ABCDEF \\
121 & ABE & \oplus & BCF & = & ACEF \quad G_6^2 \\
209 & BCE & \oplus & CDF & = & BDEF
\end{array}
\tag{57}
$$

and

$$
\begin{array}{cccccc}
169 & AE & \oplus & BF & = & ABEF \\
155 & BE & \oplus & CF & = & BCEF \\
215 & CE & \oplus & DF & = & CDEF \quad G_{91}^2 \\
91 & ABCE & \oplus & BCDF & = & ADEF
\end{array}
\tag{58}
$$

From Prop. 7, when constructive corruption is applied, $G_6^2$ and $G_{91}^2$ will be closed in $\bar{L}_3$ and $\overline{M}_3$ but not in $\overline{R}_3$, that is, for example, no number in $\bar{L}_3$ of $G_6^2$ will be combined with a number from $\overline{M}_3$ in $G_{91}^2$. This information can be used to employ varied mixing transforms without conflict. See Table II.

| | Row #'s | $G_6^2$ | | $\overline{M}_3$ | | $G_{91}^2$ | | | |
| --- | --- | --- | --- | --- | --- | --- | --- | --- | --- |
| | | Row 6 | Row 95 | Row 121 | Row 209 | Row 91 | Row 155 | Row 169 | Row 215 |
| $\overline{L}_3$ $G_6^2$ | 6 | 6/θ | 209/BC | 155/B | 215/C | | | | |
| | 95 | 121/BC | 95/θ | 169/C | 91/B | | | | |
| | 121 | 169/B | 91/C | 121/θ | 95/BC | | | | |
| | 209 | 155/C | 215/B | 6/BC | 209/θ | | | | |
| $G_{91}^2$ | 91 | | | | | 91/θ | 169/BC | 121/C | 95/B |
| | 155 | | | | | 215/BC | 155/θ | 6/B | 209/C |
| | 169 | | | | | 95/C | 121/B | 169/θ | 91/BC |
| | 215 | | | | | 209/B | 6/C | 155/BC | 215/θ |

**Table II.**

The ordinate lists row numbers of binary blocks in the left column of Equation 53 and the abscissa lists row numbers of binary blocks in the middle column of Equation 53. The table entries are the row numbers of equations in the linear array Equation 53, along with the mixing transformation which would convert that equation to another in a nonlinear array with the corresponding $\overline{L}_3$ block added to the corresponding $\overline{M}_3$ block. For example, the entry corresponding to $\overline{L}_3$ 95, $\overline{M}_3$ 121 means that row 169: $AE \oplus BF = ABEF$ by application of mixing transformation $C \oplus C = \theta$ is converted to $ACE \oplus BCF = ABEF$ where the $\overline{L}_3$ row 95 block is $ACE$, and the $\overline{M}_3$ row 121 block is $BCF$. Where there is no entry, the combination is impossible. Note that each of the eight rectangles contains rows from one of two cosets $G_6^2$ and $G_{91}^2$. Each column and each row can be visited only once and no table entry (row number) can be repeated. If this were a 3-dimensional table, it would mean that each row, column, and axis could be visited once, at most.

Table II can be used to select a pattern of constructive corruption. For example, choose $\overline{L}_3$ 6, $\overline{M}_3$ 121 transformed from row 155 with mixer $B$. Next, choose $\overline{L}_3$ 95, $\overline{M}_3$ 6 from 121/BC. Two choices remain for $\overline{L}_3$ 121. Choose $\overline{M}_3$ 209 from 95/BC. There is now only one possibility for $\overline{L}_3$ 209, i.e., pairing with $\overline{M}_3$ 95 from 215/B. Next, going to the $G_{91}^2$ block, unless we accept the identity transform, there is one choice: $\overline{L}_3$ 91, $\overline{M}_3$ 155 from 169/BC. For the remainder now, there is no choice: $\overline{L}_3$ 155, $\overline{M}_3$ 169 from 6/B, $\overline{L}_3$ 169, $\overline{M}_3$ 215 from 91/*BC* and $\overline{L}_3$ 215, $\overline{M}_3$ 91 from 209/*B*. We have used two mixing transforms.

Another approach is to include the identity transform, *i.e.*, leave some rows unmodified. For example, $\overline{L}_3$ 6, $\overline{M}_3$ 6 from 6/Θ; $\overline{L}_3$ 95, $\overline{M}_3$ 121 from 169/*C*; $\overline{L}_3$ 121, $\overline{M}_3$ 209 from 95/*BC*; and $\overline{L}_3$ 209, $\overline{M}_3$ 95 from 215 / *B*; $\overline{L}_3$ 91, $\overline{M}_3$ 169 from 121/*C*; $\overline{L}_3$ 155, $\overline{M}_3$ 155 from 155/θ; $\overline{L}_3$ 169, $\overline{M}_3$ 215 from 91/*BC*; and, $\overline{L}_3$ 215, $\overline{M}_3$ 91 from 209/B. In this case, all mixing transforms have been used, but two, rows 6 and 155, are left unmodified. The two rows may be transformed later as parts of some other cosets or their sum, row 3, may be modified.

The foregoing method can be applied to subgroups and cosets of any size, and then to successively smaller subgroups for an orderly process of non-linearization. It is not necessary to modify all rows in the linear array to ensure that:

$$N(x,y) = S(x) \oplus S(y) \oplus S(x \oplus y) \neq \theta \tag{59}$$

most of the time, and to have an even distribution of values.

The foregoing provides generalized techniques and methods for constructing complete non-linear orthomorphisms. The foregoing n=8 example is provided to illustrate the general techniques with concrete equations. In the following sections, specific techniques for non-linearization which are well suited for performing block substitutions in cryptography are described.

### V. NESTED SEQUENCES OF SUBGROUPS

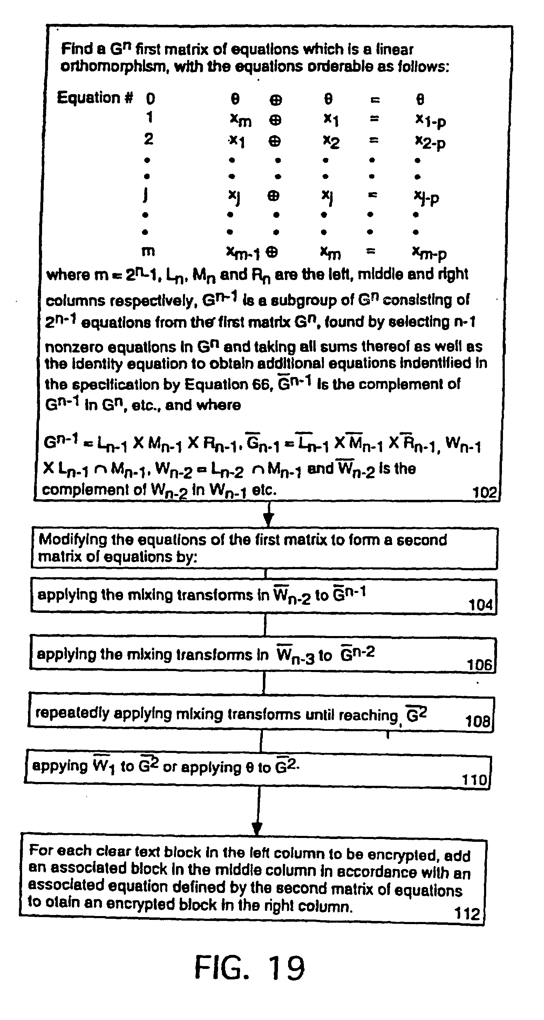

Referring to Figures 18 and 19, a first preferred method for non-linearization is provided. The method employs nested sequences of subgroups. Prior to describing the specific steps of the method, a description of nested sequences of subgroups is provided.

A non-linearization starts with a maximal subgroup of equations in the linear array of $2^n$ equations. $G^{n-1}$ is one of $2^n - 1$ such subgroups and $|G^{n-1}| = 2^{n-1}$. All such maximal subgroups can be specified by selecting $n$-bit numbers in any one of the three columns which are a maximal subgroup of $Z_2^n$. The maximal subgroups can all be determined from the $n$ maximal subgroups of $Z_2^n$ which are specified by numbers which all have zero in a given bit position. All of these maximal subgroups of the orthomorphic array $G^n$ are essentially images of each other in that they have the same row spacing and can be obtained from each other by changing the indices of the member rows, all by the same increment.

Thus, maximal subgroups, both of the n-bit numbers and of the linear orthomorphic arrays of equations are easy to find and easy to work with.

$G^{n-1} = L_{n-1} \times M_{n-1} \times R_{n-1}$ is a set of $2^{n-1}$ equations where $L_{n-1}$, $M_{n-1}$, and $R_{n-1}$ are the left, middle, and right columns, respectively. $\overline{G}^{n-1} = \overline{L}_{n-1} \times \overline{M}_{n-1} \times \overline{R}_{n-1}$ is the complement. The set of mixing transforms $W_{n-1} = L_{n-1} \cap M_{n-1}$ is a group, and $|W_{n-1}| = 2^{n-2}$. From $G^{n-1}$ one can construct a nested sequence of completely corruptible subgroups

$$G^2 \subset G^3 \subset \cdots \subset G^{n-2} \subset G^{n-1} \tag{60}$$

and a similar sequence of relative complements

$$\overline{G}^2 \subset \overline{G}^3 \subset \cdots \subset \overline{G}^{n-2} \subset \overline{G}^{n-1} \tag{61}$$

where $\overline{G}^k = G^{k+1} \setminus G^k$, each with an associated group of mixing transforms

$$|W_{n-k}| = 2^{n-k-1} \tag{62}$$

These subgroups also form a nested sequence

$$W_2 \subset W_3 \subset \cdots \subset W_{n-2} \subset W_{n-1} \tag{63}$$

In the limit, $G^2$ has middle column $M_2 = \{\theta, x_i, x_{i+1}, x_i \oplus x_i\}$ for some index $i$ and the corresponding $W_2 = \{\theta, x_i\}$. Also, for each $1 \leq k \leq n - 2$

$$W_{n-k} = W_{n-k-1} \cup \overline{W}_{n-k-1}$$

$$\text{where } \overline{W}_{n-k-1} = W_{n-k} \setminus W_{n-k-1} \tag{64}$$

*i.e.*, $\overline{W}_{n-k-1}$ is the relative complement of $W_{n-k-1}$ in $W_{n-k}$. A simple and orderly procedure of non-linearization is as follows (and is graphically illustrated in Figure 18):

*a.* Apply the $2^{n-3}$ mixing transforms in $\overline{W}_{n-2}$ to $\overline{G}^{n-1}$. None of these mixing transforms are in $W_{n-k}$ for $k > 1$, so they will not be used on subsequent cosets $\overline{G}^{n-k}$.
*b.* Apply the $2^{n-4}$ mixing transforms in $\overline{W}_{n-3}$ to $\overline{G}^{n-2}$.
*c.* Continue this process sequentially until reaching $\overline{G}^3$ where two mixing transforms are applied to eight equations.
*d.* For the last subgroup $G^2$ of order 4, the sole $w = x$, could be applied to $\overline{G}^2$ or it simply could be left alone, *i.e.*, apply $w = \theta$.

Besides simplicity, the foregoing method has the merit of using up to $2^{n-2} - 1$ nontrivial mixing transforms. Also, at least $2^n - 4$ equations are transformed; however, the resulting structure retains some order. $G^{n-1}$ has a single set of $n$-1 consecutive rows, and because of the group structure, another set of $n$-2 consecutive rows. Thus, there are three ways that one can construct $G^{n-2}$ as a completely corruptible subgroup, from Prop. 4, *i.e.,* using the set of *n*-2 rows as generators, or omitting the first or last of the set of *n*-1 consecutive rows in $G^{n-1}$. There is a choice of $2^n$-1 maximal subgroups to begin with and a choice of three subgroups at each subsequent level. So the total possible number of such nested sequences is $(2^n-1)(3^{n-2})$.

Now, consider two numbers *x, y* in the left column of $\bar{G}^{n-1}$, *i.e., x,y* $\notin \bar{L}_{n-1}$. $x \oplus y \notin \bar{L}_{n-1}$ since it is a group complement. So $x \oplus y \varepsilon \bar{L}_{n-k}$ for some k > 1. Let $w_a$ and $w_b$ be mixing transforms applied to *x* and *y*, respectively. $w_a, w_b \varepsilon \overline{W}_{n-2}$. The set of mixers on $\bar{L}_{n-k}$ is $\overline{W}_{n-k-1} \subset \overline{W}_{n-1}$. Thus, in some instances $w_a \oplus w_b \varepsilon \overline{W}_{n-k-1}$.
In that case:

$$S(x \oplus w_a) \oplus S(y \oplus w_b) = S(x \oplus y \oplus w_a \oplus w_b), \tag{65}$$

and despite the constructive corruption, there are some linear subgroups remaining.

With the foregoing considerations in mind, and with specific reference now to Figure 19, a preferred method for encryption using nested sequences of subgroups will now be described. The method operates to encrypt data blocks by substituting for any one of $2^n$ n-bit clear text blocks of an n-bit binary number, an associated unique encrypted block of n-bit binary numbers. The method may be implemented using a non-linear dynamic substitution generator, as generally illustrated in Figure 16.

With reference to Figure 19, a first method, is employed to find a first matrix $G^n$ of $2^n$ equations as in (11a), which is a linear orthomorphism, with each equation representing the modulo 2 additions of one of the $2^n$ blocks on the left column with a unique one of the $2^n$-bit numbers in the middle to provide an associated, unique, n-bit block in the right column. All of the equations in the first matrix of $2^n$ equations are characterized by the vector sum modulo 2 of any number of the equations also being one of the equations in the first matrix. The equations include the identity equation $\Theta \oplus \Theta = \Theta$. In step 102, a subset $G^{n-1}$ of $2^{n-1}$ equations from the FIRST matrix is selected by choosing n-1 consecutive equations in the FIRST matrix and taking all sums of these and the identity equation to obtain:

| Equation # | $L_{n-1}$ X | | $M_{n-1}$ X | | $R_{n-1}$ |
|---|---|---|---|---|---|
| $i_0$ | $\Theta$ | $\Theta$ | $\Theta$ | = | $\Theta$ |
| $i_1$ | $i_{1-1}$ | $\oplus$ $i_1$ | | = | $i_{1-p}$ |
| $i_2$ | $i_{2-1}$ | $\oplus$ $i_2$ | | = | $i_{2-p}$ |
| • | • | • | • | • | • |
| • | • | • | • | • | • |
| $i_j$ | $i_{j-1}$ | $\oplus$ $i_j$ | | = | $i_{j-p}$ |
| • | • | • | • | • | • |
| • | • | • | • | • | • |
| $i_s$ | $i_{s-1}$ | $\oplus$ $i_s$ | | = | $i_{s-p}$ |

$$\tag{66}$$

where s = $2^{n-1}$-1, $L_{n-1}$, $M_{n-1}$ and $R_{n-1}$ are the left, middle and right columns respectively, $G^{n-1} = L_{n-1}$ X $M_{n-1}$ X $R_{n-1}$ represents the set of equations, $\bar{G}^{n-1} = \bar{L}_{n-1}$ x $\bar{M}_{n-1}$ $\bar{R}_{n-1}$, is the complement of $G^{n-1}$, $W_{n-1} = L_{n-1} \cap M_{n-1}$ and $|W_{n-1}| = 2^{n-2}$.

At step 102 - 110, the plurality of non-zero $2^n$ equations in the first matrix of $2^n$ equations are modified to provide a second matrix of $2^n$ equations. The equations are modified so that the modified equations collectively map the same clear text blocks as in the left column of the first matrix, but in a different order to the same unique n-bit blocks as in the right column of the first matrix, in the original order of the unmodified equations. The plurality of equations are modified in such a manner that the modified equations are not generally the sums modulo two of any number of other equations in the second matrix. The modification of the $2^n$ - 1 non-zero equations is achieved by steps 104 - 106.

Specifically at step 104, the $2^{n-3}$ mixing transforms in $\overline{W}_{n-2}$ are applied to $\bar{G}^{n-1}$. Next at step 106 the $2^{n-4}$ mixing transforms in $\overline{W}_{n-3}$ are applied are applied to $\bar{G}^{n-2}$. Next, step 108, at the application of the mixing transforms are repeatedly applied to cosets in $G^n$ until reaching $\bar{G}^2$. The number of iterations of step 108 depends upon the value for n. With n = 8, a total of five iterations of the mixing transforms are needed within steps 104 - 108 to reach $\overline{G}2.$ At step 110 $\overline{W}_1$ consists of θ and a single mixing transform, either of which is applied to $\overline{G}2$. Finally, at step 112, each clear text block to be encrypted, which is uniquely located as one of the $2^n$ n-bit numbers in the left column of the second matrix of 2n equations, is added modulo 2 to the block in the middle column of the associated equation to obtain the encrypted block in the right column of the associated equation.

Step 112 operates to obtain the final encrypted block. As with previous encryption methods described above in sections I and II, the steps of the method illustrated in Figure 19 are preferably implemented using hardwire circuitry for maximum conversion speed. Alternatively, however, a programmed microprocessor can be employed to perform the various method steps illustrated in Figure 19.

## VI. FITTED COSETS FROM DIFFERENT SUBGROUPS

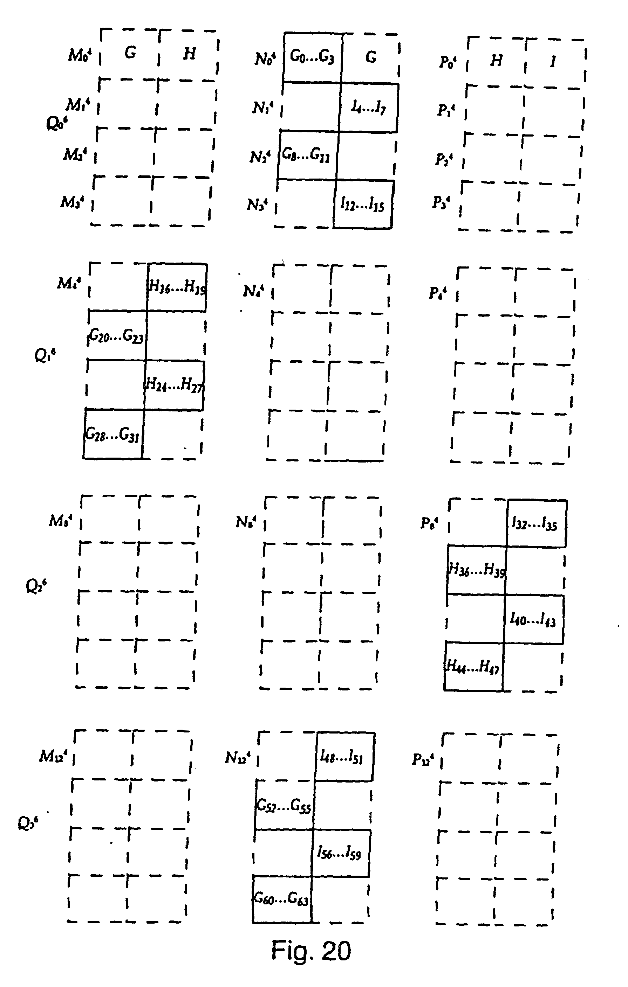

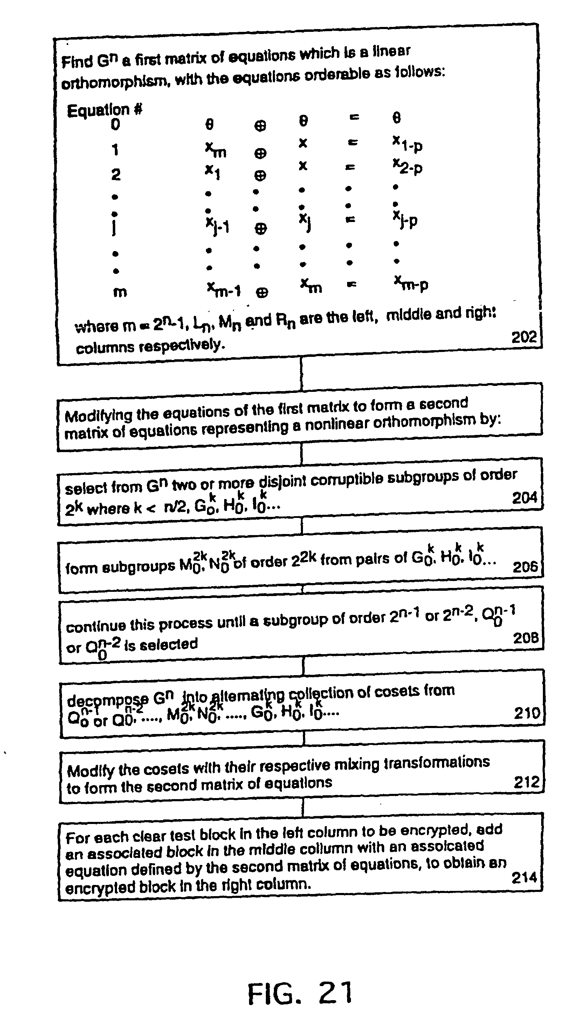

Referring to Figures 20 and 21, a second preferred encryption method of the invention will now be described.

The method of Figure 20 seeks cosets from different subgroups and, hence, with different groups of mixing transforms, but which still can be fitted together somewhat like a jigsaw puzzle.

The method of Figures 20 and 21 use fitted cosets from different subgroups to perform encryption. Initially a general description of the method is provided, then, a detailed description of the method with reference to Figure 21 is provided.

If $G_0^k$ and $H_0^k$ are two disjoint corruptible subgroups of order $2^k$ where $k < \frac{n}{2}$, of a maximal linear orthomorphism on the $n$-bit numbers, $G_0^k$ and $H_0^k$ can be combined into one subgroup of order $2^{2k}$ with two different coset decompositions and two different groups of mixing transformations. Let $M_0^{2k}$ be the subgroup generated by the combined generators of $G_0^k$ and $H_0^k$. $M_0^{2k} / G_0^k$ and $M_0^{2k} / H_0^k$ are two coset decompositions, each isomorphic to a subgroup of $Z_2^n$ of order $2^k$, and, hence, to each other. Pairs of cosets consisting of one each from $M_0^{2k} / G_0^k$ and $M_0^{2k} / H_0^k$ will share exactly one row. If they had more than one in common, then it would not be possible for $G_0^k \cap H_0^k = \{\theta\}$ as the sum of a shared pair would be in $G_0^k \cap H_0^k$. If one pair of cosets shared no row, another pair would have to share more than one row. Since $G_0^k$ and $H_0^k$, are disjoint, so are the corresponding groups of mixers although the group of mixing transformations corresponding to $M_0^{2k}$ would have additional members if some rows in $G_0^k$ are adjacent to some in $H_0^k$. Next, the complete orthomorphism $Z_2^n \times Z_2^n \times Z_2^n$ can be decomposed into cosets of $M_0^{2k}$ which, in turn, can be decomposed into alternate collections of cosets from $G_0^k$ and $H_0^k$. Depending on the block size n, this can be extended to more than two coset decompositions. If instead of 2, some number c disjoint corruptible subgroups of order $2^k$ are chosen, then $K \leq \frac{n}{c}$.

The following is an example for $n = 8$, where the maximal length linear orthomorphism contains 255 equations or rows besides the identity.

The example is graphically illustrated in Figure 20 and in Table III below. Figure 20 graphically illustrates multiple coset decomposition for a maximal length linear orthomorphism of binary numbers of block numbers of block size n = 8. Table III illustrates the decomposition of 16-row into 4-row cosets for a maximal length linear orthomorphism for block size 8.

**Table III**

Select three disjoint corruptible sub-groups of order 4: $G_0^2$, $H_0^2$, and $I_0^2$. Each has two consecutive rows, their sum and the identity row. Each subgroup establishes a unique coset decomposition of the complete linear array consisting of the subgroup and 63 cosets, each consisting of four equations. The subgroups of order 4 can be combined to define three subgroups of order 16, $M_0^4$ from $G_0^2 \cup H_0^2 \cup N_0^4$ from $G_0^2 \cup H_0^2$, and $P_0^4$ from $H_0^2 \cup I_0^2$. The subgroups of order 16 will not be disjoint. Finally, the subgroups can be combined into a subgroup $Q_0^6$ of order 64 from $G_0^2 \cup H_0^2 \cup I_0^2$. This subgroup and its three cosets $Q_1^6$, $Q_2^6$, and $Q_3^6$ form a decomposition of the complete linear orthomorphism. As shown in Figure 20 each of the 64-row Q cosets can be decomposed three ways into four cosets each of 16 rows. For example, the 64 rows of $Q_1^6$ can be decomposed into $\{M_4^4, M_5^4, M_6^4, M_7^4\}$, or $\{N_4^4 \ldots N_7^4\}$, or $\{P_4^4 \ldots P_7^4\}$. If the $M$ decomposition is chosen, then, for example, $M_4^4$ can be decomposed into four cosets of four rows each, either $\{G_{16}^2, G_{17}^2, G_{18}^2, G_{19}^2\}$ or $\{H_{16}^2, H_{17}^2, H_{18}^2, H_{19}^2\}$ (See Table III). Finally, mixing transformations can be applied to complete the process of constructive corruption.

If desired, all equations in the linear array can be modified this way. While somewhat more complicated than the sequential approach in Section V, the present method has produced better results in terms of non-linearity as measured by Equation 9.

Specifically referring to Figure 21, steps of a preferred method for encrypting data employing fitted cosets from different subgroups will now be described. As with the method described in section V above, the present method achieves encryption by substituting for any one of $2^n$ unique clear text blocks of n-bit binary numbers, an associated unique encrypted block of n-bit binary numbers. Initially, at step 202, a first matrix $G^n$ of $2^n$ equations is found. This method step is identical to step 102 of Figure 19 and will not be described in further detail herein.

At step 204, two or more mutually disjoint corruptible subgroups $G_0^k$, $H_0^k$, $I_0^k$ ... of order $2^k$ are selected from $G^n$, where $k < \frac{n}{2}$. Next at step 206 subgroups, not necessarily disjoint, $M_0^{2k}$, $N_0^{2k}$, ...of order $2^{2k}$ are formed from pairs of $G_0^k$, $H_0^k$, $I_0^k$ ... This process is continued until a subgroup $Q_0^{n-1}$ or $Q_0^{n-2}$ is selected at step 208, accordingly as n is even or odd, $G^n$ is decomposed, at step 210, into an alternating collection of cosets from $Q_0^{n-1}$ or $Q_0^{n-2}, ..., M_0^{2k}, N_0^{2k}, ...,$ $G_0^k, H_0^k, I_0^k$ ... where each subgroup and coset is decomposed into successively smaller cosets. At step 212, the selected cosets are modified by their respective mixing transforms. The resulting second matrix of $2^n$ equations is the nonlinear orthomorphism.

Finally, at step 214, each clear text block to be encrypted, which is uniquely located as one of the $2^n$ n-bit numbers in the left column of the second matrix of $2^n$ equations is added modulo 2 to the block in the middle column of the associated equation to obtain the encrypted block in the right column of the associated equation. Final step 214 is in accordance with the encryption steps of methods described above and will not be set forth further herein.

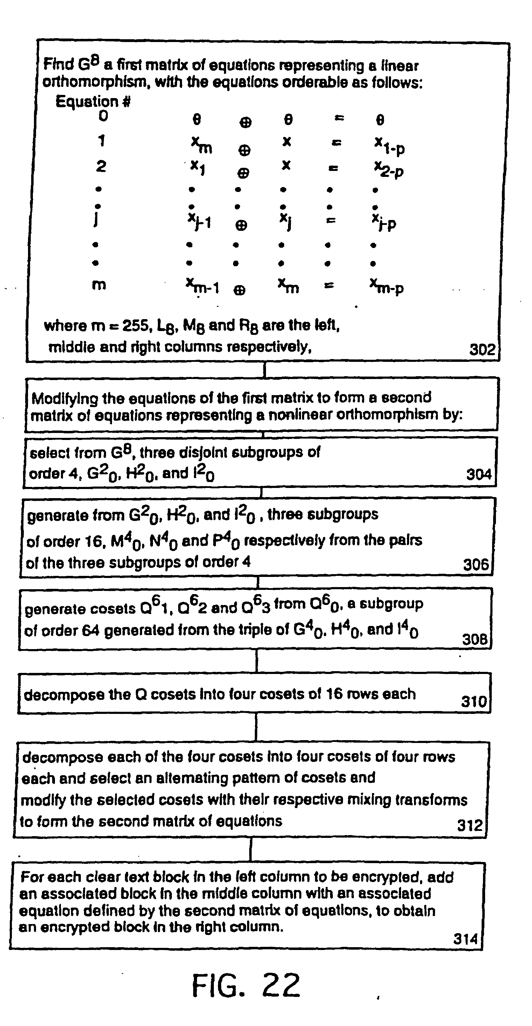

Figure 22 illustrates the method of Figure 21 for an encryption wherein n = 8. Initially, at step 302, a first matrix $G^8$ of 256 equations is determined. All of the equations in the first matrix of the 256 equations are characterized by the sum modulo 2 of any number of the equations also being one of the equations in the first matrix. One of the set of 256 is the identity equation $\Theta \oplus \Theta = \Theta$. The remaining 255 equations are orderable as illustrated in Equation 11b. However, whereas these equations represent a general n-bit system, the equations generated by step 302 of the method of Figure 22 correspond to an 8-bit system. Hence, $L_8$, $M_8$ and $R_8$ are the left, middle and right columns respectively. $G^8$ = $L_8$ X $M_8$, X $R_8$.

Steps 304 - 314 act to modify a plurality of the non-zero equations in the first matrix of 256 equations to provide a second matrix of 256 equations. The equations are modified so that the modified equations collectively map the clear text blocks in a nonlinear manner to the encrypted blocks in contrast to the linear manner by which this is done by the corresponding unmodified equations. The plurality of equations are modified in such a manner that the modified equations are not generally the sums modulo 2 of any number of the other equations in the second matrix of equations.

At step 304, three disjoint corruptible subgroups of order 4 are selected from $G^8$. The three disjoint corruptible subgroups are identified by $G_0^2$, $H_0^2$, and $I_0^2$. At step 306, three subgroups of order 16 are generated from the pairs of disjoint corruptible subgroups of order 4. The three subgroups of order 16 are identified as $M_0^4$, $N_0^4$, and $P_0^4$. $M_0^4$ is derived from $G_0^2 \cup H_0^2$. $N_0^4$ is derived from $G_0^2 \cup I_0^2$. $P_0^4$ is derived from $H_0^2 \cup I_0^2$.

At step 308, a subgroup $Q_0^6$ of order 64 is derived from the union of the three disjoint corruptible subgroups $G_0^2 \cup H_0^2 \cup I_0^2$. At 310, cosets $Q_1^6, Q_2^6$, and $Q_3^6$ are generated. The cosets 16 rows are decomposed into 4 cosets of each at step 312. Next, at step 314, each of the four cosets 16 rows are decomposed into four cosets of four rows each. At step 316 the cosets are transformed by their respective mixing transforms as shown in Section III above.

Finally, at step 318, each clear text block in the left column to be encrypted, is added modulo 2 to the corresponding block in the middle column of the associated equation of the second matrix of 256 equations to obtain the encrypted block in the right column.

As with preceding embodiments, the methods illustrated in Figures 21 and 22 are implemented using the block substitution devices described above, but modified to perform a particular manipulations of the blocks set forth herein. Preferably, hardwired circuitry is provided to perform the manipulations. However, a programmed computer or microprocessor can alternatively be employed.

## VII. COSETS OF DISJOINT, CORRUPTIBLE SUBGROUPS

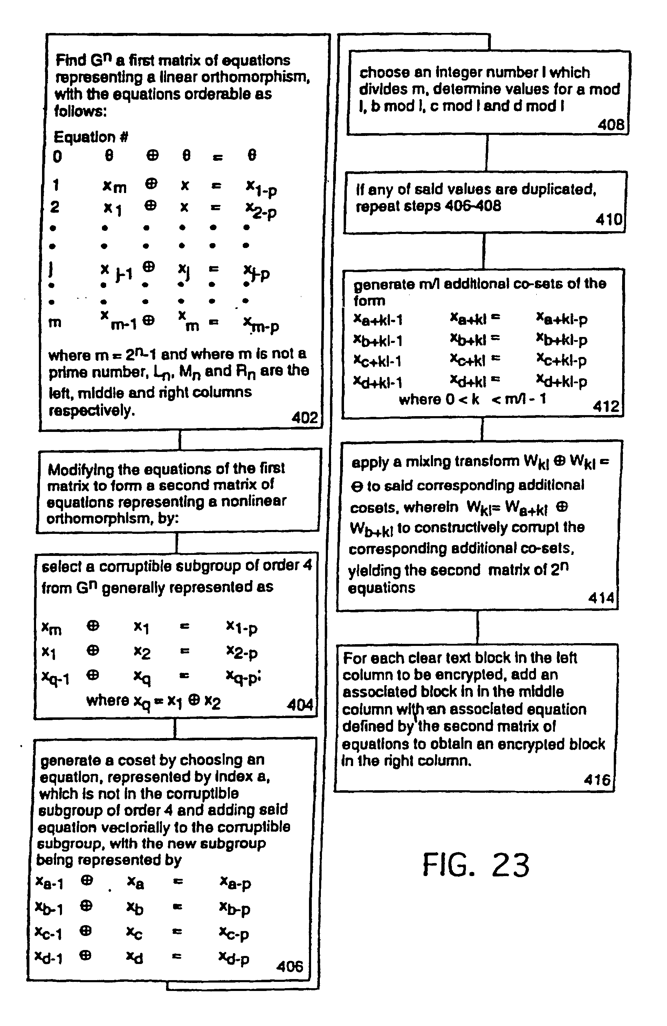

With reference to Figure 23, a third preferred method for encrypting data will now be described. The method employs cosets of disjoint corruptible subgroups. The method will be initially described in general, mathematical terms, then specific steps of the method will be described with reference to the figures.

If two subgroups are disjoint, except for the identity row, then they will also have disjoint subgroups of mixing transformations. Considering a pair of subgroups of order 4, then a corresponding pair of cosets can have, at most, one row in common. If a collection of such disjoint cosets is assembled, each will be corrupted with a different mixing transformation. This raises two fundamental issues:

    *a*. How many such disjoint corruptible cosets can be found in a given linear orthomorphism?
    *b*. What group structure is there in the corresponding set of mixing transformations?

To make a good nonlinear orthomorphism, that is, to ensure that in Equation 39, $N(x, y)$ has a uniform distribution over $Z_2^n$, it is necessary to corrupt enough equations and to have a set of mixing transformations that do not frequently cancel each other out.

In a maximal length linear orthomorphic array of equations, two subsets of $k$ equations, each having the same relative spacing, are defined as being "similar". The middle columns of two such subsets have the form:

$$\left.\begin{array}{cc} x_a & x_{a+l} \\ x_b & x_{b+l} \\ x_c & x_{c+l} \\ \vdots & \vdots \end{array}\right\} \; k \text{ rows}$$

$$(67)$$

for some integer $l$. Maximal subgroups are examples of similar subsets.

Proposition 8: If $G_i^2$ is a coset of order $2^2 = 4$ in the coset decomposition defined by a corruptible subgroup $G_0^2$ of order 4 and $H_{i+d}^2$ is a set of four equations similar to, but disjoint from, $G_i^2$, then, $H_{i+d}^2$ is a coset in the decomposition defined by another corruptible subgroup $H_0^2$ where $G_0^2 \cap H_0^2 = \{\theta\}$.

The foregoing proposition is established by the following: A corruptible subgroup of order 4 has the form:

$$\theta \oplus \theta = \theta$$

$$x_{j-1} \oplus x_j = x_{j-p}$$

$$x_j \oplus x_{j+1} = x_{j+1-p}$$

$$x_{q-1} \oplus x_q = x_{q-p} \qquad (68)$$

where $x_q = x_j \oplus x_{j+1}$. The corresponding mixing transform is $x_j \oplus x_j = \theta$. A coset is generated by adding a row, not in the subgroup, to each row in the subgroup, to obtain:

$$x_{a-1} \oplus x_a = x_{a-p}$$

$$\left(x_{j-1} \oplus x_{a-1}\right) \oplus \left(x_j \oplus x_a\right) = \left(x_{j-p} \oplus x_{a-p}\right)$$

$$\left(x_j \oplus x_{a-1}\right) \oplus \left(x_{j+1} \oplus x_a\right) = \left(x_{j+1-p} \oplus x_{a-p}\right)$$

$$\left(x_{q-1} \oplus x_{a-1}\right) \oplus \left(x_q \oplus x_a\right) = \left(x_{q-p} \oplus x_{a-p}\right)$$

$$(69)$$

The sum of the first two numbers in the middle column of the coset, $x_a \oplus (x_j \oplus x_a) = x_j$, regains the mixing transform. $x_j \oplus x_a = x_b$ for some row of index $b$. Similarly, $x_{j+1} \oplus x_a = x_c$ and $x_q \oplus x_a = x_d$ for some indices $c$ and $d$. If all the indices are shifted by some integer $l$, a similar set of equations is formed:

$$x_{a+l-1} \oplus x_{a+l} = x_{a+l-p}$$

$$x_{b+l-1} \oplus x_{b+l} = x_{b+l-p}$$

$$x_{c+l-1} \oplus x_{c+l} = x_{c+l-p}$$

$$x_{d+l-1} \oplus x_{d+l} = x_{d+l-p} \tag{70}$$

Before shifting the indices, $x_a \oplus x_b = x_j$, the original mixer. However, because of the structure of the linear orthomorphic array which is generated by a linear recursive function, $x_{a+l} \oplus x_{b+l} = x_k \neq x_j$, for some index $k$. Adding row $a + l$ to each of the other three produces a new corruptible subgroup:

$$\theta \oplus \theta = \theta$$

$$x_{k-1} \oplus x_k = x_{k-p}$$

$$x_k \oplus x_{k+1} = x_{k+1-p}$$

$$x_{r-1} \oplus x_r = x_{r-p} \tag{71}$$

where $x_r = x_k \oplus x_{k+1}$. The three non-zero rows will be displaced from their counterparts in $G_0^2$ by a difference in index of $k - j$.

With the foregoing general description of the method in mind, the method will now be described with reference to Figure 23. As with the previously described methods of sections V and VI, the method of Figure 23 operates to encrypt a set of $2^n$ unique clear text blocks of n-bit binary numbers by substituting therefore associated unique encrypted blocks of n-bit binary numbers. Also as with the prior methods, encryption begins, step 402 by finding a first matrix $G^n$ of $2^n$ equations representing a linear orthomorphism with each equation representing the modulo 2 additions of one the $2^n$ clear text blocks in the left column with a unique one of the $2^n$ n-bit numbers in the middle column to provide an associated unique n-bit block in the right column with all of the equations in the first matrix of $2^n$ equations characterized by the vector sum modulo two of any number of the equations also being one of the equations of the first matrix. Equations include the null equation with the remaining $2^n - 1$ being orderable as illustrated in Equation 11b above. At step 404 - 414, a plurality of non-zero $2^n - 1$ equations in the first matrix are modified to provide a second matrix of $2^n - 1$ equations.

At step 304, a corruptible subgroup of order four is selected from $G^n$. Such a subgroup of order four is generally represented as:

$$\Theta \oplus \Theta = \Theta$$

$$x_m \oplus x_1 = x_{1-p}$$

$$x_1 \oplus x_2 = x_{2-p}$$

$$x_{q-1} \oplus x_q = x_{q-p}$$

where $x_q = x_1 \oplus x_2$.

At step 306, a coset is generated by choosing an equation, represented by index a, which is not in the corruptible subgroup of order four. The equation is added vectorially to the corruptible subgroup to yield a coset represented by:

$$x_{a-1} \oplus x_a = x_{a-p}$$

$$x_{b-1} \oplus x_b = x_{b-p}$$

$$x_{c-1} \oplus x_c = x_{c-p}$$

$$x_{d-1} \oplus x_d = x_{d-p}$$

where $x_b = x_a \oplus x_1$, $x_c = x_a \oplus x_2$, $x_d = x_a \oplus x_q$. In the case where m is not a prime number, choose an integer I which divides m.

Thereafter, at step 308, values are determined for values a mod 1, b mod 1, c mod 1 and d mod 1. At 310, if any of the values determined at step 308 are duplicated, then steps 306, and 308 are repeated with an equation of different index. Once a set of values are achieved wherein there are no duplications, step 312 is performed wherein m/l additional cosets are generated. The additional cosets have the form

$$x_{a+kl-1} \oplus x_{a+kl} = x_{a+kl-p}$$

$$x_{b+kl-1} \oplus x_{b+kl} = x_{b+kl-p}$$

$$x_{c+kl-1} \oplus x_{c+kl} = x_{c+kl-p}$$

$$x_{d+kl-1} \oplus x_{d+kl} = x_{d+kl-p}$$

where $0 \leq k \leq \frac{m}{l} - 1$.

At step 314, the mixing transforms are applied to the corresponding cosets. The mixing transform is represented by $w_{kl} \oplus w_{kl} = \Theta$ wherein $w_{kl} = W_{a+kl} \oplus X_{b+kl}$. Each mixing transform is applied to constructively corrupt the corresponding coset, thereby yielding the second matrix of $2^n$ equations.

Finally, at step 316, each clear text block in the left column to be encrypted, is added modulo two to the corresponding block in the middle column of the associated equation of the second matrix of $2^n$ equations to obtain the encrypted block in the right column. Final step 316 is similar to previous final steps described above with reference to the other preferred embodiments of the invention.

Preferably, hardwired circuitry is provided for performing the various steps set forth in Figure 23. However, programmed computers or microprocessors may alternatively be employed.

As a specific example of the method of Figure 23, consider the orthomorphism in Equation 51. Let $G_0^2$ be:

$$
\begin{aligned}
0 &\quad\quad \theta \;\oplus\; \theta = \theta \\
1 &\quad BEFH \;\oplus\; A = ABEFH \\
2 &\quad\quad A \;\oplus\; B = AB \\
234 &\quad ABEFH \oplus AB = EFH
\end{aligned}
$$

$$(72)$$

The mixing transform is $A$. Use row 7 to generate a coset:

$$7 \qquad F \oplus \ G = FG$$
$$50 \qquad BEH \oplus AG = ABEGH$$
$$226 \qquad AF \oplus \ BG = ABFG$$
$$139 \quad ABEH \oplus ABG = EGH$$

$$(73)$$

From the middle column, the mixer is $x_7 \oplus x_{50} = G \oplus AG = A$. Displace the indices by $l = 5$ to obtain:

$$12 \qquad AEFGH \oplus ABCH \ = BCEFG$$
$$55 \qquad AFGH \ \oplus ABCFH \ = BCG$$
$$231 \quad AEGH \ \oplus ABCGH \ = BCE$$
$$144 \quad AGH \qquad \oplus ABCFGH = BCF$$

$$(74)$$

The corresponding subgroup can be found by adding row 12 to the other 3:

$$0 \qquad \theta \oplus \theta \ = \theta$$
$$6 \qquad E \oplus F \ = EF$$
$$7 \qquad F \oplus G \ = FG$$
$$239 \quad EF \oplus FG = EG$$

$$(75)$$

From either the new coset or the corresponding subgroup, the new mixing transform is $F \oplus F = \theta$.

This process can be applied to subgroups of larger order but is particularly easy to use for constructive corruption with cosets of order 4. A procedure is as follows, choose an arbitrary corruptible subgroup of order 4. Without loss of generality the subgroup is:

$$\theta \oplus \theta = \theta$$

$$x_m \oplus x_1 = x_{1-p}$$

$$x_1 \oplus x_2 = x_{2-p}$$

$$x_{q-1} \oplus x_q = x_{q-p} \qquad (76)$$

Assume initially that $m = 2^n-1$ is not a prime (that is not a Mersenne prime). Choose some integer $l$ which divides $m$ and use this as the shift of indices as in the proof of Prop. 8 above. As in that same proof, choose an equation with some index $a$, which is not in the subgroup. Adding it vectorially to each equation in Equation 76, one obtains a coset:

$$x_{a-1} \oplus x_a = x_{a-p}$$

$$x_{b-1} \oplus x_b = x_{b-p}$$

$$x_{c-1} \oplus x_c = x_{c-p}$$

$$x_{d-1} \oplus x_d = x_{d-p} \tag{77}$$

Next, determine the four values,
$a \bmod l$, $b \bmod l$, $c \bmod l$, and $d \bmod l$. If there is any duplication, reject this coset and try another, since finding successive similar cosets by using multiples of $l$ as an increment to the indices would lead to a conflict. For example, assume that $a \equiv b \bmod l$. Then, for some integer $g$, $a = b + gl$ so that some subsequent coset would have the same row as a previous coset. Assume now that $a$, $b$, $c$, and $d$ are distinct mod $l$. Generate $\frac{m}{l}$ similar cosets of the form:

$$x_{a+kl-1} \oplus x_{a+kl} = x_{a+kl-p}$$

$$x_{b+kl-1} \oplus x_{b+kl} = x_{b+kl-p}$$

$$x_{c+kl-1} \oplus x_{c+kl} = x_{c+kl-p}$$

$$x_{d+kl-1} \oplus x_{d+kl} = x_{d+kl-p} \tag{78}$$

where $0 \le k \le \frac{m}{l} - 1$. This will give a total of $\frac{4m}{l}$ equations in the linear orthomorphism as candidates for constructive corruption. In each coset, the mixing transform is $w_{kl} \oplus w_{kl} = \theta$ where $w_{kl} = x_{a+kl} \oplus x_{b+kl}$. From equations 76 and 77 $w_0 = x_a \oplus x_b = x_1$ and thus $w_{kl} = x_{1+kl}$. Thus, the set of mixers is $W = \{x_i | i \equiv 1 \bmod l\}$ and $|W| = \frac{m}{l}$.

Proposition 9: It can be established that for a set of $\frac{m}{l}$ similar corruptible cosets of order 4, if $3l \, m$, then for any pair $x_i, x_j \, \varepsilon \, W \, x_i \oplus x_j \, W$. Also, it can be established that if $3|m$ and $x_i \oplus x_j = x_k$, where all are in $W$, then $j - 1 \equiv k - j \equiv \frac{m}{3} \bmod m$.

The forgoing proposition is established by the following: $W \cup \theta$ is not a group. If it were, being a subgroup of $Z_2^n$, $|W \cup \Theta| = \frac{m}{l} + 1 = 2^k$ for some positive integer $k$. In that case, $\frac{2^n-1}{l} + 1 = 2^k$ and $2^k = \frac{l-1}{l-2^{n-k}}$. Even if $l - 2^{n-k} | l - 1$ the ratio must be odd while $2^k$ is even for $k > 0$. Without loss of generality, assume $x_1 \oplus x_{1+gl} = x_{1+hl}$ for some integers $g$ and $h$, that is, $x_1$, $x_{1+gl}$ and $x_{1+hl} \, \varepsilon \, W$. If $hl > m$, then $hl \equiv cl \bmod m$, and $cl < m$ since $l|m$. Keeping in mind that the subscripts are indices of rows in the linear orthomorphic array, it is also true that $x_{1+gl} \oplus x_{1+2gl} = x_{1+gl+hl}$. Assuming that $3lm$, combine $x_{1+gl} \oplus x_{1+2gl} = x_{1+gl+hl}$ with $x_l \oplus x_{1+gl} = x_{1+hl}$ to obtain:

$$x_1 \oplus x_{1+2gl} = x_{1+hl} \oplus x_{1+gl+hl} = x_{1+2hl} \tag{79}$$

More generally, for all integers $j$:

$$x_1 \oplus x_{1+jgl} = x_{1+jhl} \tag{80}$$

Thus, $x_1 \oplus x_k \, \varepsilon \, W$ for all $x_k \, \varepsilon \, W$. The same reasoning can be applied to any other $x_i \, \varepsilon \, W$ in place of $x_l$. This would imply that $W \cup \theta$ is a group, which is a contradiction. Now, suppose $3|m$. Consider a possible sum:

$$x_1 \oplus x_{1+\frac{m}{3}} = x_{1+\frac{2m}{3}} \tag{81}$$

If we use the same procedure which led to Equation 80

$$x_{1+\frac{m}{3}} \oplus x_{1+\frac{2m}{3}} = x_{1+\frac{3m}{3}} = x_1 \tag{82}$$

Thus, we obtain the same equation. So this cannot be used to generate a group.

The practical consequences of this are that if two equations are in the same coset, their sum will be elsewhere. The equations will have a common mixer, say $w_i$, for constructive corruption. That sum will be one of the three nontrivial equations in the subgroup of Equation 76. Noting that $S(x) = S'(x) \oplus w_i$ where S'(x) is the original mapping from the linear orthomorphism, and $S(x)$ is the resultant mapping after constructive corruption, if that sum equation is not in one of the other corruptible cosets, then from Equation 4:

$$N(x,y) = w_i \oplus w_i \oplus \theta = \theta \tag{83}$$

and the triple will be linear. If the sum equation is in another of the corruptible cosets, it will have as mixer some $w_j \neq w_i$ so that:

$$N(x,y) = w_i \oplus w_i \oplus w_j = w_j \tag{84}$$

If two equations from different cosets are added, with respective mixers $w_i$ and $w_j$, then there are three possibilities, accordingly as the sum . equation is not in a coset, is in one of the original cosets, or is in a third coset:

$$N(x,y) = w_i \oplus w_j \oplus \theta = w_i \oplus w_j \neq \theta$$

$$N(x,y) = w_i \oplus w_j \oplus w_i = w_j \neq \theta$$

$$N(x,y) = w_i \oplus w_j \oplus w_k \neq \theta \qquad \textit{if 3 or l/m} \tag{85}$$

If two equations, one from a coset and one not in any of the cosets, are added, there are three possibilities as in the previous case:

$$N(x,y) = w_i \oplus \theta \oplus \theta = w_i \neq 0$$

$$N(x,y) = w_i \oplus \theta \oplus w_i = \theta$$

$$N(x,y) = w_i \oplus \theta \oplus w_j = w_i \oplus w_j \neq \theta \tag{86}$$

Lastly, if two equations are added, neither of which is in one of the corruptible cosets, then there are two possibilities, accordingly as their sum is not/or is in a coset:

$$N(x,y) = \theta \oplus \theta \oplus \theta = \theta$$

$$N(x,y) = \theta \oplus \theta \oplus w_i = w_i \neq \theta \tag{87}$$

To minimize residual linearity, it is clear from the above that two conditions are required, namely, that the residual set of equations not included in the cosets be small and contain no subgroups. As an example, consider the same linear orthomorphism in Equation 51 on 8-bit binary numbers, and the subgroup and coset in Equations 72 and 73:

$$
\begin{array}{lll}
\textbf{Row} & & \\
\textbf{Index} & & \\
7 & F \oplus G & = FG \\
50 & BEH \oplus AG & = ABEGH \\
226 & AF \oplus BG & = ABFG \\
139 & ABEH \oplus ABG & = EGH \\
\end{array}
\tag{88}
$$

Again we will apply $l = 5$ as the increment to the row indices to generate a sequence of cosets. Note that:

$$7 \equiv 2 \bmod 5$$

$$50 \equiv 0 \bmod 5$$

$$226 \equiv 1 \bmod 5$$

$$139 \equiv 4 \bmod 5 \tag{89}$$

Since $m = 2^n - 1 = 255 = 5 \cdot 51$, $l|m$ and the set of row indices above, when incremented by $l = 5$, will never overlap, i. e., $7 + 5i \neq 50 + 5j$ for all integers $i, j$ and the same for the other pairs. Thus, this process will yield 51 cosets of four equations each, a total of 204 equations for modification by constructive corruption. As shown in the proof of Prop. 8, the mixer for the above coset is $G \oplus AG = A$, that is, the sum of the middle terms of the first two equations in the coset. That is the middle term of the first non-zero row in the linear orthomorphism:

$$x_m \oplus x_1 = x_{1-p}$$

or

$$BEFH \oplus A = ABEFH \tag{90}$$

Thus, designating coset $5k$ as the coset whose first equation is:

$$x_{6+5k} \oplus x_{7+5k} = x_{7+5k-p} \tag{91}$$

The corresponding mixing transform is:

$$w_{5k} = x_{7+5k} \oplus x_{50+5k} = x_{1+5k}. \qquad (92)$$

So, including the additive identity, $W = \{\theta, x_1, x_6 \cdots, x_{251}\}$ and $|W| = 52$. Since $m = 255 = 3 \cdot 85$, $3 | m$, and $x_1 \oplus x_{86} = x_{171}$. As in the proof of Prop. 9, this is the only such triple of numbers all in $W$. In this example:

$$x_1 = A, \; x_{86} = ADH, \text{ and } x_{171} = DH. \qquad (93)$$

There are, of course, many ways to select cosets from different sub-groups. For example, choose $l = 17$ in the same linear orthomorphism since $m = 255 = 15 \cdot 17$. Consider three cosets (shown below) from three distinct subgroups :

| Row Index | Coset | | | Row Index | Subgroup | | |
|---|---|---|---|---|---|---|---|
| 4 | $C$ | $\oplus \; D$ | $= CD$ | 0 | $\theta$ | $\oplus \; \theta$ | $= \theta$ |
| 75 | $CDEFGH$ | $\oplus \; ACDEH$ | $= AFG$ | 251 | $DEFGH$ | $\oplus \; ACEH$ | $= ACDFG$ |
| 37 | $AEH$ | $\oplus \; ABCG$ | $= BCEGH$ | 252 | $ACEH$ | $\oplus \; ABCDG$ | $= BDEGH$ |
| 142 | $ADFG$ | $\oplus \; BEGH$ | $= ABDEFH$ | 229 | $ACDFG$ | $\oplus \; BDEGH$ | $= ABCEFH$ |
| | | | | | | | |
| 9 | $H$ | $\oplus \; ACFG$ | $= ACFGH$ | 0 | $\theta$ | $\oplus \; \theta$ | $= \theta$ |
| 80 | $BEF$ | $\oplus \; CFG$ | $= BCEG$ | 1 | $BEFH$ | $\oplus \; A$ | $= ABEFH$ |
| 42 | $AH$ | $\oplus \; ABCFG$ | $= BCFGH$ | 2 | $A$ | $\oplus \; B$ | $= AB$ |
| 147 | $ABEF$ | $\oplus \; BCFG$ | $= ACEG$ | 234 | $ABEFH$ | $\oplus \; AB$ | $= EFH$ |
| | | | | | | | |
| 14 | $ABDFG$ | $\oplus \; BCEGH$ | $= ACDEFH$ | 0 | $\theta$ | $\oplus \; \theta$ | $= \theta$ |
| 85 | $ABDEFG$ | $\oplus \; BCEFGH$ | $= ACDH$ | 6 | $E$ | $\oplus \; F$ | $= EF$ |
| 47 | $ABDG$ | $\oplus \; BCEH$ | $= ACDEGH$ | 7 | $F$ | $\oplus \; G$ | $= FG$ |
| 152 | $ABDEG$ | $\oplus \; BCEFH$ | $= ACDFGH$ | 239 | $EF$ | $\oplus \; FG$ | $= EG$ |

$$(94)$$

$$\begin{array}{c} \textbf{Mixers} \\ \\ \begin{array}{lcl} 4 & \equiv & 4 \quad \text{mod } 17 \\ 75 & \equiv & 7 \quad \text{mod } 17 \\ 37 & \equiv & 3 \quad \text{mod } 17 \\ 142 & \equiv & 6 \quad \text{mod } 17 \end{array} \qquad x_{251} = ACEH \\ \\ \begin{array}{lcl} 9 & \equiv & 9 \quad \text{mod } 17 \\ 80 & \equiv & 12 \,\text{mod } 17 \\ 42 & \equiv & 8 \quad \text{mod } 17 \\ 147 & \equiv & 11 \quad \text{mod } 17 \end{array} \qquad x_1 = A \\ \\ \begin{array}{lcl} 14 & \equiv & 14 \quad \text{mod } 17 \\ 85 & \equiv & 0 \quad \text{mod } 17 \\ 47 & \equiv & 13 \quad \text{mod } 17 \\ 152 & \equiv & 16 \quad \text{mod } 17 \end{array} \qquad x_6 = F \end{array}$$

$$(95)$$

Since all row indices are different mod 17, there will be no overlap using increment $l$ = 17. This process will generate $3 \times 15 = 45$ cosets or 180 equations as candidates for constructive corruption. The set of mixers

$$W = \{\theta, x_1, x_{18}, \cdots, x_{239}; x_6 x_{23}, \cdots x_{244};$$

$$x_{13}, x_{30}, \cdots, x_{251}\} \tag{96}$$

and

$$|W| = 46. \tag{97}$$

There are many other possibilities. For example, one could use the subgroup of order 8 in Equation 52. Its cosets are completely corruptible, *i.e.*, they have a group a four mixing transformations. Applying Prop. 7, one can select a coset of eight equations, Equation 53 of which six are to be non-linearized, as follows:

Row
Index                                   Mixer

$$
\begin{array}{llll}
6 & E \oplus F & = EF & x_0 = \theta \\
169 & AE \oplus BF & = ABEF & x_3 = C \\
95 & ACE \oplus BDF & = ABCDEF & x_{235} = BC \\
215 & CE \oplus DF & = CDEF & x_2 = B \\
121 & ABE \oplus BCF & = ACEF & x_3 = C \\
155 & BE \oplus CF & = BCEF & x_0 = \theta \\
91 & ABCE \oplus BCDF & = ADEF & x_{235} = BC \\
209 & BCE \oplus CDF & = BDEF & x_2 = B
\end{array}
$$

(98)

Using an increment $l = 17$, one can obtain 15 disjoint sets of six rows each from:

Row
Index                              Mixer

$$
\begin{array}{lll}
169 & \equiv 16 \bmod 17 & x_3 \\
95 & \equiv 10 \bmod 17 & x_{235} \\
215 & \equiv 11 \bmod 17 & x_2 \\
121 & \equiv 2 \bmod 17 & x_3 \\
91 & \equiv 13 \bmod 17 & x_{235} \\
209 & \equiv 5 \bmod 17 & x_2
\end{array}
$$

(99)

Shifting row indices by 7, one can obtain 15 more disjoint sets of six rows each from:

Row
Index                                Mixer

$$
\begin{array}{lll}
176 & \equiv 6 \bmod 17 & x_{10} \\
102 & \equiv 0 \bmod 17 & x_{242} \\
222 & \equiv 1 \bmod 17 & x_9 \\
128 & \equiv 9 \bmod 17 & x_{242} \\
98 & \equiv 3 \bmod 17 & x_{10} \\
216 & \equiv 12 \bmod 17 & x_9
\end{array}
$$

(100)

The combination provides 180 rows or equations for non-linearization, but the set of mixing transformations $W$ is no longer free of additive triples, so that there is some group structure among the mixers.

The process of obtaining corruptible cosets from disjoint subgroups is slightly more complicated when $2^n - 1 = m$ is a prime since there is a discontinuity when shifting the row indices across $m$. As an example, consider the block size 7 maximal length linear orthomorphism defined by the generating function:

$$x_k = x_{k-7} \oplus x_{k-5} \oplus x_{k-4} \oplus x_{k-3} \oplus x_{k-2} \oplus x_{k-1}. \tag{101}$$

As in Equation 52 one can let $\{A,B,C,D,E,F,G\}$ be an arbitrary, complete, linearly independent set of 7-bit binary numbers. As before, the notation $ABC$ is shorthand for $A \oplus B \oplus C$. A partial listing of the resulting equations is as follows:

$$
\begin{array}{lrcl}
\textbf{Row} & & & \\
\textbf{Index} & & & \\
0 & \theta \oplus \theta & = & \theta \\
1 & BCDEFG \oplus A & = & ABCDEFG \\
2 & A \oplus B & = & AB \\
3 & B \oplus C & = & BC \\
4 & C \oplus D & = & CD \\
5 & D \oplus E & = & DE \\
6 & E \oplus F & = & EF \\
7 & F \oplus G & = & FG \\
8 & G \oplus ACDEFG & = & ACDEF \\
\vdots & \vdots & & \vdots \\
126 & AFG \oplus ABCDEF & = & BCDEG \\
127 & ABCDEF \oplus BCDEFG & = & AG \\
\end{array}
\tag{102}
$$

A typical corruptible subgroup of order 4 is:

$$
\begin{array}{lrcl}
\textbf{Row} & & & \\
\textbf{Index} & & & \\
0 & \theta \oplus \theta & = & \theta \\
1 & BCDEFG \oplus A & = & ABCDEFG \\
2 & A \oplus B & = & AB \\
110 & ABCDEFG \oplus AB & = & CDEFG \\
\end{array}
\tag{103}
$$

From this one can construct the following coset

$$
\begin{array}{lllll}
\text{Row} & & & & \\
\text{Index} & & & & \\
8 & G & \oplus ACDEFG & = & ACDEF \\
91 & BCDEF & \oplus CDEFG & = & BG \\
109 & AG & \oplus ABCDEFG & = & BCDEF \\
127 & ABCDEF & \oplus BCDEFG & = & AG
\end{array}
$$

$$(104)$$

Although $5 \nmid 127$ one finds it is a possibility for incremental spacing if we find a coset with different row indices mod 5. In this case:

$$8 \equiv 3 \bmod 5$$

$$91 \equiv 1 \bmod 5$$

$$109 \equiv 4 \bmod 5$$

$$127 \equiv 2 \bmod 5 \tag{105}$$

Displacing these indices by 5, one obtains:

$$13 \equiv 3 \bmod 5$$

$$96 \equiv 1 \bmod 5$$

$$114 \equiv 4 \bmod 5$$

$$5 \equiv 0 \bmod 5 \tag{106}$$

Displacing these indices by another 15, one obtains:

$$28 \equiv 3 \bmod 5$$

$$111 \equiv 1 \bmod 5$$

$$2 \equiv 2 \bmod 5$$

$$20 \equiv 0 \bmod 5 \tag{107}$$

Displacing these indices by another 20, one obtains:

$$48 \equiv 3 \bmod 5$$

$$4 \equiv 4 \bmod 5$$

$$22 \equiv 2 \bmod 5$$

$$40 \equiv 0 \bmod 5 \tag{108}$$

Displacing these indices by another 80, one obtains:

$$1 \equiv 1 \bmod 5$$

$$84 \equiv 4 \bmod 5$$

$$102 \equiv 2 \bmod 5$$

$$120 \equiv 0 \bmod 5 \tag{109}$$

One can go one step further with a final increment of 10:

$$11 \equiv 1 \bmod 5$$

$$94 \equiv 4 \bmod 5$$

$$112 \equiv 2 \bmod 5$$

$$3 \equiv 3 \bmod 5 \tag{110}$$

This process has produced 27 disjoint cosets or 104 out of 127 rows for the constructive corruption process. The above procedure has used up all rows of indices 0 or 3 mod 5. So no further corruptible cosets exist with all different row indices. However, 15 rows of index 1 mod 5, 2 of index 2 mod 5, and 2 of index 4 mod 5 remain. The mixing transforms are the sums of the numbers in the middle columns of the first two rows in each coset, that is:

$$x_8 \oplus x_{91} = x_1, \; x_{13} \oplus x_{96} = x_6, \; \cdots, \; x_6 \oplus x_{89} = x_{126}$$

and

$$x_{11} \oplus x_{94} = x_4. \tag{111}$$

Thus the set of mixing transforms is $W = \{\theta, x_{1+5k}, x_4\}$ for $0 \leq k \leq 25$ and $|W| = 28$. Note that in this case, the conditions of Prop. 9 do not hold, that is, $l/m$ and there are some pairs in $W$ whose sums are also in $W$.

There are many other ways of selecting corruptible cosets for the non-linearization process. Mixing cosets of different orders can provide a mechanism for including almost all of the equations in the linear array but this must be balanced against the structure of the set of mixing transforms. The total number of orthomorphisms on $n$-bit numbers is not known.

## VIII. COSET DECOMPOSITIONS OF CORRUPTIBLE SUBGROUPS

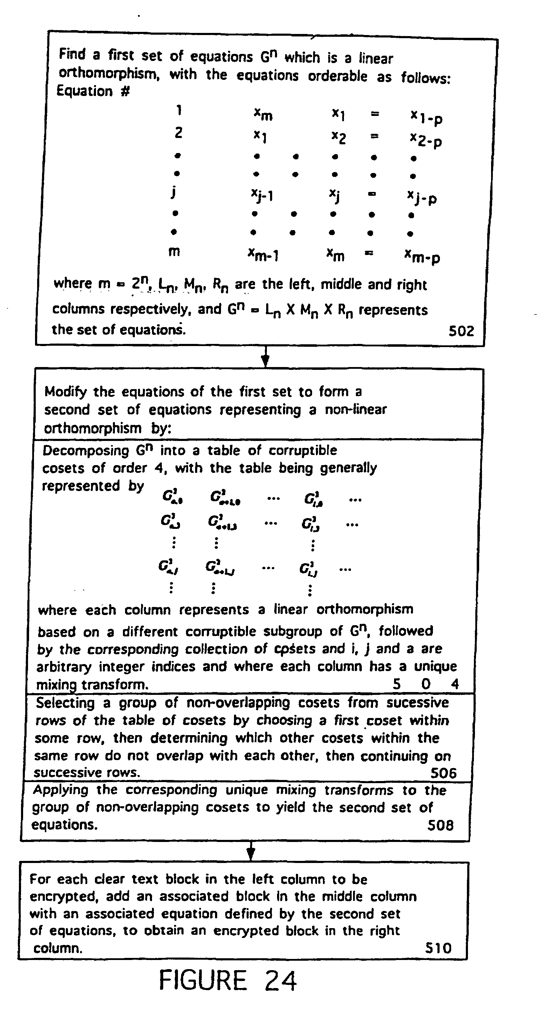

With reference to Figures 24 - 26, additional methods for encrypting data will now be described. The methods employ a coset decomposition by corruptible subgroups of order 4. The methods will first be described in general mathematical terms, then specific steps of the methods will be described with reference to Figures 24 -26. It should be noted that the following describes operations performed on sets of equations whereas the forgoing refers to matrices of equations. The terms are intended to be equivalent herein. In other words, the use of the term matrix in the forgoing is not intended to be limited soley to an algebraic matrix, but instead refers to a collection of equations.

### 1. Introduction

Let $G^n = Z_2^n \times Z_2^n \times Z_2^n$ be a maximal linear orthomorphism of block size $n$.

$$
\begin{aligned}
\Theta \quad \oplus \quad \Theta &= \Theta \\
x_m \quad \oplus \quad x_1 &= x_{1-p} \\
x_i \quad \oplus \quad x_2 &= x_{2-p} \\
&\vdots \\
x_{m-1} \oplus x_m &= x_{m-p}
\end{aligned}
\tag{112}
$$

where $m = 2^n - 1$.

equations or rows, viewed as vectors, form a group under componentwise addition modulo 2. The mapping from $G^n \to Z_2^n$ given by $x_{k-1} \oplus x_k = x_{k-p} \to x_k$ is clearly an isomorphism. Thus a subgroup of order 4 in $G^n$ can be represented by a subgroup in $Z_2^n$

$$
\{\Theta, x_i, x_j, x_i \oplus x_j\}
\tag{113}
$$

A corruptible subgroup of order 4 has two consecutive rows and any corruptible coset of order 4 is in the coset decomposition of such a subgroup. Thus one need to look only at one of the $m$ subgroups of $Z_2^n$ of the form

$$
\{\Theta, x_i, x_{i+1}, x_i \oplus x_{i+1}\}
\tag{114}
$$

The cosets corresponding to $\{\Theta, x_i, x_{i+1}, x_i \oplus x_{i+1}\} = G_{in}^2$ will be similar to cosets in the decompositions defined by similar subgroups. Without loss of generality, let $G_{1.0}^2 = \{\Theta, x_1, x_2, x_1 \oplus x_2\}$. $G_{1.0}^2$ decomposes $Z_2^n$ into $2^{n-2} - 1$ cosets plus $G_{1.0}^2$, each of four rows or numbers. The coset $G_{1k}^2 = \{x_k, x_1 \oplus x_k, x_2 \oplus x_k, x_1 \oplus x_2 \oplus x_k\}$ represents the coset in the orthomorphism with four equations whose middle terms are:

$$
x_k, x_1 \oplus x_k, x_2 \oplus x_k, x_1 \oplus x_2 \oplus x_k.
\tag{115}
$$

The mixing transform for the subgroup and all its cosets is $x, \oplus x_1 = \Theta$. An arbitrary coset corresponding to a corruptible subgroup, in this format, can be written as:

$$
\{x_a, x_b, x_c, x_d\}
\tag{116}
$$

corresponding to the subgroup $\{\Theta, x_a \oplus x_b, x_a \oplus x_c, x_a \oplus x_d\}$ where $x_a \oplus x_b$ is the mixer. A similar coset has the form:

$$\{x_{a+l}, x_{b+l}, x_{c+l}, x_{d+l}\} \qquad (117)$$

where $l$ is any integer, and $a+l$, etc., is taken modulo $2^n$. The corresponding corruptible subgroup is:

$$\{\Theta, x_{a+l} \oplus x_{b+l}, x_{a+l} \oplus x_{c+l}, x_{a+l} \oplus x_{d+l}\} \qquad (118)$$

with $x_{a+l} \oplus x_{b+l}$ being the mixer.

One can apply the forgoing by writing down all corruptible subgroups of order 4, horizontally, and then listing vertically the corresponding coset decompositions. The ith subgroup is:

$$G_{i,0}^2 = \{\Theta, x_i, x_{i+1}, x_i \oplus x_{i+1}\} \qquad (119)$$

with mixer $x_i$. A typical coset $G_{1j}^2$ from the first column, i.e., in the coset decomposition generated by $G_{10}^2$ is

$$G_{1,j}^2 = \{x_j, x_1 \oplus x_j, x_2 \oplus x_j, x_1 \oplus x_2 \oplus x_j\} \qquad (120)$$

Because of the group structure, the above sums represent other rows or equations of some index in the linear orthomorphism, for example, let:

$$x_1 \oplus x_j = x_b, \; x_2 \oplus x_j = x_c, \; x_1 \oplus x_2 \oplus x_j = x_d \qquad (121)$$

then a similar coset in the decomposition generated by $G_{i+l,0}^2$ has the form:

$$G_{1+l,j}^2 = \{x_{j+l}, x_{b+l}, x_{c+l}, x_{d+l}\}. \qquad (122)$$

The corresponding subgroup $G_{i+l,0}^2$ is obtained by adding $x_{j+l}$ to each number in the coset, or directly by taking a similar image of $G_{1,0}^2$, that is:

$$G_{1+l,0}^2 = \{\Theta, x_{1+l}, x_{2+l}, x_{1+l} \oplus x_{2+l}\} \qquad (123)$$

The mixing transformation is $x_{1+l} \oplus x_{1+l} = \Theta$. Table I provides all coset decompositions of $G^n$ by corruptible subgroups of order 4.

$$
\begin{array}{ccccc}
G_{1,0}^2 & G_{2,0}^2 & \cdots & G_{1+l,0}^2 & \cdots & G_{m,0}^2 \\
G_{1,3}^2 & G_{2,3}^2 & \cdots & G_{1+l,3}^2 & \cdots & G_{m,3}^2 \\
\vdots & \vdots & & \vdots & & \vdots \\
G_{1,j}^2 & G_{2,j}^2 & \cdots & G_{1+l,j}^2 & \cdots & G_{m,j}^2 \\
\vdots & \vdots & & \vdots & & \vdots
\end{array}
$$

### TABLE I.

In Table I, there are $m = 2^n - 1$ columns, each representing a coset decomposition. There are $2^{n-2}$ rows, each containing $m$ similar cosets. The index $j$ thus runs over some subset of $\{0,1,2,\cdots,m\}$. *WLOG,* the first coset, is formed

by adding $x_3$ to each entry in $G^2_{1,0}$ since $x_3 \notin G^2_{1,0}$, that is:

$$G^2_{1,3} = \{x_3, x_1 \oplus x_3, x_2 \oplus x_3, x_1 \oplus x_2 \oplus x_3\} \tag{124}$$

It is convenient, but not necessary, to generate each successive coset in the $G^2_{1,0}$ decomposition by selecting the $n$-bit block or row of lowest index which has not appeared in a previous coset in that decomposition.

To generate the nonlinear orthomorphism, one selects up to $2^{n-2}$ cosets which are non-overlapping, and applies the individual mixing transformations. It is desirable to select cosets from a variety of decompositions, i.e., different columns in Table I, to obtain a large set of distinct mixers.

### 2. Optimizing Nonlinearity

Nonlinearity has a negative definition, namely, not being linear. This permits a wide variation of mappings, such as, affine or piecewise linear which are not much better for cryptographic purposes than a linear mapping. In the context of $n$-bit binary numbers $Z^n_2$ under addition modulo 2, a mapping $S:Z^n_2 \to Z^n_2$ is linear if:

$$S(x \oplus y) = S(x) \oplus S(y) \text{ for all } x, y \ \varepsilon \ Z^n_2 \tag{125}$$

One can define a mapping $N:Z^n_2 \times Z^n_2 \to Z^n_2$ by:

$$N(x, y) = S(x \oplus y) \oplus S(x) \oplus S(y) \tag{126}$$

where $S$ is a bijective mapping on $Z^n_2$.

The domain of $N(x,y)$ is all of $Z^n_2 \times Z^n_2$ but the range may be a proper subset of $Z^n_2$. If $S$ is linear, then $N(x,y)$ $\equiv \Theta$. If $N(x,y) \equiv c \neq \Theta$, a constant, then $S$ is affine. If the range of $N(x,y)$ is all of $Z^n_2$ and if the values of $N(x,y)$ are more or less evenly distributed, then $S(x)$ is "very" nonlinear. Achieving a high degree of non-linearity is one goal of the methods of constructive corruption of the invention.

The mapping from the original linear orthomorphism is:

$$F(x_i) = x_{i+1-p} \tag{127}$$

After constructive corruption, the modified mapping is:

$$S(y_i) = x_{i+1-p} \tag{128}$$

where $y_i = x_i \oplus w_i$ and $w_i \oplus w_i = \Theta$ is the mixing transformation.

$$N(y_i, y_j) \equiv S(y_i) \oplus S(y_j) \oplus S(y_i \oplus y_j)$$
$$y_k = y_i \oplus y_j = (x_i \oplus w_i) \oplus (x_j \oplus w_j)$$
$$= (x_i \oplus x_j) \oplus (w_i \oplus w_j) = (x_k \oplus w_k)$$
$$S(y_i) = F(x_i) = F(y_i \oplus w_i) = F(y_i) \oplus F(w_i) \tag{129}$$

so that:

$$N(y_i, y_j) = F(w_i) \oplus F(w_j) \oplus F(w_k) \neq \Theta$$

$$(129a)$$

unless $w_i \oplus w_j = w_k$.

Conclusion: The set $W = \{w_i\}$ should contain no even sums, that is,

$$w_i \oplus w_j \neq w_k \qquad i \neq j. \tag{129b}$$

If $G^{n-1}$ is a maximal subgroup of $G^n$, then its complement $\overline{G}^{n-1}$ has this property. Since $|\overline{G}^{n-1}| = 2^{n-1}$, there are more potential mixing transformations available with this property than there are cosets to be corrupted.

### 3. Noncanceling Mixing Transformations

Consider an arbitrary maximal subgroup $G^{n-1}$ and its corresponding complement $\overline{G}^{n-1}$. Each contains $2^{n-1}$ rows or equations. Any maximal subgroup will contain exactly one set of $n$-1 consecutive equations from the complete orthomorphism, and the complement will contain exactly one set of $n$ consecutive equations from the complete orthomorphism. Choose any $n$ consecutive equations, represented by the numbers in the middle column. The consecutive equations will be a complete linearly independent set:

$$\{x_a, x_{a+1}, \cdots, x_{a+m-1}\} \tag{130}$$

$G^{n-1}$ can be generated by taking all even sums of these, i.e., sums of pairs, quadruples, etc. The $n$ - 1 consecutive equations in $G^{n-1}$ will be defined by the $n$ -1 pairs:

$$x_a \oplus x_{a+1}, \ x_{a+1} \oplus x_{a+2}, \ \cdots \tag{131}$$

$\overline{G}^{n-1}$ can be generated directly by taking all odd sums of these $n$ numbers, i.e., the $n$ numbers themselves, sums of triples, quintuples, etc. For any number $x_i \, \varepsilon \, \overline{G}^{n-1}$, there is a corruptible subgroup:

$$G_{i,0}^2 = \{\Theta, x_i, x_{i+1}, x_i \oplus x_{i+1}\} \tag{132}$$

$x_i \oplus x_i = \Theta$ is the mixing transformation for this subgroup and all of its cosets of order 4. The decomposition of Table I can therefore be replaced by the decomposition of Table II which consists of $2^{n-1}$ columns, each representing a coset decomposition corresponding to some $x_i \, \varepsilon \, \overline{G}^{n-1}$. Hence, Table II provides all coset decompositions of $G^n$ by corruptible subgroups of order 4 defined by $x_i \, \varepsilon \, \overline{G}^{n-1}$.

$$G^2_{a,0} \quad G^2_{a+1,0} \quad \cdots \quad G^2_{i,0} \quad \cdots$$
$$G^2_{a,3} \quad G^2_{a+1,3} \quad \cdots \quad G^2_{i,3} \quad \cdots$$
$$\vdots \qquad \vdots \qquad \qquad \vdots$$
$$G^2_{a,j} \quad G^2_{a+1,j} \quad \cdots \quad G^2_{i,j} \quad \cdots$$
$$\vdots \qquad \vdots \qquad \qquad \vdots$$

## TABLE II.

Each coset decomposition (columns in Table II) contains $2^{n-2}$ cosets, including the subgroup itself, each consisting of four rows or equations. Any pair of subgroups will share either one row, $\Theta \oplus \Theta = \Theta$ (represented by $\Theta$) or two rows, $\Theta \oplus \Theta = \Theta$ and $x_{k-1} \oplus x_k = x_{k-p}$ for some index $k$ (represented by $\Theta$ and $x_k$). Correspondingly, a coset in some coset decomposition (column in Table III) will overlap with either four cosets or two cosets in another decomposition (column). Thus, selecting the first coset from some column gives a choice or either $2^{n-2} - 4$ cosets or $2^{n-2} - 2$ cosets from another column without overlap. For example, if $n = 4$, each coset decomposition (column) will contain four cosets, including the subgroup. Thus, if two subgroups share only $\Theta$, a coset from one will overlap with the other subgroup and its three cosets. If the two subgroups share $\Theta$ and some $x_k$, then a coset from one will overlap with just two from the other, permitting a selection of two nonoverlapping cosets from two columns. For larger block sizes $n$, the choices will be progressively larger.

To accomplish the nonlinearization in general, a DSD device is provided which selects an arbitrary coset from some column. Next, the DSD examines the similar coset, in the same row but in the next column to the right. If it does not overlap with the first coset, the similar coset is selected. If it does overlap with the first coset, the similar coset is rejected and a next coset is examined in the same row to the next column. The next coset is selected or rejected accordingly depending upon whether it does or does not overlap with the first coset or any other previously selected coset. This procedure continues until a collection of non-overlapping cosets from different columns are selected. With this procedure, each selected coset will have a different mixer and none will be the sum of any other pair of mixers. It should be noted that the resulting selected cosets do not overlap with any of the other select cosets. It also should be noted that it is not necessary to eamine cosets on a row by row basis. Rather, the cosets can be exmained in any order. Proceeding row by row, however, provides an effective

If, for example, the DSD started in row $j$ of Table II, the DSD . would generate a collection of cosets of the form $G^2_{kj}$ where $k$ varies over some subset of the $2^{n-2}$ columns in the table. Having gone through one row in Table II, the DSD can proceed to another row and examine cosets from previously unused columns. Not counting a subgroup of order 4, there are at most $2^{n-2} - 1$ cosets to be obtained this way.

If the first row in Table II were used, since it consists entirely of subgroups each sharing at least the identity $\Theta$, only one selection could be made. However, if the nonlinear orthomorphism to be constructed is to retain $\Theta$ as the fixed point, i.e., retain $\Theta \oplus \Theta = \Theta$, the first row will not be used.

With $n = 8$ and generating function $x_k = x_{k-8} \oplus x_{k-6} \oplus x_{k-3} \oplus x_{k-2}$ ; let $\{A,B,C,D,E,F,G,H\}$ be a complete linearly independent set. For simplicity of notation, let $A,B,C$ stand for $A \oplus B \oplus C$. Then, the maximal length linear orthomorphism can be represented in part by:

$$
\begin{array}{llclcl}
0 & \ominus & \oplus & \ominus & = & \ominus \\
1 & BEFH & \oplus & A & = & ABEFH \\
2 & A & \oplus & B & = & AB \\
3 & B & \oplus & C & = & BC \\
4 & C & \oplus & D & = & CD \\
5 & D & \oplus & E & = & DE \\
6 & E & \oplus & F & = & EF \\
7 & F & \oplus & G & = & FG \\
8 & G & \oplus & H & = & GH \\
& \vdots & & \vdots & & \vdots \\
254 & BCDEH & \oplus & ADEG & = & ABCGH \\
255 & ADEG & \oplus & BEFH & = & ABDFGH
\end{array}
$$

(133)

In our convention, the orthomorphic mapping which we are using for encryption, e.g., would be $S(D) = DE$, from row 5. $\overline{G}^{n-1} = \overline{G}^7$ can be generated by taking the complete linearly independent set and all odd sums.

$$\overline{G}^7 = \{A, B, C, D, E, F, G, H, ABC, BCD, \cdots, FGH, ABD, \cdots\} \tag{134}$$

Table II has the form:

| Column: | 1 | 2 | 3 | |
|---|---|---|---|---|
| Row 0 | $\{\ominus, A, B, AB\}$ | $\{\ominus, B, C, BC\}$ | $\{\ominus, C, D, CD\}$ | $\cdots$ |
| Row 1 | $\{C, AC, BC, ABC\}$ | $\{D, BD, CD, BCD\}$ | $\{E, CE, DE, CDE\}$ | $\cdots$ |
| | $\vdots$ | $\vdots$ | $\vdots$ | |

(134a)

A typical coset in column 1 has the form:

$$
\begin{array}{lclcl}
B & \oplus & C & = & BC \\
EFH & \oplus & AC & = & ACEFH \\
AB & \oplus & BC & = & AC \\
AEFH & \oplus & ABC & = & BCEFH
\end{array}
$$

(134b)

with mixing transformation $A \oplus A = \ominus$. Its similar image in column 2 is:

$$C \quad \oplus \quad D \quad = \quad CD$$
$$AC \quad \oplus \quad BD \quad = \quad ABCD$$
$$BC \quad \oplus \quad CD \quad = \quad BD$$
$$ABC \quad \oplus \quad BCD \quad = \quad AD$$

$$(134a)$$

with mixing transformation $B \oplus B = \Theta$. As these two cosets do not overlap, both could be selected. To not overlap means that the cosets do not have an equation in common, or equivalently, that the cosets share no number in their middle columns.

### 4. Residual Linearity

Residual linearity is considered to be the case where $N(x, y) = \Theta$ and $x \neq \Theta$, $y \neq \Theta$ , and $x \neq y$. Assume that, at most, one coset is corrupted in each decomposition (column). Such a case can occur in two ways even though the set of mixers has no even sums. If two numbers $a,b \ \varepsilon \ G_{ij}^2$ then $a \oplus b = c \ \varepsilon \ G_{i0}^2$, the subgroup corresponding to that coset. By assumption, the coset $G_{ij}^2$ is corrupted with mixer $x_i$ but $G_{i0}^2$, as a subgroup, is not corrupted as assumed above. However, $c$ is one of the non-zero members of $G_{i0}^2$ $\{x_i, x_{i+1}, x_i \oplus x_{i+1}\}$. These occur in each of the other coset decompositions. If they all occur in cosets which are corrupted in other decompositions, for example, if $c \ \varepsilon \ G_{kj}^2$ for some $k$ and $j$, with mixer $x_k$, then $c$ is modified to become $c \oplus x_k$. In that case, as in Section 2 above:

$$N(a,b) = S(a) \oplus S(b) \oplus S(a \oplus b)$$
$$= S(a) \oplus S(b) \oplus S(c)$$
$$= F(a \oplus x_i) \oplus F(b \oplus x_i) \oplus F(c \oplus x_k)$$
$$= F(x_i) \oplus F(x_i) \oplus F(x_k)$$
$$= F(x_k) \neq \Theta$$

$$(135)$$

where $S$ is the nonlinear mapping and $F$ is the linear mapping from which $S$ is derived. However, if $c$ does not occur in any coset which is corrupted, then the triple $a,b,c$ is linear.

In general, there will be some residual set of rows or numbers $H$ which are not modified from their form in the original linear orthomorphism, $G^n$ defining the linear mapping $F$. If $e,f$ and $e \oplus f \ \varepsilon \ H$, then this triple will remain linear. A sufficient condition to avoid this is that $H$ is contained in the complement of some maximal subgroup.

In view of the forgoing general remarks and examples, a method for performing dynamic block substitutions, illustrated in Figure 24, is provided as follows. As with the previously described methods, the method of Figure 24 operates to encrypt a set of $2n$ unique clear text equations blocks of $n$-bit binary numbers by substituting therefor associated unique encrypted blocks of $n$-bit binary numbers. Also as with the above-described methods, encryption beings, at set 502, by finding a first set $G^n$ of $2^n$ equations. The equations including the identity equations $\Theta \oplus \Theta = \Theta$ and the remaining $2n - 1$ equations are orderable as follows:

Equation #

$$
\begin{array}{cccccc}
1 & x_m & \oplus & x_1 & = & x_{1\text{-}p} \\
2 & x_1 & \oplus & x_2 & = & x_{2\text{-}p} \\
\bullet & \bullet & \bullet & \bullet & \bullet & \bullet \\
\bullet & \bullet & \bullet & \bullet & \bullet & \bullet \\
j & x_{j\text{-}1} & \oplus & x_j & = & x_{j\text{-}p} \\
\bullet & \bullet & \bullet & \bullet & \bullet & \bullet \\
\bullet & \bullet & \bullet & \bullet & \bullet & \bullet \\
m & x_{m\text{-}1} & \oplus & x_m & = & x_{m\text{-}p}
\end{array}
$$

(136)

where $m = 2^n$, $L_n$, $M_n$ and $R_n$ are the left, middle and right columns respectively of the set of equations, and $G^n = L_n \times M_n \times R_n$ represents the set of equations.

The first set of equations represents a linear orthomorphism with each equation of the set representing the modulo 2 additions of one of the $2^n$ clear text blocks in the left column with a unique one of $2^n$ n-bit blocks in the middle column to provide the associated unique n-bit block in the right column. All of the equations in the first set of $2^n$ equations are characterized by the vector sum modulo 2 of any number of the equations also being one of the equations in the first set of equations.

In steps 504 - 508, the equations of the first set of equations are modified to provide a second set of equations. The equations are modified so that the modified equations collectively map the same text blocks in the left column to unique n-bit blocks in the right column, but in a nonlinear manner so that each of the modified equations is not generally the sum modulo 2 of any number of the equations in the unmodified first step. More specifically, at step 504, the first set of equations is decomposed into a table of corruptible cosets of order 4 based on different subgroups. The resulting table is generally represented by

$$
\begin{array}{ccccc}
G^2_{a,0} & G^2_{a+1,0} & \cdots & G^2_{i,0} & \cdots \\
G^2_{a,3} & G^2_{a+1,3} & \cdots & G^2_{i,3} & \cdots \\
\vdots & \vdots & & \vdots & \\
G^2_{a,j} & G^2_{a+1,j} & \cdots & G^2_{i,j} & \cdots \\
\vdots & \vdots & & \vdots &
\end{array}
$$

(137)

Each column represents a coset decomposition of the same linear orthomorphism based on a different subgroup of $G^n$. a, i and j are arbitrary integer indices. The decomposition may be achieved by first generating a subgroup by selecting any two successive equations columns of the first set of equations adding the two equations to yield a third equation and completing the sub-group by including the identity equation. For example, the 12th and 13th rows of the first set of equations may be selected, added together to yield a third equation (which is one of the other equations of the first set of equations.) As noted, the fourth equation of the sub-group is the identity equation. The subgroup is then employed to generate one column of the table, for example the "a" column. The entire column represents a linear orthomorphism of the first set of equations with each element of each column being a coruptible coset. Then a second pair of consecutive equations are selected to enerate a second sub-group and a second column of the table is generated, and so on, until a sub-group is reached which overlaps with a previously used sub-group. In some implementations, it may not necessary to perform a complete coset decomposition.

At step 506, a set of non-overlapping cosets are selected from rows of the table. The non-overlapping cosets are selected by choosing a first coset within some row, then determining whether the adjacent coset to the right within the same row overlaps the first coset. For example, the first coset of the second row may be selected. The immediately adjacent coset to the right of the second row is then compared to determine if an overlap occurs. As noted above, two cosets are deemed to not overlap if the cosets do not have an equation in common, or equivalently, that the cosets share no number in their middle columns. A third coset, immediately to the right of the second coset is examined to determine if it overlaps with either of the first two cosets. In this manner all non-overlapping cosets of the first row are selected. Then non-overlapping cosets of the second row are selected. This process continue until all, or at least a suficent number, of non-overlapping cosets are selected. Typically, it is necessary to examine only about three fourths of the cosets to achieve an adequate numberof non-overlapping cosets. Furthermore, the cosets need not be selected row by row. Rather, any method may be employed for selecting cosets for overlap comparison. However, selecting the cosets row by row provides a particularly efficient implementation method.

The resulting collection of cosets each having a unique mixing transform associated therewith. The mixing transforms are applied to the first set of equations, in generally the same manner of mixing as described above with reference to other methods of constructive corruption, to yield the second set of equations. More specifically, for each selected non-ovelapping coset, the mixing transform associated with the sub-group corresponding to the coset is applied to the equations ofthe coset. This has the effect of rearranging the elements of the equations of the first set of equations which form the cosets. This acheives a reordering of the equations of the first set to yield the desired non-linear second set of equations. The step of applying the mixing transforms to the first setof equations is identified in Figure 24 as step 508.

At 510, the encryption is performed using the second set of equations by applying elements of a second column of clear textr blocks to those of a first column of clear text blocks. More specifically, for each clear text block in the left column to be encrypted, the unique one of the $2^n$ n bit blocks associated therewith in the middle column is added modulo 2 to that block in accordance with the associated equation of the second set of equations of $2^n$ equations to obtain the encrypted block in the right column. Final step 510 is similar to previous final steps described above with reference to the other embodiments of the invention.

As an alternative to selecting only those cosets which overlap, a selection method may be performed wherein only non-overlapping cosets from different columns are selected. Although such a method is somewhat more complicated, and therefore time consuming, it has the advantage of achieving a greater degree of non-linearization. Another alternative method involves selecting non-overlapping cosets from columns having mixing transforms which are not the sum modulo 2 of the mixing transforms of any two previously selected non-overlapping cosets. In other words, a non-overlapping coset is selected only if $w_1 \oplus w_2$ is unequal to $w_3$ where $w_3$ is the mixing transform of a newly selected non-overlapping coset and $w_1$ and $w_2$ represent the mixing transforms of any two previously selected non-overlapping coset. Again, the alternative method is more complicated, but had the advantage of achieving a greater degree of nonlinearity.

Preferably, hard-wired circuitry is employed for performing the various steps set forth Figure 24. However, programmed computers or microprocessors may alternatively be employed.

### 5. The Bar Sinister Method of Constructive Corruption

The method of non-canceling transformations described above with reference to Figure 24 typically produces orthomorphisms with little if any residual nonlinearity. That is, the range of $N(x, y)$ is all of $Z_2^n$ with a relatively even distribution. However, the method of Noncanceling transformations may not work effectively for very small block size. As pointed out in Section 3, for $n = 4$, only 8 equations out of 16 can be modified using the method of noncanceling mixing transformations. The following method is more suited to the constructive corruption of linear orthomorphisms of small block size.

As before, a linear orthomorphism on $Z_2^n$ can be written as:

$$
\begin{array}{cccccc}
\textbf{Row Number} & \textbf{\textit{L}} & & \textbf{\textit{M}} & & \textbf{\textit{R}} \\
0 & \ominus & \oplus & \ominus & = & \ominus \\
1 & x_m & \oplus & x_1 & = & x_{1-p} \\
2 & x_1 & \oplus & x_2 & = & x_{2-p} \\
\vdots & & \vdots & & \vdots & \\
k & x_{k-1} & \oplus & x_k & = & x_{k-p} \\
\vdots & & \vdots & & \vdots & \\
m = 2^n - 1 & x_{m-1} & \oplus & x_m & = & x_{m-p}
\end{array}
\tag{138}
$$

For simplicity of notation, we can use $x_{k-1} = L_k$ in the left column; $x_k = M_k$ in the middle column; and, $x_{k-p} = R_k$ in the right column. In that case, the equation immediately above can be rewritten as:

$$
\begin{array}{cccccc}
\textbf{Row Number} & \textbf{\textit{L}} & & \textbf{\textit{M}} & & \textbf{\textit{R}} \\
0 & \ominus & \oplus & \ominus & = & \ominus \\
1 & L_1 & \oplus & M_1 & = & R_1 \\
2 & L_2 & \oplus & M_2 & = & R_2 \\
\vdots & & \vdots & & \vdots & \\
k & L_k & \oplus & M_k & = & R_k \\
\vdots & & \vdots & & \vdots & \\
m & L_m & \oplus & M_m & = & R_m
\end{array}
\tag{139}
$$

If columns $L$ and $M$ can be permuted, leaving column $R$ fixed, and maintaining equality, a new and generally nonlinear orthomorphism will have been generated. This is achieved by finding a consistent set of equations:

$$
L_i \oplus M_j = R_k
\tag{139a}
$$

where the indices refer to the row numbers in Equation (139). The index $k$ is a function of indices $i$ and $j$, so that one can write:

$$
k \equiv k(i,j)
\tag{140}
$$

From Equation (138), $L_i \oplus M_{i-1} = R_0 = \ominus$ for all $i$ so that $k(i,i-1) = 0$. $L_i \oplus M_i = R_i$ so that $k(i,i) = i$. $L_0 \oplus M_i = R_{i+p}$ and $L_i \oplus M_0 = R_{i+p-1}$, from Equation (138), where $p$ is the shift between the middle and right columns determined by the generating function for the linear orthomorphism. Thus, $k(0,i) = i + p$ and $k(i,0) = i + p - 1$. The possible combinations in Eq. (138) are expressed in Table III.

In Table III the entries are indices of $k(i,j)$ of $R_k = L_i \oplus M_j$

wherein indices are row numbers in the linear orthomorphism in Equation a.

$M_j$    Middle Column

| $L_i$ \ $M_j$ | 0 | 1 | 2 | 3 | ... | l | ... | m |
|---|---|---|---|---|---|---|---|---|
| 0 | 0 | p+1 | p+2 | p+3 | | p+l | | p+m |
| 1 | p | 1 | k(1,2) | k(1,3) | | k(1,l) | | k(1,m) |
| 2 | p+1 | 0 | 2 | k(2,3) | | k(2,l) | | k(2,m) |
| 3 | p+2 | k(3,1) | 0 | 3 | | k(3,l) | | k(3,m) |
| l | p+l-1 | k(l,1) | k(l,2) | k(l,3) | | l | | k(l,m) |
| m | p+m-l | k(m,l) | k(m,2) | k(m,3) | | k(m,l) | | m |

$L_i$ Left Column

## TABLE III

Each row and each column in Table III contains each index in the set $\{0,1,2,\cdots,m\}$ exactly once. An orthomorphism is generated by selecting one entry from each row and column without duplicates. Equivalently, the entries $k(i, j)$ can be thought of as $Z$ axis coordinates in a 3-dimensional array, in which case, each row, column, and parallel plane must be visited exactly once.

If the principal diagonal is chosen, from upper left to lower right, the original linear orthomorphism is obtained. If the subdiagonal from upper left to lower right is chosen, $k(i,i - 1)$, it is easy to see that the trivial orthomorphism mapping everything onto $\Theta$ is obtained. As noted above $x_{i-1} = L_i$ and $x_j = M_j$. Thus

$$x_{i-1} \oplus x_j = x_{k-p} \tag{141}$$

This equation corresponds to some power $s$ of the basic orthomorphic permutation where $i - 1 = j - s$ and $k - p = j - p_s$. Thus, $s = j - i + 1$ and $k + j + p - p_s = j + p - p_{(j-i+1)}$. If $p_s$ has been tabulated as a function of $s$, Table III could be derived this way. (See Appendix VIII, section 4.) Now consider any other such diagonal from upper left to lower right, that is, $k(i,i+a)$ for all $i$ and some fixed $a$. Then $k(i,i + a) = i + a - p_s$ with s = a + 1 and $x_{i-1} \Theta x_{i+a} = x_{i+a-p_s}$. Thus, the orthomorphism which is generated is the $(a + 1)$st power of the original, and is linear again.

Now, if a diagonal is chosen from upper right to lower left, we can start with some pair

$$L_a \oplus M_b = R_k \qquad \text{with } k = k(a,b) \tag{142}$$

or equivalently

$$x_{a-1} \oplus x_b = x_{b-p_i} = x_{k-p} \tag{143}$$

where $s=b-a+1$ mod m.

Proceed downward from right to left with successive values:

$$k(a + i, b - i) = b + p - p_s - 2i \tag{144}$$

and equations of the form

$$x_{a+i-1} \oplus x_{b-i} = x_{b-i-p_s}$$

where $s = b - i - (a + i - 1) = b - a + 1 - 2i$ mod m and the successive values of the index $i$ give equations from different powers of the basic linear orthomorphism. Proceeding along such diagonals from upper right to lower left eventually leads to a repeated value of $k(i,j)$. This "collision" occurs when

$$k(a + i, b - 1) = k(a,b)$$

or

$$b + p - p_{(b-a+1)} = b - i + p - p_{(b-a+1-2i)} \tag{145}$$

so that $i = p_{(b-a+1)} - p_{(b-a+1-2i)}$. The repeated value is either skipped or a transitions made to a parallel diagonal. The method thereby selects entries along one or more diagonals from a top right to a bottom left of the entries of Table III. This method is herein referred to as a Bar Sinister method as the resulting direction of the diagonals is reminiscent of the bar sinister from heraldry.

### 6. Determining the Mixing Transformations

As mentioned above in Section 4, the mixers used give some measure of residual linearity. Even though the nonlinear orthomorphism in the bar sinister approach is generated without use of mixing transformations, determining them gives some information on nonlinearity in the sense described in Section 2. It is typically necessary only to compare the left and middle columns, respectively, of the original orthomorphism with those of the nonlinear version, keeping the right column in the original order. If the kth rows, respectively, are

$$\text{Linear} \qquad\qquad \text{Nonlinear}$$
$$x_{k-1} \oplus x_k = x_{k-p} \qquad u_k \oplus v_k = x_{k-p}$$
$$\text{then} \quad w_k = \left( u_k \oplus x_{k-1} \right) = \left( v_k \oplus x_k \right). \tag{146}$$

### 7. Constructing the Bar Sinister Table

Because the table of entries produced during the bar sinister method has $2^{2n}$ entries, it would seem to be a formidable task to construct the table. However, there are some simplifications. For example, the top row and the left company are automatically generated but not needed if $\Theta$ is to be maintained as the fixed point. The main diagonal, from upper left to bottom right, and the subdiagonal are also fixed. Consider $x_m \oplus x_l = x_{l-p_s}$, in the row of index 1. $s \equiv (l - m) \mod m = l$. So $k(1,l) = l - p_l$. In row 2, $x_1 \oplus x_{l+1} = x_{l+1-p_s}$ where again $s \equiv (l + 1 - 1) \mod m = l$. Therefore, $k(2,l) = l + 1 - p_l = k(1,l) + 1$. In general, $k(1+d,l) = k(1,l)+d$. $k(1,m) = 0$. So, it is necessary only to determine $2^n$ - 3 numbers in the row of index 1.

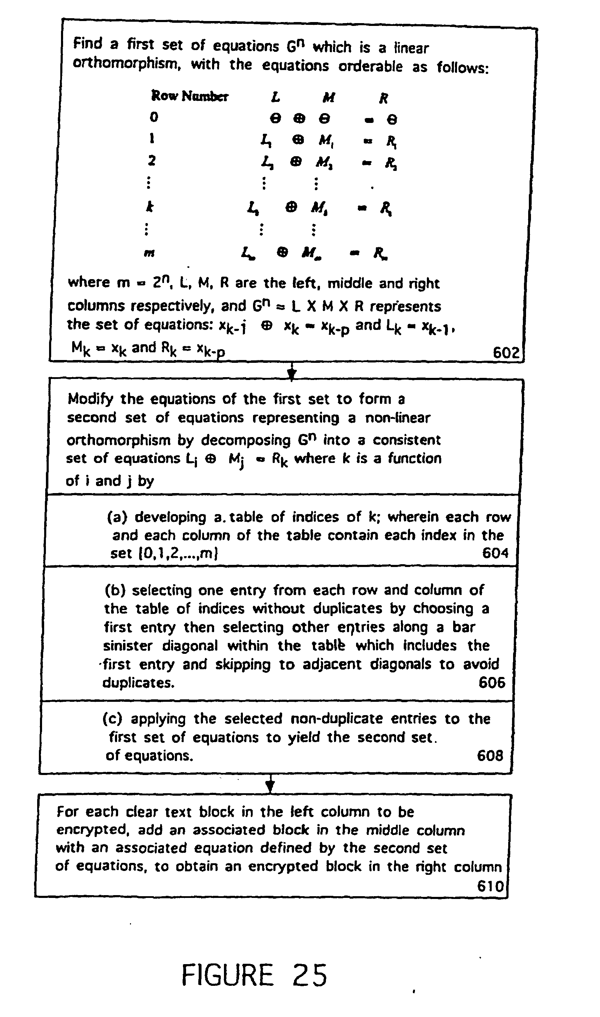

In view of the forgoing general remarks and examples, a method for performing dynamic block substitutions employing the bar sinister method of the invention is as follows. The method is illustrated in Figure 25. As with the previously described methods, the method of Figure 24 operates to encrypt a set of $2^n$ unique clear text equations blocks of n-bit binary numbers by substituting therefor associated unique encrypted blocks of n-bit binary numbers. Encryption beings, at set 602, by finding a first set of equations $G^n$ of $2^n$ equations. The equations including the identity equations $\Theta \oplus \Theta = \Theta$ and the remaining $2^n$ - 1 equations are orderable as follows:

| Row Number | $L$ | | $M$ | | $R$ |
|---|---|---|---|---|---|
| 0 | $\Theta$ | $\oplus$ | $\Theta$ | $=$ | $\Theta$ |
| 1 | $L_1$ | $\oplus$ | $M_1$ | $=$ | $R_1$ |
| 2 | $L_2$ | $\oplus$ | $M_2$ | $=$ | $R_2$ |
| $\vdots$ | $\vdots$ | | $\vdots$ | | |
| $k$ | $L_k$ | $\oplus$ | $M_k$ | $=$ | $R_k$ |
| $\vdots$ | $\vdots$ | | $\vdots$ | | |
| $m$ | $L_m$ | $\oplus$ | $M_m$ | $=$ | $R_m$ |

$$(147)$$

right columns respectively of the set of equations.

As with the first set of equations employed in the above-described methods, the first set of equations of the method Figure 25 represents a linear orthomorphism with each equation of the set of equations representing the modulo 2 additions of one of the $2^n$ clear text blocks in the left column with a unique one of $2^n$ n-bit blocks in the middle column to provide the associated unique n-bit block in the right column. All of the equations in the first set of $2^n$ equations are characterized by the vector sum modulo 2 of any number of the equations also being one of the equations in the first set of equations.

In steps 604 - 608, the equations of the first set of equations are modified to provide a second set of equations. The equations are modified so that the modified equations collectively map the same text blocks in the left column to unique n-bit blocks in the right column, but in a nonlinear manner so that each of the modified equations is not generally the sum modulo 2 of any number of the equations in the unmodified first step.

More specifically, finding the second set of equations is performed by finding a consistent set of equations

$$L_i \oplus M_j = R_k, \qquad (148)$$

where $x_{k-1} = L_k$ is the left column; $x_k = M_k$ is the middle column; and, $x_{k-p} = R_k$ is the right column and k is a function of i and j.

The steps of finding the consistent set of equations include steps 604, 606 and 608. At step 604 a table of indices of k is developed wherein each row and each column of the table contains each index in the set {0,1,2,...,m}. The table of indices is illustrated above in Table III, above. At step 604 one entry from each row and column of said table is selected without duplicates by choosing an index and selecting entries along a diagonal within the table extending from high to low j and from low to high i. In other words, within table III, a diagonal is selected which extends from top right to bottom left. For example, the j = m, i = 0 entry may be selected. Next the j = m-1, i = 1 entry is compared to determine if the two elements are non-duplicates. The elements are duplicates, the j = m-1, i = 1 entry is discarded, if not the next entry along the top right to bottom left diagonal is selected. The process proceeds along the diagonal until a duplicate term is encountered. If a duplicate entry is encountered, either a transition is made to an adjacent diagonal or the entry is simply skipped and processing proceeds along the original diagonal. In this manner, a set of non-duplicate entries are developed.

Other methods for selecting entries may be employed which do not necessarily involve traversing a bottom left ot top right diagonal of the table. However, employing such a diagonal has been found to be a particularly effective for finding nonduplicate entries which yield a nonlinear orthomorphism. It should be noted that the selection of a top left to bottom right diagonal yields a linear orthomorphism.

At step 608 the selected entries are applied to the first set of equations to yield the second set of equations, in the manner described above in mathematical terms. It should be noted that no mixing transforms need be generated. Rather, the selected nonduplicate entries provide the indices for rearranginh the equations of the first set to yield the second set.

At 610, the encryption is performed by applying the second set of equations to the clear text data. More specifically, for each clear text block in the left column to be encrypted, the unique one of the $2^n$ n bit blocks associated therewith in the middle column is added modulo 2 to that block in accordance with the associated equation of the second set of equations of $2^n$ equations to obtain the encrypted block in the right column. Final step 610 is similar to previous final steps described above with reference to the other embodiments of the invention.

Once, a particular set of indices are selected which yield a nonlinear orthomorphism, the arbitrary indices of the nonlinear orthomorphism may be set to any of a large number of combinations . of particular numerical values to thereby yield a large number of different encrption codes. Furthermore, additional nonlinear orthomorphisms may be generated by performing the selection method on the table of indices but, for example, beginngin with a diffemt entry along a diffemt diagonal. In general, there are a very large number of possible combinations of non-duplicate entries which can be selected based on the table using the diagonal selection method.

Although the method of Figure 25 may be also employed for large block sizes, it is ideally suited for small block sizes such as n = 5 or n = 4.

Preferably, hard-wired circuitry is employed for performing the various steps set forth figure 25. However, programmed computers or microprocessors may alternatively be employed.

## 8. An Example for Block Size 4

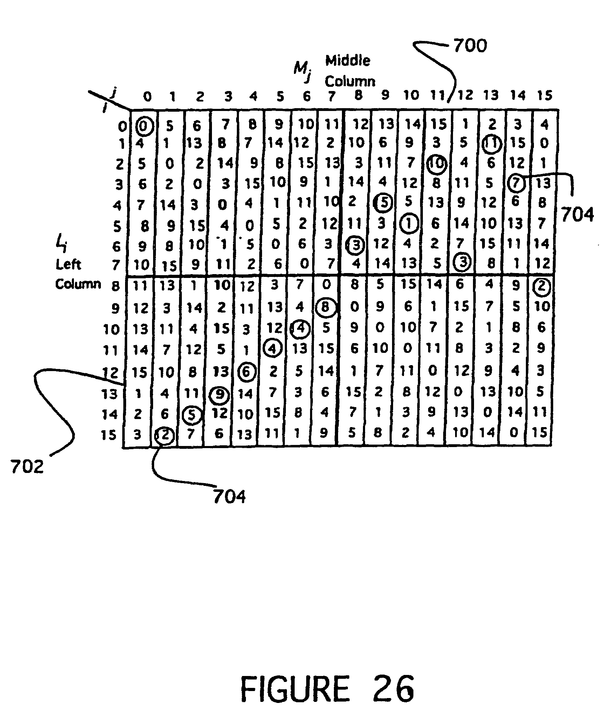

Figure 26 is an example of the table of indices for block size 4 developed using the method of Figure 25. More specifically, Figure 26 provides a compatible rearrangement of columns of indices for

$$n = 4, \ p = 4, \ x_k = x_{k-4} \oplus x_{k-1} \tag{149}$$

The contents of the table of Figure 26 are integers $k$, corresponding to $R_k$, the right column of the linear orthomorphism, $L_i \oplus M_j = R_k$. Each entry is the modulo 2 sum of the corresponding ith and jth indices. The ith indices are represented by reference numeral 700 and the jth entries are represented by refereence numeral 702.

The original linear orthomorphism is as shown in section 1 above with $p = 4$. The table shows compatible rearrangements of the three columns. For example, $L_{10}$ and $M_6$ have the corresponding entry $k(10,6) = 14$ which means that $L_{10} \oplus M_6 = R_{14}$ or that

$$x_{10-1} \oplus x_6 = x_{14-4}$$

$$x_9 \oplus x_6 = x_{10} \tag{150}$$

The small circles in Figure 26, identified generally by reference numeral 704, are selected values of $k(a,b)$ which are all different and taken from each row and column exactly once. Equivalently, this represents a $16 \times 16 \times 16$ cube in which each row and column in the X, Y plane and each parallel plane along the Z axis are sampled once. As far as possible, a lower left to upper right diagonal was used. Three values of $k$, 15, 1, and 3, occur on an upper left to lower right diagonal. The values define three equations of the form:

$$x_{i-6} \oplus x_i = x_{i-p_s} \qquad \text{where } p_6 = 13. \tag{151}$$

If $g$ designates the permutation of $Z_2^4$ defined by the generating function $x_k = x_{k-4} \oplus x_{k-1}$ acting upon some complete linearly independent set, then these three equations come from the orthomorphism defined by $g^6$. However, the three equations are linearly independent and thus do not form a linear subgroup in the orthomorphism defined by the selection in Figure 26.

The nonlinear orthomorphism resulting from applying the selected nonduplicate entries is provided in Table IV.

$$\oplus \ominus = \ominus$$
$$X_m \oplus X_{13} = X_7$$
$$X_1 \oplus X_{11} = X_6$$
$$X_2 \oplus X_{14} = X_3$$
$$X_3 \oplus X_9 = X_{11}$$
$$X_4 \oplus X_{10} = X_{12}$$
$$X_5 \oplus X_8 = X_9$$
$$X_6 \oplus X_{12} = X_{14}$$
$$X_7 \oplus X_{15} = X_{13}$$
$$X_8 \oplus X_7 = X_4$$
$$X_9 \oplus X_6 = X_{10}$$
$$X_{10} \oplus X_5 = X_{15}$$
$$X_{11} \oplus X_4 = X_2$$
$$X_{12} \oplus X_3 = X_5$$
$$X_{13} \oplus X_2 = X_1$$
$$X_{14} \oplus X_1 = X_8$$

### TABLE IV

IX. DEFINITIONS OF TERMS AND SYMBOLS

All the following definitions are specialized to $n$-bit binary numbers, under the operation of bit wise addition modulo 2 (XORing) and to bijective mappings on these numbers.

Affine Mapping: A bijective mapping, $T$ on $Z_2^n$ such that

$T(x) \oplus T(y) = T(x \oplus y) \oplus c$ for some constant $c$ and all $x, y,$ e $Z_2^n$. In engineering, this is frequently referred to as linear. Here, the term linear is reserved for the case where $c = \theta$, the additive identity.

Perfectly Balanced Mapping: Let $H_i$ be a maximal subgroup of $Z_2^n$, i.e., $H_i$ is a subgroup of order $|H_i| = 2^{n-1}$.

$Z_2^n = H_i \cup \bar{H}_i$. If a bijective mapping $T$ has the property $|TH_i|=|T\bar{H}_i|=2^{n-1}$ for all maximal subgroups, $T$ is said to be a perfectly balanced mapping.

Completely Corruptible: A corruptible coset with a maximal number of mixing transformations. If the order of the completely corruptible coset is $2^k$, then the order of the corresponding set of mixing transforms is $2^{k-1}$.

Constructive Corruption: The process of converting a linear orthomorphism to a nonlinear orthomorphism by rearranging the order of the blocks in two columns of the linear array of equations (Figure 2), holding the third column fixed, while preserving equality in each row.

Corruptible Set: A set of equations, usually a coset or a subgroup, which can be non-linearized as a self-contained set, by the process of constructive corruption.

Dynamic Substitution Device: A block substitution device or S-box, which uses an orthomorphism on $Z_2^n$, the $n$-bit binary numbers, for encryption or decryption.

Generating Function: A recursive function of the form:

$$x_k = x_{k-n} \oplus x_{k-i} \oplus \cdots \qquad (152)$$

which, when applied to a complete linearly independent set of $n$-bit numbers, defines a linear orthomorphism in equation 11. These are the same as generating functions of linear feedback shift registers but with domain $Z_2^n$ rather then individual binary bits. The generating functions are primitive polynomials in the Galois field $GF(2^n)$.

Linear Array: An array of $2^n$ equations which represents a linear (auto-morphic) orthomorphism on $Z_2^n$. (See Equation 11)

Linear Orthomorphism: An orthomorphism where the mapping $Z_2^n \rightarrow Z_2^n$ is linear.

Maximal Orthomorphism: An orthomorphism on $Z_2^n$ which can be represented as a permutation of $Z_2^n$ with no cycles except for a single fixed point.

Mixer or Mixing Transformation/Transform: An equation of the form $w \oplus w = \theta$ used in the process of constructive corruption. The mixer or mixing transform is added vectorially modulo 2 to a corruptible set of equations in a linear orthomorphism to obtain a nonlinear orthomorphism.

Orthomorphism: A one-to-one mapping on $Z_2^n$ such that each number added modulo 2 to its image, generates all of $Z_2^n$, that is, $R:Z_2^n \rightarrow Z_2^n$ such that:

$$\{x \oplus R(x)|x\varepsilon Z_2^n\} = Z_2^n. \qquad (153)$$

Orthomorphic Permutation: The permutation on $Z_2^n$ defined by an orthomorphism.

Row: A single equation in the array of equations representing an orthomorphism on $Z_2^n$. (See Equation 10)

Shift: The displacement between columns of n-bit numbers in the array of equations representing a linear orthomorphism. Each column has the same order but a different starting point. (See Equation 11)

Similar Sets: Subsets of equations in a linear array that have the same relative spacing.

Vector: A row or equation in a linear array which can be thought of as a vector in three dimensions with coefficients in $Z_2^n$.

$\oplus$:  Addition modulo 2 (XORing)

$\theta = 00\cdots0$:  Additive identity

$Z_2^n$:  Group of all $n$-bit binary numbers

$GF(2^n)$:  Galois field of polynomials of degree $n$ with binary coefficients

$G^n$ :  A set of $2^n$ equations representing a linear orthomorphism on $Z_2^n$. $G^n$ is a group.

$G_0^k$:  A subgroup of $G^n$ of order $2^k$.

$G_i^k$:  A coset of $G_0^k$.

$R_k \setminus R_{k-1}$:  $R_k \cap \bar{R}_{k-1}$

$a|b$:  $a$ does not divide $b$.

$W_k$:  The group of mixing transforms associated with $G_0^k$.

$\bar{G}^k$:  A particular coset of $G_0^k$, defined as the relative complement $G_0^{k+1} \setminus G_0^k$.

## Claims

1.   A communication method comprising data encryption by substituting for any one of an input $2^n$ unique clear text blocks $X_1$ through $X_m$ of n bit binary data with any one of an associated output unique encrypted blocks $X_{1-p}$ through

$X_{m-p}$ of n bit binary data comprising the steps of:

(a) finding a first set $G^n$ of $2^n$ equations, representing a linear orthomorphism, each equation representing the modulo 2 additions of one of the input $2^n$ clear text blocks $X_1$ through $X_m$ in the left column with a unique one of $2^n$ n-bit blocks $X_1$ through $X_m$ in the middle column to provide one of an associated output n-bit blocks $X_{1-p}$ through $X_{m-p}$ in the right column, all of the equations in the first set of $2^n$ equations being typified by the vector sum modulo 2 of any number of the equations also being one of the equations in the first set of equation, the equations including the identity equations $\Theta \oplus \Theta = \Theta$ and the remaining $2^n - 1$ equations being ordered as follows:

Equation #

| | | | | | |
|---|---|---|---|---|---|
| 1 | $x_m$ | $\oplus$ | $x_1$ | $=$ | $x_{1-p}$ |
| 2 | $x_1$ | $\oplus$ | $x_2$ | $=$ | $x_{2-p}$ |
| . | . | . | . | . | . |
| . | . | . | . | . | . |
| j | $x_{j-1}$ | $\oplus$ | $x_j$ | $=$ | $x_{j-p}$ |
| . | . | . | . | . | . |
| . | . | . | . | . | . |
| m | $x_{m-1}$ | $\oplus$ | $x_m$ | $=$ | $x_{m-p}$ |

where $m = 2^n$, $L_n$, $M_n$ and $R_n$ are the left, middle and right columns respectively. P is a positive integer less than or equal to m, and $G^n = L_n \times M_n \times R_n$ represents the set of equations;

(b) modifying a plurality of the non-zero $2^n - 1$ equations in the first matrix of $2^n$ equations to provide a second set of $2^n$ equations, representing nonlinear orthomorphisms, the plurality of equations being modified so that the resulting set of equations collectively map the same text blocks in the left column to output n-bit blocks in the right column, but in a nonlinear manner so that each of the equations in the resulting set is not the sum modulo 2 of any number of the equations in the unmodified first step, **characterised in that** said modification of said plurality of the non-zero $2^n - 1$, equations is achieved by:

(1) decomposing $G^n$ into a table of corruptible cosets of order 4, said table being represented by

$$
\begin{array}{ccccc}
G^2_{a,0} & G^2_{a+1,0} & \cdots & G^2_{i,0} & \cdots \\
G^2_{a,3} & G^2_{a+1,3} & \cdots & G^2_{i,3} & \cdots \\
\vdots & \vdots & & \vdots & \\
G^2_{a,j} & G^2_{a+1,j} & \cdots & G^2_{i,j} & \cdots \\
\vdots & \vdots & & \vdots &
\end{array}
$$

where each column represents a coset decomposition of the linear orthomorphism based on a different corruptible subgroup $G^n$, and a, i and j are arbitrary integer indices;
(2) selecting a set of non-overlapping cosets from said table of cosets, with selected cosets in different columns each having a unique mixing transform associated therewith; and
(3) applying said unique mixing transforms to said group of non-overlapping cosets to yield the second set of $2^n$ equations; and

(c) for each input clear text block in the left column to be encrypted, adding modulo 2 to that block, the unique one of the $2^n$ n-bit blocks associated therewith in the middle column in accordance with the associated equation of the second set of $2^n$ equations to obtain the output encrypted block in the right column.

2. The encryption method of claim 1, wherein said step of selecting a set of non-overlapping cosets is performed by choosing a first coset within a row, then determining whether the adjacent coset to the right within the same row overlaps the first coset, then selecting successive cosets to the right in the same row if the successive cosets do not overlap with any of the cosets previously selected, then continuing on to the first coset on the left in the next row, proceeding in the same manner until no more non overlapping cosets are found.

3. The method of claim 1, wherein said step of selecting said set of non-overlapping cosets from said table of cosets is performed by choosing an index and selecting entries along a diagonal within said table containing said index extending from high to low j and low to high i until duplication occurs, then selecting a new nonduplicate entry and proceeding along the diagonal containing the new entry.

4. The method of claim 3, wherein said non-duplicate entries is selected by choosing an index of said table, selecting entries along said diagonal, and skipping any duplicate entries of said table.

5. The method of claim 3, wherein said set of non-duplicate entries is selected by choosing an index of said table, selecting entries along said diagonal, and skipping to a parallel diagonal upon reaching a duplicate entry within said table.

6. The method of claim 1, wherein said table of cosets is represented by:

$M_j$ Middle Column

| $L_i$ Left Column | 0 | 1 | 2 | 3 | ... | l | ... | m |
|---|---|---|---|---|---|---|---|---|
| 0 | 0 | p+1 | p+2 | p+3 | | p+l | | p+m |
| 1 | p | 1 | k(1,2) | k(1,3) | | k(1,l) | | k(1,m) |
| 2 | p+1 | 0 | 2 | k(2,3) | | k(2,l) | | k(2,m) |
| 3 | p+2 | k(3,1) | 0 | 3 | | k(3,l) | | k(3,m) |
| l | p+l-1 | k(l,1) | k(l,2) | k(l,3) | | l | | k(l,m) |
| m | p+m-l | k(m,l) | k(m,2) | k(m,3) | | k(m,l) | | m |

where $L_i \oplus M_{i-1} = R_0 = \Theta$ for all $i$ so that $k(i, i-1) = 0$, $L_i \oplus M_i = R_i$ so that $k(i,i) = i$, $L_0 \oplus M_i = R_{i+p}$ and $L_i \oplus M_0$

= $R_{l+p-1}$, $p$ is the shift between the middle and right columns, $X_{k-1} \oplus X_k = X_{k-p}$, determined by a generating function for the linear orthomorphism and $k(0,i)=i + p$ and $k(i,0) = i + p - 1$.

**Patentansprüche**

1. Ein Kommunikationsverfahren, das eine Datenverschlüsselung umfaßt, bei der jeder Block von $2^n$ möglichen verschiedenen eingegebenen Klartextblöcken $X_1$ bis $X_m$ von jeweils n Bit Binärdaten durch einen zugeordneten ausgegebenen speziellen verschlüsselten Block $X_{1-p}$ bis $X_{m-p}$ von n Bit Binärdaten ersetzt wird, umfassend die Schritte:

(a) Auffinden eines ersten Satzes $G^n$ von $2^n$ Gleichungen, der einen linearen Orthomorphismus darstellt, wobei jede Gleichung die Modulo-2-Addition eines der eingegebenen $2^n$ Klartextblöcke $X_1$ bis $X_m$ in der linken Spalte mit einem speziellen Block von $2^n$ n-Bit-Blöcken $X_1$ bis $X_m$ in der mittleren Spalte zum Bereitstellen eines zugeordneten ausgegebenen n-Bit-Blocks $X_{1-p}$ bis $X_{m-p}$ in der rechten Spalte darstellt, wobei sämtliche Gleichungen in dem ersten Satz von $2^n$ Gleichungen jeweils durch die Modulo-2-Vektorsumme irgendeiner Anzahl von Gleichungen, die ebenfalls zu den Gleichungen des ersten Satzes von Gleichungen gehören, verkörpert wird, wobei die Gleichungen die Identitätsgleichung $\Theta \oplus \Theta = \Theta$ und die übrigen $2^n - 1$ Gleichungen umfassen, die wie folgt geordnet sind:

```
Gleichung #
     1     x_m     ⊕     x_1     =     x_1-p
     2     x_1     ⊕     x_2     =     x_2-p
     .     .       .     .       .     .
     .     .       .     .       .     .
     j     x_j-1   ⊕     x_j     =     x_j-p
     .     .       .     .       .     .
     .     .       .     .       .     .
     m     x_m-1   ⊕     x_m     =     x_m-p
```

wobei m = $2^n$ ist, $L_n$, $M_n$ und $R_n$ die linke, die mittlere beziehungsweise die rechte Spalte sind, p eine positive ganze Zahl ist, die kleiner oder gleich m ist, und $G^n = L_n \times M_n \times R_n$ den Satz von Gleichungen darstellt;
(b) Modifizieren einer Mehrzahl der $2^n - 1$ Gleichungen, die ungleich Null sind, in der ersten Matrix von $2^n$ Gleichungen derart, daß ein zweiter Satz von $2^n$ Gleichungen zur Verfügung gestellt wird, der einen nichtlinearen Orthomorphismus darstellt, wobei die Mehrzahl von Gleichungen derart modifiziert wird, daß der sich ergebende Satz von Gleichungen insgesamt dieselben Textblöcke in der linken Spalte auf ausgegebene n-Bit-Blöcke in der rechten Spalte abbildet, dies aber in einer nicht-linearen Weise, so daß jede der Gleichungen in dem sich ergebenden Satz nicht die Modulo-2-Summe irgendeiner Anzahl von Gleichungen in dem unmodifizierten ersten Schritt ist,
**dadurch gekennzeichnet,**
**daß** die Modifikation der Mehrzahl von $2^n-1$ Gleichungen, die nicht Null sind, erreicht wird, indem:

(1) $G^n$ in eine Tabelle von verfälschbaren Untermengen der Ordnung 4 zerlegt wird, wobei die Tabelle dargestellt wird durch

$$
\begin{array}{cccccc}
G^2_{a,0} & G^2_{a+1,0} & \cdots & G^2_{i,0} & \cdots \\
G^2_{a,3} & G^2_{a+1,3} & \cdots & G^2_{i,3} & \cdots \\
\vdots & \vdots & & \vdots \\
G^2_{a,j} & G^2_{a+1,j} & \cdots & G^2_{i,j} & \cdots \\
\vdots & \vdots & & \vdots \\
\end{array}
$$

wobei jede Spalte eine Untermengenzerlegung des linearen Orthomorphismus auf der Grundlage einer anderen verfälschbaren Untergruppe von $G^n$ darstellt und a, i und j beliebige ganzzahlige Indizes sind;

(2) ein Satz von einander nicht überlappenden Untermengen aus der Tabelle von Untermengen ausgewählt wird, wobei ausgewählten Untermengen in verschiedenen Spalten sind, denen jeweils eine spezielle Mischtransformierte zugeordnet ist; und

(3) die spezielle Mischtransformierte auf die Gruppe von einander nicht überlappenden Untermengen angewendet wird, um den zweiten Satz von $2^n$ Gleichungen hervorzubringen; und

(c) für jeden eingegebenen Klartextblock in der linken Spalte, der entschlüsselt werden soll, der spezielle Block der $2^n$ n-Bit-Blöcke, die ihm in Übereinstimmung mit der zugehörigen Gleichung des zweiten Satzes von $2^n$ Gleichungen in der mittleren Spalte zugeordnet sind, modulo-2-addiert wird, um den auszugebenden verschlüsselten Block in der rechten Spalte zu gewinnen.

2. Das Verschlüsselungsverfahren nach Anspruch 1, wobei der Schritt des Auswählens eines Satzes von einander nicht überlappenden Untermengen ausgeführt wird, indem eine erste Untermenge in einer Zeile ausgewählt wird, dann bestimmt wird, ob die benachbarte Untermenge, die sich innerhalb derselben Zeile rechts davon befindet, die erste Untermenge überlappt, dann nachfolgende Untermengen rechts davon in derselben Zeile ausgewählt werden, sofern die nachfolgenden Untermengen sich nicht mit irgendeiner der zuvor ausgewählten Untermengen überlappen, dann mit der ersten Untermenge auf der linken Seite in der nächsten Zeile fortgefahren wird, wobei dies in derselben Weise fortgesetzt wird, bis keine weiteren nicht-überlappenden Untermengen gefunden werden.

3. Das Verfahren nach Anspruch 1, wobei der Schritt des Auswählens des Satzes von einander nicht überlappenden Untermengen aus der Tabelle von Untermengen ausgeführt wird, indem ein Index ausgewählt wird und Einträge entlang einer Diagonalen innerhalb der Tabelle ausgewählt werden, die einen sich von einem hohem zu einem niedrigen j und von einem niedrigen zu einem hohen i erstreckenden Index enthalten, bis eine Duplikation auftritt, dann ein neuer nicht-doppelter Eintrag ausgewählt wird und entlang der der neuen Eintrag enthaltenden Diagonale fortgefahren wird.

4. Das Verfahren nach Anspruch 3, wobei die nicht-doppelten Einträge ausgewählt werden, indem ein Index der Tabelle ausgewählt wird, Einträge entlang der Diagonalen ausgewählt werden und irgendwelche doppelten Einträge der Tabelle übersprungen werden.

5. Das Verfahren nach Anspruch 3, wobei der Satz von nicht-doppelten Einträgen ausgewählt wird, indem ein Index der Tabelle ausgewählt wird, Einträge entlang der Diagonalen ausgewählt werden und zu einer parallelen Diagonalen übergesprungen wird bei Erreichen eines doppelten Eintrags innerhalb der Tabelle.

6. Das Verfahren nach Anspruch 1, wobei die Tabelle von Untermengen dargestellt wird durch:

M_j Mittlere Spalte

|  | 0 | 1 | 2 | 3 | | l | | m |
|---|---|---|---|---|---|---|---|---|
| 0 | 0 | p+1 | p+2 | p+3 | | p+l | | p+m |
| 1 | p | 1 | k(1,2) | k(1,3) | | k(1,l) | | k(1,m) |
| 2 | p+1 | 0 | 2 | k(2,3) | | k(2,l) | | k(2,m) |
| 3 | p+2 | k(3,1) | 0 | 3 | | k(3,l) | | k(3,m) |
| L_i linke Spalte | | | | | | | | |
| l | p+l-1 | k(l,1) | k(l,2) | k(l,3) | | l | | k(l,m) |
| m | p+m-1 | k(m,1) | k(m,2) | k(m,3) | | k(m,l) | | m |

wobei $L_i \oplus M_{i-1} = R_0 = \Theta$ für sämtliche i ist, so daß k(i,i-1) = 0 ist, $L_i \oplus M_i = R_i$ ist, so daß k(i,i) = i ist, $L_0 \oplus M_i = R_{i+p}$ und $L_i \oplus M_0 = R_{i+p-1}$ ist, p die Verschiebung zwischen der mittleren und der rechten Spalte ist, $X_{k-1} \oplus X_k = X_{k-p}$, die durch eine Erzeugungsfunktion für den linearen Orthomorphismus bestimmt wird, und k(0,i) = i+p und k (i,0) = i+p-1 ist.

## Revendications

1. Un procédé de communication comprenant le chiffrement de données en substituant à n'importe lequel parmi des $2^n$ blocs d'entrée de texte en clair uniques $X_1$ à $X_m$ de données binaires de n bits, un bloc parmi des blocs chiffrés uniques associés $X_{1-p}$ à $X_{m-p}$ de données binaires de n bits comprenant les étapes de :

(a) détermination d'un premier ensemble $G^n$ de $2^n$ équations, représentant un orthomorphisme linéaire, chaque équation représentant la somme modulo 2 d'un bloc d'entrée parmi les $2^n$ blocs de texte en clair $X_1$ à $X_m$ de la colonne de gauche et d'un bloc unique parmi les $2^n$ blocs de n bits $X_1$ à $X_m$ de la colonne du milieu pour fournir un bloc de sortie associé parmi les blocs de n bits $X_{1-p}$ à $X_{m-p}$ de la colonne de droite, toutes les équations du premier ensemble de $2^n$ équations étant typifiées par la somme vectorielle modulo 2 de tout nombre des équations étant également une des équations du premier ensemble d'équations, les équations comprenant les équations d'identité $\Theta \oplus \Theta = \Theta$ et les $2^{n-1}$ équations restantes étant ordonnées comme il suit :

| Equation # | | | | | |
|---|---|---|---|---|---|
| 1 | $x_m$ | $\oplus$ | $x_1$ | $=$ | $x_{1-p}$ |
| 2 | $x_1$ | $\oplus$ | $x_2$ | $=$ | $x_{2-p}$ |
| • | • | • | • | • | • |
| • | • | • | • | • | • |
| j | $x_{j-1}$ | $\oplus$ | $x_j$ | $=$ | $x_{j-p}$ |
| • | • | • | • | • | • |
| • | • | • | • | • | • |
| m | $x_{m-1}$ | $\oplus$ | $x_m$ | $=$ | $x_{m-p}$ |

dans laquelle m = $2^n$, $L_n$, $M_n$, $R_n$ sont respectivement les colonnes de gauche, du milieu et de droite, P est un entier positif inférieur ou égale à m, et $G^n = L_n \times M_n \times R_n$ représente l'ensemble des équations ;

(b) modification d'une pluralité de $2^n - 1$ équations non nulles de la première matrice de $2^n$ équations pour fournir un second ensemble de $2^n$ équations, représentant des orthomorphismes non linéaires, la pluralité d'équations étant modifiée de telle sorte que l'ensemble d'équations en résultant transforme collectivement les mêmes blocs de texte de la colonne de gauche en blocs de sortie de n bits de la colonne de droite, mais d'une manière non linéaire de telle sorte que chaque équation de l'ensemble résultant n'est pas la somme modulo 2 d'un nombre quelconque des équations de la première étape non modifiée, **caractérisée en ce que** ladite modification de ladite pluralité des $2^n - 1$ équations non nulles est accomplie par :

(1) la décomposition de $G^n$ en une table de classes d'équivalence modulo un sous-groupe corruptibles d'ordre 4, ladite table étant représentée par

$$
\begin{array}{ccccc}
G^2_{a,0} & G^2_{a+1,0} & \cdots & G^2_{i,0} & \cdots \\
G^2_{a,3} & G^2_{a+1,3} & \cdots & G^2_{i,3} & \cdots \\
\vdots & \vdots & & \vdots & \\
G^2_{a,j} & G^2_{a+1,j} & \cdots & G^2_{i,j} & \cdots \\
\vdots & \vdots & & \vdots &
\end{array}
$$

dans laquelle chaque colonne représente une décomposition en classes d'équivalence de l'orthomorphisme linéaire basée sur un sous-groupe corruptible $G^n$ différent, et a, i, et j sont des indices entiers arbitraires ;

(2) la sélection d'un ensemble de classes d'équivalence disjointes de ladite table de classes d'équivalence, avec des classes d'équivalence sélectionnées dans différentes colonnes ayant chacune une unique transformée de mélange, (mixing transform) qui y est associée ; et

(3) l'application desdites uniques transformées de mélange audit groupe de classes d'équivalence disjointes pour produire le second ensemble de $2^n$ équations ; et

(c) pour chaque bloc d'entrée de texte en clair de la colonne de gauche à chiffrer, l'addition modulo 2 à ce bloc, du bloc unique parmi les $2^n$ blocs de n bits qui y est associé dans la colonne du milieu en concordance avec l'équation associée du second ensemble de $2^n$ équations afin d'obtenir le bloc chiffré de sortie dans la colonne de droite.

2. Un procédé de chiffrement de la revendication 1, dans lequel ladite étape de sélection d'un ensemble de classes d'équivalence disjointes est effectuée en choisissant une première classe d'équivalence dans une rangée, ensuite en déterminant si la classes d'équivalence adjacente à droite dans la même rangée recouvre la première classe d'équivalence, ensuite en sélectionnant les classes d'équivalence successives à droite dans la même rangée si les classes d'équivalence successives ne recouvrent aucune des classes d'équivalence préalablement sélectionnées, ensuite en continuant à la première classe d'équivalence à gauche de la rangée suivante, procédant ainsi jusqu'à ce qu'aucune classe d'équivalence disjointe ne soit plus trouvée.

3. Un procédé de la revendication 1, dans lequel ladite étape de sélection dudit ensemble de classes d'équivalence disjointes de ladite table de classes d'équivalence est effectuée en choisissant un index et en sélectionnant des entrées dans une diagonale de ladite table contenant ledit index allant de l'indice j le plus grand au plus petit et de l'indice i le plus petit au plus grand jusqu'à ce que la duplication s'opère, ensuite sélectionnant une nouvelle entrée non dupliquée et en procédant le long de la diagonale contenant la nouvelle entrée.

4. Un procédé de la revendication 3, dans lequel lesdites entrées non dupliquées sont sélectionnées en choisissant un index de ladite table, en sélectionnant les entrées dans ladite diagonale, et en sautant toute entrée dupliquée de ladite table.

5. Un procédé de la revendication 3, dans lequel ledit ensemble d'entrées non dupliquées est sélectionné en choisissant un index de ladite table, en sélectionnant les entrées dans ladite diagonale, et en sautant à une diagonale parallèle après avoir atteint une entrée dupliquée dans ladite table.

6. Un procédé de la revendication 1, dans lequel ladite table de classes d'équivalence est représentée par :

| | | 0 | 1 | $M_j$ 2 | colonne du milieu 3 | | l | | m |
|---|---|---|---|---|---|---|---|---|---|
| | 0 | 0 | p+1 | p+2 | p+3 | | p+l | | p+m |
| | 1 | p | 1 | k(1,2) | k(1,3) | | k(1,l) | | k(1,m) |
| | 2 | p+1 | 0 | 2 | k(2,3) | | k(2,l) | | k(2,m) |
| | 3 | p+2 | k(3,1) | 0 | 3 | | k(3,l) | | k(3,m) |
| $L_i$ colonne de gauche | | | | | | | | | |
| | l | p+l-1 | k(l,1) | k(l,2) | k(l,3) | | l | | k(l,m) |
| | | | | | | | | | |
| | m | p+m-l | k(m,l) | k(m,2) | k(m,3) | | k(m,l) | | m |

dans laquelle $L_1 \oplus M_{i-1} = R_0 = \Theta|$ pour tout $i$ de telle sorte que $k(i,j-1)=i$, $L_i \oplus M_i = R_i$ de telle sorte que $k(i,j)=i$, $L_0 \oplus M_i = R_{i+p}|$ et $L_i \oplus M_0 = R_{i+p-1}$, $p$ est le décalage entre les colonnes du milieu et de droite, $x_{k-1} \oplus x_k = x_{k-p}|$, déterminé par une fonction génératrice pour l'orthomorphisme linéaire et $k(0,j)=j+p$ et $k(i,0)=i+p-1$.

```
000 ⊕  000 =  000
001 ⊕  011 =  010
010 ⊕  110 =  100
011 ⊕  100 =  111
100 ⊕  111 =  011
101 ⊕  001 =  100
110 ⊕  101 =  011
111 ⊕  010 =  101
```

## FIG. 1

```
000 ⊕  000 =  000
001 ⊕  111 =  110
010 ⊕  011 =  001
011 ⊕  100 =  111
100 ⊕  110 =  010
101 ⊕  001 =  100
110 ⊕  101 =  011
111 ⊕  010 =  101
```

## FIG. 2

```
000 ⊕  000 =  000
011 ⊕  100 =  111
100 ⊕  110 =  010
110 ⊕  101 =  011
101 ⊕  001 =  100
001 ⊕  111 =  110
111 ⊕  010 =  101
010 ⊕  011 =  001
```

## FIG. 3

```
000 ⊕  000 =  000
110 ⊕  100 =  010
101 ⊕  110 =  011
001 ⊕  101 =  100
111 ⊕  001 =  110
010 ⊕  111 =  101
011 ⊕  010 =  001
100 ⊕  011 =  111
```

## FIG. 4

```
000 =  000 ⊕  000
110 =  100 ⊕  010
101 =  110 ⊕  011
001 =  101 ⊕  100
111 =  001 ⊕  110
010 =  111 ⊕  101
011 =  010 ⊕  001
100 =  011 ⊕  111
```

## FIG. 5

```
001 ⊕  001 =  000
111 ⊕  101 =  010
100 ⊕  111 =  011
000 ⊕  100 =  100
110 ⊕  000 =  110
011 ⊕  110 =  101
010 ⊕  011 =  001
101 ⊕  010 =  111
```

## FIG. 10

FIG. 6

FIG. 7

FIG. 8

FIG. 9

FIG. 11

EP 0 763 297 B1

FIG. 12

EP 0 763 297 B1

MEMORY 1
CLEAR DATA ADDRESS ORDER DATA

MEMORY II
ORDER DATA ADDRESS

ENCRYPTED DATA

20

| 001 |
|-----|
| 010 |
| 011 |
| 100 |
| 110 |
| 101 |
| 001 |
| 111 |

| 000 | 000 |
|-----|-----|
| 010 | 001 |
| 011 | 010 |
| 100 | 011 |
| 110 | 100 |
| 101 | 101 |
| 001 | 110 |
| 111 | 111 |

22

ADDER C

24

ADDER LSB

26

| S | Ps |
|---|----|
| 6 | 2 |
| 5 | 4 |
| 4 | 5 |
| 3 | 1 |
| 2 | 6 |
| 1 | 3 |

| 000 | 000 |
|-----|-----|
| 001 | 010 |
| 010 | 011 |
| 011 | 100 |
| 100 | 110 |
| 101 | 101 |
| 110 | 001 |
| 111 | 111 |

30

| 000 |
|-----|
| 111 |
| 100 |
| 000 |
| 110 |
| 011 |
| 010 |
| 101 |

SHIFT PROGRAM

28

FIXED WORD ADDER 001

32

FIG. 13

EP 0 763 297 B1

FIG. 14

EP 0 763 297 B1

000 ⊕ 000 = 000

101 ⊕ 001 = 100

001 ⊕ 111 = 110

111 ⊕ 010 = 101

010 ⊕ 011 = 001

011 ⊕ 100 = 111

100 ⊕ 110 = 010

110 ⊕ 101 = 011

# FIG. 15

OFFSET = 0101

0101 ⊕ 0101 = 0000

1111 ⊕ 0111 = 1000

0111 ⊕ 0100 = 0011

0100 ⊕ 0010 = 0110

0010 ⊕ 1011 = 1001

1011 ⊕ 1010 = 0001

1010 ⊕ 1000 = 0010

1000 ⊕ 0011 = 1011

0011 ⊕ 0110 = 0101

0110 ⊕ 1100 = 1010

1100 ⊕ 0001 = 1101

0001 ⊕ 1101 = 1100

1101 ⊕ 1001 = 0100

1001 ⊕ 1110 = 0111

1110 ⊕ 0000 = 1110

0000 ⊕ 1111 = 1111

# FIG. 17

FIG. 16

FIG. 18

Find a $G^n$ first matrix of equations which is a linear orthomorphism, with the equations orderable as follows:

| Equation # | | | | | |
|---|---|---|---|---|---|
| 0 | $\theta$ | $\oplus$ | $\theta$ | $=$ | $\theta$ |
| 1 | $x_m$ | $\oplus$ | $x_1$ | $=$ | $x_{1-p}$ |
| 2 | $x_1$ | $\oplus$ | $x_2$ | $=$ | $x_{2-p}$ |
| • | • | • | • | • | • |
| • | • | • | • | • | • |
| j | $x_j$ | $\oplus$ | $x_j$ | $=$ | $x_{j-p}$ |
| • | • | • | • | • | • |
| • | • | • | • | • | • |
| m | $x_{m-1}$ | $\oplus$ | $x_m$ | $=$ | $x_{m-p}$ |

where $m = 2^n - 1$, $L_n$, $M_n$ and $R_n$ are the left, middle and right columns respectively, $G^{n-1}$ is a subgroup of $G^n$ consisting of $2^{n-1}$ equations from the first matrix $G^n$, found by selecting n-1 nonzero equations in $G^n$ and taking all sums thereof as well as the identity equation to obtain additional equations indentified in the specification by Equation 66, $\overline{G}^{n-1}$ is the complement of $G^{n-1}$ in $G^n$, etc., and where

$G^{n-1} = L_{n-1} \times M_{n-1} \times R_{n-1}$, $\overline{G}_{n-1} = \overline{L}_{n-1} \times \overline{M}_{n-1} \times \overline{R}_{n-1}$, $W_{n-1} \times L_{n-1} \cap M_{n-1}$, $W_{n-2} = L_{n-2} \cap M_{n-1}$ and $\overline{W}_{n-2}$ is the complement of $W_{n-2}$ in $W_{n-1}$ etc.    102

Modifying the equations of the first matrix to form a second matrix of equations by:

applying the mixing transforms in $\overline{W}_{n-2}$ to $\overline{G}^{n-1}$    104

applying the mixing transforms in $\overline{W}_{n-3}$ to $\overline{G}^{n-2}$    106

repeatedly applying mixing transforms until reaching $\overline{G}^2$    108

appying $\overline{W}_1$ to $\overline{G}^2$ or applying $\theta$ to $\overline{G}^2$.    110

For each clear text block in the left column to be encrypted, add an associated block in the middle column in accordance with an associated equation defined by the second matrix of equations to otain an encrypted block in the right column.    112

## FIG. 19

Fig. 20

Find $G^n$ a first matrix of equations which is a linear orthomorphism, with the equations orderable as follows:

| Equation # | | | | | |
|---|---|---|---|---|---|
| 0 | $\theta$ | $\oplus$ | $\theta$ | $=$ | $\theta$ |
| 1 | $x_m$ | $\oplus$ | $x$ | $=$ | $x_{1-p}$ |
| 2 | $x_1$ | $\oplus$ | $x$ | $=$ | $x_{2-p}$ |
| $\cdot$ | $\cdot$ | $\cdot$ | $\cdot$ | $\cdot$ | $\cdot$ |
| $\cdot$ | $\cdot$ | $\cdot$ | $\cdot$ | $\cdot$ | $\cdot$ |
| $j$ | $x_{j-1}$ | $\oplus$ | $x_j$ | $=$ | $x_{j-p}$ |
| $\cdot$ | $\cdot$ | $\cdot$ | $\cdot$ | $\cdot$ | $\cdot$ |
| $\cdot$ | $\cdot$ | $\cdot$ | $\cdot$ | $\cdot$ | $\cdot$ |
| $m$ | $x_{m-1}$ | $\oplus$ | $x_m$ | $=$ | $x_{m-p}$ |

where $m = 2^n - 1$, $L_n$, $M_n$ and $R_n$ are the left, middle and right columns respectively.                                                                              202

Modifying the equations of the first matrix to form a second matrix of equations representing a nonlinear orthomorphism by:

select from $G^n$ two or more disjoint corruptible subgroups of order $2^k$ where $k < n/2$, $G_0^k$, $H_0^k$, $I_0^k$...                                                    204

form subgroups $M_0^{2k}$, $N_0^{2k}$ of order $2^{2k}$ from pairs of $G_0^k$, $H_0^k$, $I_0^k$...     206

continue this process until a subgroup of order $2^{n-1}$ or $2^{n-2}$, $Q_0^{n-1}$ or $Q_0^{n-2}$ is selected                                                                    208

decompose $G^n$ into alternating collection of cosets from $Q_0^{n-1}$ or $Q_0^{n-2}$ ....., $M_0^{2k}$, $N_0^{2k}$ ....., $G_0^k$, $H_0^k$, $I_0^k$....                              210

Modify the cosets with their respective mixing transformations to form the second matrix of equations                                                                          212

For each clear test block in the left column to be encrypted, add an associated block in the middle column with an assoicated equation defined by the second matrix of equations, to obtain an encrypted block in the right column.                                                            214

FIG. 21

Find $G^8$ a first matrix of equations representing a linear orthomorphism, with the equations orderable as follows:

| Equation # | | | | | |
|---|---|---|---|---|---|
| 0 | $\theta$ | $\oplus$ | $\theta$ | $=$ | $\theta$ |
| 1 | $x_m$ | $\oplus$ | $x$ | $=$ | $x_{1-p}$ |
| 2 | $x_1$ | $\oplus$ | $x$ | $=$ | $x_{2-p}$ |
| $\cdot$ | $\cdot$ | $\cdot$ | $\cdot$ | $\cdot$ | $\cdot$ |
| $\cdot$ | $\cdot$ | $\cdot$ | $\cdot$ | $\cdot$ | $\cdot$ |
| j | $x_{j-1}$ | $\oplus$ | $x_j$ | $=$ | $x_{j-p}$ |
| $\cdot$ | $\cdot$ | $\cdot$ | $\cdot$ | $\cdot$ | $\cdot$ |
| $\cdot$ | $\cdot$ | $\cdot$ | $\cdot$ | $\cdot$ | $\cdot$ |
| m | $x_{m-1}$ | $\oplus$ | $x_m$ | $=$ | $x_{m-p}$ |

where $m = 255$, $L_8$, $M_8$ and $R_8$ are the left, middle and right columns respectively, 302

---

Modifying the equations of the first matrix to form a second matrix of equations representing a nonlinear orthomorphism by:

---

select from $G^8$, three disjoint subgroups of order 4, $G^2_0$, $H^2_0$, and $I^2_0$ 304

---

generate from $G^2_0$, $H^2_0$, and $I^2_0$, three subgroups of order 16, $M^4_0$, $N^4_0$ and $P^4_0$ respectively from the pairs of the three subgroups of order 4 306

---

generate cosets $Q^6_1$, $Q^6_2$ and $Q^6_3$ from $Q^6_0$, a subgroup of order 64 generated from the triple of $G^4_0$, $H^4_0$, and $I^4_0$ 308

---

decompose the Q cosets into four cosets of 16 rows each 310

---

decompose each of the four cosets into four cosets of four rows each and select an alternating pattern of cosets and modify the selected cosets with their respective mixing transforms to form the second matrix of equations 312

---

For each clear text block in the left column to be encrypted, add an associated block in the middle column with an associated equation defined by the second matrix of equations, to obtain an encrypted block in the right column. 314

## FIG. 22

Find $G^n$ a first matrix of equations representing a linear orthomorphism, with the equations orderable as follows:

| Equation # | | | | | |
|---|---|---|---|---|---|
| 0 | $\theta$ | $\oplus$ | $\theta$ | $=$ | $\theta$ |
| 1 | $x_m$ | $\oplus$ | $x$ | $=$ | $x_{1-p}$ |
| 2 | $x_1$ | $\oplus$ | $x$ | $=$ | $x_{2-p}$ |
| • | • | • | • | • | • |
| • | • | • | • | • | • |
| j | $x_{j-1}$ | $\oplus$ | $x_j$ | $=$ | $x_{j-p}$ |
| • | • | • | • | • | • |
| • | • | • | • | • | • |
| m | $x_{m-1}$ | $\oplus$ | $x_m$ | $=$ | $x_{m-p}$ |

where $m = 2^n - 1$ and where m is not a prime number, $L_n$, $M_n$ and $R_n$ are the left, middle and right columns respectively.　402

Modifying the equations of the first matrix to form a second matrix of equations representing a nonlinear orthomorphism, by:

select a corruptible subgroup of order 4 from $G^n$ generally represented as

$$x_m \oplus x_1 = x_{1-p}$$
$$x_1 \oplus x_2 = x_{2-p}$$
$$x_{q-1} \oplus x_q = x_{q-p};$$
where $x_q = x_1 \oplus x_2$　404

generate a coset by choosing an equation, represented by index a, which is not in the corruptible subgroup of order 4 and adding said equation vectorially to the corruptible subgroup, with the new subgroup being represented by

$$x_{a-1} \oplus x_a = x_{a-p}$$
$$x_{b-1} \oplus x_b = x_{b-p}$$
$$x_{c-1} \oplus x_c = x_{c-p}$$
$$x_{d-1} \oplus x_d = x_{d-p}$$
　406

choose an integer number l which divides m, determine values for a mod l, b mod l, c mod l and d mod l　408

If any of said values are duplicated, repeat steps 406-408　410

generate m/l additional co-sets of the form

| $x_{a+kl-1}$ | $x_{a+kl} =$ | $x_{a+kl-p}$ |
| $x_{b+kl-1}$ | $x_{b+kl} =$ | $x_{b+kl-p}$ |
| $x_{c+kl-1}$ | $x_{c+kl} =$ | $x_{c+kl-p}$ |
| $x_{d+kl-1}$ | $x_{d+kl} =$ | $x_{d+kl-p}$ |

where $0 < k < m/l - 1$　412

apply a mixing transform $W_{kl} \oplus W_{kl} = \theta$ to said corresponding additional cosets, wherein $W_{kl} = W_{a+kl} \oplus W_{b+kl}$ to constructively corrupt the corresponding additional co-sets, yielding the second matrix of $2^n$ equations　414

For each clear text block in the left column to be encrypted, add an associated block in in the middle column with an associated equation defined by the second matrix of equations to obtain an encrypted block in the right column.　416

FIG. 23

Find a first set of equations $G^n$ which is a linear orthomorphism, with the equations orderable as follows:

| Equation # | | | | |
|---|---|---|---|---|
| 1 | $x_m$ | $x_1$ | = | $x_{1-p}$ |
| 2 | $x_1$ | $x_2$ | = | $x_{2-p}$ |
| • | • • | • | • | • |
| • | • • | • | • | • |
| j | $x_{j-1}$ | $x_j$ | = | $x_{j-p}$ |
| • | • • | • | • | • |
| • | • • | • | • | • |
| m | $x_{m-1}$ | $x_m$ | = | $x_{m-p}$ |

where $m = 2^n$, $L_n$, $M_n$, $R_n$ are the left, middle and right columns respectively, and $G^n = L_n \times M_n \times R_n$ represents the set of equations.

502

Modify the equations of the first set to form a second set of equations representing a non-linear orthomorphism by:

Decomposing $G^n$ into a table of corruptible cosets of order 4, with the table being generally represented by

$$G^1_{a,0} \quad G^1_{a+1,0} \quad \cdots \quad G^1_{i,0} \quad \cdots$$
$$G^1_{a,1} \quad G^1_{a+1,1} \quad \cdots \quad G^1_{i,1} \quad \cdots$$
$$\vdots \quad \vdots \quad \quad \vdots$$
$$G^1_{a,j} \quad G^1_{a+1,j} \quad \cdots \quad G^1_{i,j} \quad \cdots$$
$$\vdots \quad \vdots \quad \quad \vdots$$

where each column represents a linear orthomorphism based on a different corruptible subgroup of $G^n$, followed by the corresponding collection of cosets and i, j and a are arbitrary integer indices and where each column has a unique mixing transform.

504

Selecting a group of non-overlapping cosets from sucessive rows of the table of cosets by choosing a first coset within some row, then determining which other cosets within the same row do not overlap with each other, then continuing on successive rows.

506

Applying the corresponding unique mixing transforms to the group of non-overlapping cosets to yield the second set of equations.

508

For each clear text block in the left column to be encrypted, add an associated block in the middle column with an associated equation defined by the second set of equations, to obtain an encrypted block in the right column.

510

FIGURE 24

Find a first set of equations $G^n$ which is a linear orthomorphism, with the equations orderable as follows:

| Row Number | L | M | R |
|---|---|---|---|
| 0 | $\theta$ $\oplus$ $\theta$ | | = $\theta$ |
| 1 | $L_1$ $\oplus$ $M_1$ | | = $R_1$ |
| 2 | $L_2$ $\oplus$ $M_2$ | | = $R_2$ |
| ⋮ | ⋮ | ⋮ | . |
| $k$ | $L_k$ $\oplus$ $M_k$ | | = $R_k$ |
| ⋮ | ⋮ | ⋮ | |
| $m$ | $L_m$ $\oplus$ $M_m$ | | = $R_m$ |

where $m = 2^n$, L, M, R are the left, middle and right columns respectively, and $G^n = L \times M \times R$ represents the set of equations: $x_{k-1} \oplus x_k = x_{k-p}$ and $L_k = x_{k-1}$, $M_k = x_k$ and $R_k = x_{k-p}$
602

Modify the equations of the first set to form a second set of equations representing a non-linear orthomorphism by decomposing $G^n$ into a consistent set of equations $L_i \oplus M_j = R_k$ where k is a function of i and j by

(a) developing a table of indices of k; wherein each row and each column of the table contain each index in the set {0,1,2,...,m}
604

(b) selecting one entry from each row and column of the table of indices without duplicates by choosing a first entry then selecting other entries along a bar sinister diagonal within the table which includes the ·first entry and skipping to adjacent diagonals to avoid duplicates.
606

(c) applying the selected non-duplicate entries to the first set of equations to yield the second set. of equations.
608

For each clear text block in the left column to be encrypted, add an associated block in the middle column with an associated equation defined by the second set of equations, to obtain an encrypted block in the right column
610

# FIGURE 25

700

$M_j$ Middle Column

$L_i$ Left Column

| j / i | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0 | (0) | 5 | 6 | 7 | 8 | 9 | 10 | 11 | 12 | 13 | 14 | 15 | 1 | 2 | 3 | 4 |
| 1 | 4 | 1 | 13 | 8 | 7 | 14 | 12 | 2 | 10 | 6 | 9 | 3 | 5 | (11) | 15 | 0 |
| 2 | 5 | 0 | 2 | 14 | 9 | 8 | 15 | 13 | 3 | 11 | 7 | (10) | 4 | 6 | 12 | 1 |
| 3 | 6 | 2 | 0 | 3 | 15 | 10 | 9 | 1 | 14 | 4 | 12 | 8 | 11 | 5 | (7) | 13 |
| 4 | 7 | 14 | 3 | 0 | 4 | 1 | 11 | 10 | 2 | (5) | 5 | 13 | 9 | 12 | 6 | 8 |
| 5 | 8 | 9 | 15 | 4 | 0 | 5 | 2 | 12 | 11 | 3 | (1) | 6 | 14 | 10 | 13 | 7 |
| 6 | 9 | 8 | 10 | 1 | 5 | 0 | 6 | 3 | (3) | 12 | 4 | 2 | 7 | 15 | 11 | 14 |
| 7 | 10 | 15 | 9 | 11 | 2 | 6 | 0 | 7 | 4 | 14 | 13 | 5 | (3) | 8 | 1 | 12 |
| 8 | 11 | 13 | 1 | 10 | 12 | 3 | 7 | 0 | 8 | 5 | 15 | 14 | 6 | 4 | 9 | (2) |
| 9 | 12 | 3 | 14 | 2 | 11 | 13 | 4 | (8) | 0 | 9 | 6 | 1 | 15 | 7 | 5 | 10 |
| 10 | 13 | 11 | 4 | 15 | 3 | 12 | (4) | 5 | 9 | 0 | 10 | 7 | 2 | 1 | 8 | 6 |
| 11 | 14 | 7 | 12 | 5 | 1 | (4) | 13 | 15 | 6 | 10 | 0 | 11 | 8 | 3 | 2 | 9 |
| 12 | 15 | 10 | 8 | 13 | (6) | 2 | 5 | 14 | 1 | 7 | 11 | 0 | 12 | 9 | 4 | 3 |
| 13 | 1 | 4 | 11 | (9) | 14 | 7 | 3 | 6 | 15 | 2 | 8 | 12 | 0 | 13 | 10 | 5 |
| 14 | 2 | 6 | (5) | 12 | 10 | 15 | 8 | 4 | 7 | 1 | 3 | 9 | 13 | 0 | 14 | 11 |
| 15 | 3 | (12) | 7 | 6 | 13 | 11 | 1 | 9 | 5 | 8 | 2 | 4 | 10 | 14 | 0 | 15 |

702

704

704

FIGURE 26